(19) Europäisches Patentamt
European Patent Office
Office européen des brevets

(11) Veröffentlichungsnummer: **0 208 655**
**B1**

(12) **EUROPÄISCHE PATENTSCHRIFT**

(45) Veröffentlichungstag der Patentschrift: **16.08.90**

(21) Anmeldenummer: **86810298.9**

(22) Anmeldetag: **07.07.86**

(51) Int. Cl.$^5$: **C 09 B 62/507,**
C 07 C 317/02, C 07 C 317/06,
C 07 D 295/18, C 07 F 9/09,
C 07 F 9/547, D 06 P 1/384

# (54) Reaktivfarbstoffe, deren Herstellung und Verwendung.

(30) Priorität: **12.07.85 CH 3035/85**

(43) Veröffentlichungstag der Anmeldung:
**14.01.87 Patentblatt 87/03**

(45) Bekanntmachung des Hinweises auf die Patenterteilung:
**16.08.90 Patentblatt 90/33**

(84) Benannte Vertragsstaaten:
**BE CH DE FR GB IT LI**

(56) Entgegenhaltungen:
**EP-A-0 172 789**
**DE-A-2 040 620**
**FR-A-2 015 523**

(73) Patentinhaber: **CIBA-GEIGY AG**
**Klybeckstrasse 141**
**CH-4002 Basel (CH)**

(72) Erfinder: **Tzikas, Anthanassios, Dr.**
**Muttenzerstrasse 78**
**CH-4133 Pratteln (CH)**

**Die Akte enthält technische Angaben, die nach dem Eingang der Anmeldung eingereicht wurden und die nicht in dieser Patentschrift enthalten sind.**

EP 0 208 655 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollten ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe gelöst wird.

Gegenstand der Erfindung sind Reaktifarbstoffe der Formel

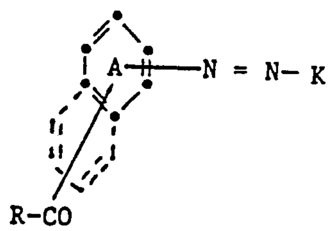

(1) ,

worin R ein Rest der Formel

$$Z-SO_2-CH_2-CH_2-\underset{V}{\underset{|}{N}}- \quad (1a),$$

$$Z-SO_2-(CH_2)_m-O-(CH_2)_p-\underset{R_1}{\underset{|}{N}}- \quad (1b),$$

$$Z-SO_2-(alk)-NH-(alk)-\underset{H}{\underset{|}{N}}- \quad (1c)$$

oder

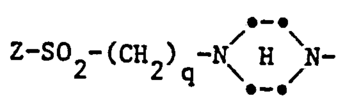

(1d);

Z β-Sulfatoäthyl, β-Thiosulfatoäthyl, β-Phosphatoäthyl, β-Acetoxyäthyl, β-Halogenäthyl oder Vinyl; V Wasserstoff oder ein Rest

$$Z-SO_2-CH_2-CH_2-$$

worin Z die angegebene Bedeutung hat; $R_1$ Wasserstoff oder $C_{1-6}$-Alkyl; alk unabhängig voneinander Polymethylenreste mit 2 bis 6 C-Atomen oder deren verzeigte Isomere; K der Rest einer Kupplungskomponente der Benzol- oder Naphthalinreihe oder der heterocyclischen Reihe; m = 1 bis 6, p = 1 bis 6 und q = 1 bis 6 ist; und der Benzol- bzw. Naphthalinrest A weitere Substituenten enthalten kann.

Als β-Halogenäthyl kommt für Z insbesondere der β-Chloräthylrest in Betracht. Die Polymethylenreste alk sind vorzugsweise Aethylen, Propylen oder Butylen.

Der Rest $R_1$ ist beispielsweise Methyl, Aethyl, Propyl, Isopropyl, Butyl, Isobutyl, sec.-Butyl, tert.-Butyl, Pentyl oder Hexyl, oder vorzugsweise Wasserstoff. Die Indizes m, p und q sind unabhängig voneinander und vorzugsweise 2, 3 oder 4. Als weitere Substituenten am Benzol- bzw. Naphthalinrest A kommen die gleichen in Betracht, die weiter unten bei der Erläuterung des Restes K genannt sind.

Der Rest K kann selbst wiederum Azogruppen enthalten, er kann also der Rest einer Azoverbindung, insbesondere einer Monoazoverbindung, sein. Sofern K der Rest einer Kupplungskomponente der Benzol-oder Naphthalinreihe ist, stellt K somit vorzugsweise einen Benzol-, Naphthalin-, Azobenzol-, Naphthylazobenzol-, Azonaphthalin- oder Phenylazonaphthalin-Rest dar, der, wie unten angegeben, weitersubstituiert sein kann. Sofern K der Rest einer Kupplungskomponente der heterocyclischen Reihe ist, kommt ein Pyrazolon- oder Pyridonrest oder der Rest einer der weiter unten genannten heterocyclischen Kupplungskomponenten in Betracht. Auch in diesem Falle kann der Rest K weitere Azogruppen enthalten, z.B. wenn K als Phenylazopyrazolonrest vorliegt.

Der Rest K in Formel (I) kann an seinem Grundgerüst die in der Azochemie üblichen Substituenten gebunden enthalten.

Als Beispiele für weitere Substituenten im Rest K seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen in Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest K eine oder mehrere Sulfonsäuregruppen. Weitere Substituenten sind vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Als Reaktivfarbstoffe der Formel (I) sind Mono- und Disazofarbstoffe bevorzugt.

Bevorzugt sind:

Reaktivfarbstoffe der Formel

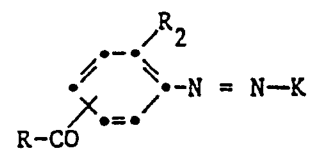

(2) ,

worin $R_2$ Wasserstoff, $C_{1-4}$-Alkyl, $C_{1-4}$-Alkoxy, Halogen, Hydroxy, Carboxy oder Sulfo ist; und R und K die unter Formel (I) angegebenen Bedeutungen haben;

Reaktivfarbstoffe der Formel

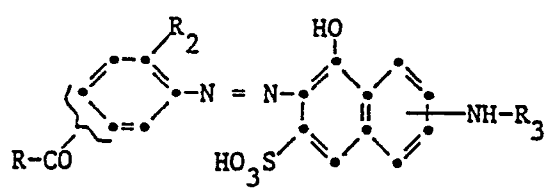

(3) ,

worin $R_3$ Wasserstoff, $C_{1-4}$-Alkyl oder $C_{1-4}$-Alkanoyl ist, und R und $R_2$ die unter Formel (2) angegebenen Bedeutungen haben;

Reaktivfarbstoffe der Formel (3), worin $R_3$ Acetyl ist;

Reaktivfarbstoffe der Formel

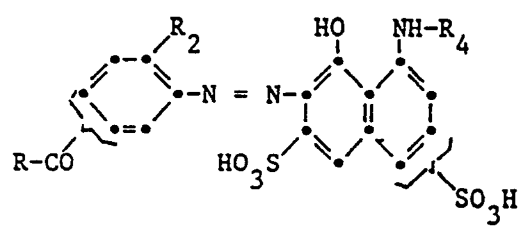

(4) ,

worin $R_4$ Wasserstoff, $C_{1-4}$-Alkanoyl oder Benzoyl ist, und R und $R_2$ die unter Formel (2) angegebenen Bedeutungen haben;

Reaktivfarbstoffe der Formel (4), worin $R_4$ Benzoyl ist;

Reaktivfarbstoffe der Formel

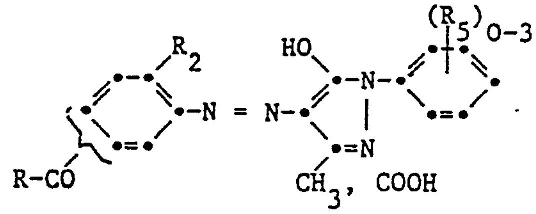

(7) ,

worin $R_5$ für 0 bis 3 Substituenten aus der Gruppe Chlor, Methyl, Methoxy, Carboxy oder Sulfo unabhängig voneinander, steht, und R und $R_2$ die unter Formel (2) angegebenen Bedeutungen haben;

Reaktivfarbstoffe der Formel

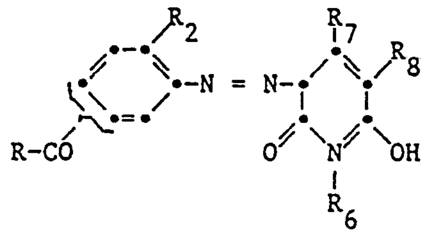

(8) ,

worin $R_6$ und $R_7$ unabhängig voneinander Wasserstoff, $C_{1-4}$-Alkyl oder Phenyl, und $R_8$ Wasserstoff, Cyano, Carbamoyl oder Sulfomethyl ist, und R und $R_2$ die unter Formel (2) angegebenen Bedeutungen haben;

Schwermetallkomplexe von Reaktivfarbstoffen der Formeln (1) bis (8); als komplexbildende Schwermetalle kommen vor allem Kupfer, Nickel, Kobalt oder Chrom in Betracht.

Bevorzugt sind insbesondere Verbindungen der Formeln (1) bis (8), worin Z die β-Sulfatoäthyl-, β-Chloräthyl- oder Vinylgruppe ist.

Das Verfahren zur Herstellung von Reaktivfarbstoffen der Formel (1) ist daduch gekennzeichnet, dass man Diazokomponenten der Formel

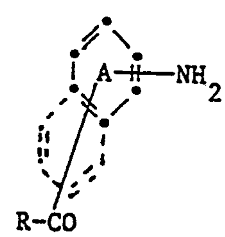

(9)

oder ihre Vorprodukte, und Kupplungskomponenten der Formel

H—K (10)

durch Diazotierung und Kupplung zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

Gegebenenfalls verwendet man statt einer Kupplungskomponente der Formel (10) ein Vorprodukt und stellt den Endfarbstoff durch eine weitere Kupplung bzw. weitere Kupplungen oder sonstige Umwendlungsreaktionen mit dem Zwischenprodukt fertig.

Liegen in den hergestellten Reaktivfarbstoffen zur Metallkomplexbildung befähigte Gruppen vor, können die Reaktivfarbstoffe auch nachträglich metallisiert werden.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Diazokomponenten der Formel (9)

3-Aminobenzoesäure-N′-β-(β′-chloräthylsulfonyl)-äthylamid,
4-Chlor-3-aminobenzoesäure-N′-β-(β′-chloräthylsulfonyl)-äthylamid,
4-Methyl-3-aminobenzoesäure-N′-β-(β′-chloräthylsulfonyl)-äthylamid,
4-Methoxy-3-aminobenzoesäure-N′-β-(β′-chloräthylsulfonyl)-äthylamid,
3-Aminobenzoesäure-N′-β-[β′-(β″-chloräthylsulfonyl)-äthyloxy]-äthylamid,
3-Aminobenzoesäure-N′-bis-[β-(β′-chloräthylsulfonyl)-äthyl]-amid,
4-Aminobenzoesäure-N′-β-(β′-chloräthylsulfonyl)-äthylamid,
4-Aminobenzoesäure-N′-β-[β′-(β″-chloräthylsulfonyl)-äthyloxy]-äthylamid,

4-Aminobenzoesäure-N'-bis-[β-(β'-chloräthylsulfonyl)-äthyl]-amid,
4-Aminobenzoesäure-N'-β-(vinylsulfonyl)-äthylamid,
4-Aminobenzoesäure-N'-bis-[β-(vinylsulfonyl)-äthyl]-amid,
4-Chlor-3-aminobenzoesäure-N'-bis-[β-(β'-chloräthylsulfonyl)-äthyl]-amid,
4-Methyl-3-aminobenzoesäure-N'-bis-[β-(β'-chloräthylsulfonyl)-äthyl]-amid,
3-Aminobenzoesäure-N'-β-[β'-(β''-chloräthylsulfonyl)-äthyloxy]-äthylamid,
4-Hydroxy-3-aminobenzoesäure-N'-β-(β'-chloräthylsulfonyl)-äthylamid,
4-Hydroxy-3-aminobenzoesäure-N'-bis-[β-(β'-chloräthylsulfonyl)-äthyl]-amid,
4-Methoxy-3-aminobenzoesäure-N'-bis-[β-(β'-chloräthylsulfonyl)-äthyl]-amid,

sowie entsprechende Verbindungen, worin die β-Chloräthylsulfonyl-Gruppe durch β-Sulfatoäthylsulfonyl oder Vinylsulfonyl ersetzt ist; weiterhin komen in Betracht:

4-Amino-3-sulfobenzoesäure-N'-β-(β'-chloräthylsulfonyl)-äthylamid,
4-Amino-3-sulfobenzoesäure-N'-β-(β'-sulfatoäthylsulfonyl)-äthylamid,
4-Amino-3-sulfobenzoesäure-N'-β-vinylsulfonyl-äthylamid,
3-Amino-2-sulfobenzoesäure-N'-β-vinylsulfonyl-äthylamid,
3-Amino-4-methoxybenzoesäure-N'-β-(β'-sulfatoäthylsulfonyl)-äthylamid,
4-Amino-3-sulfobenzoesäure-N'-bis-(β-vinylsulfonyl-äthyl)-amid,
3-Amino-4-methoxybenzoesäure-N'-bis-[β-(β'-sulfatoäthylsulfonyl)-äthyl]-amid,
3-Amino-2-sulfobenzoesäure-N'-bis-(β-vinylsulfonyl-äthyl)-amid,
3-Amino-4-methoxybenzoesäure-N'-(γ-vinylsulfonyl-propyl)piperazid,
4-Amino-3-methoxybenzoesäure-N'-bis(β-vinylsulfonyl-äthyl)-amid,
3-Aminobenzoesäure-N'-β-(β'-vinylsulfonyl-äthylamino)-äthylamid,
3-Amino-4-methylbenzoesäure-N'-(β-vinylsulfonyl-äthyl)-piperazid,
4-Amino-3-sulfobenzoesäure-N'-bis-[β-(β-sulfatoäthylsulfonyl)-äthyl]-amid,
3-Amino-4-methoxybenzoesäure-N'-bis-(β-vinylsulfonyl-äthyl)amid,
3-Amino-4-methoxybenzoesäure-N'-(β-vinylsulfonyl-äthyl)-amid,
4-Amino-3-sulfobenzoesäure-N'-(γ-vinylsulfonyl-propyl)-piperazid,
4-Amino-3-sulfobenzoesäure-N'-β-(β'-vinylsulfonyl-äthylamino)-äthylamid,
3-Amino-4-methylbenzoesäure-N'-β-(β'-sulfatoäthylsulfonyl)-äthylamid,
4-Amino-3-sulfobenzoesäure-N'-bis-[β-(β'-chloräthylsulfonyl)-äthyl]-amid,
4-Amino-3-sulfobenzoesäure-N'-(β-vinylsulfonyl-äthyl)-piperazid,
4-Amino-3-sulfobenzoesäure-N'-β-(β'-vinylsulfonyl-äthylamino)-äthylamid,
5-Amino-1,3-benzoldicarbonsäure-N',N''-(β-vinylsulfonyl-äthyl)-diamid,
4-Amino-3-sulfobenzoesäure-N'-β-(β'-vinylsulfonyl-äthyloxy)-äthylamid.

Weitere Diazokomponenten

Aminobenzol, 1-Amino-2-, -3-oder -4-methylbenzol, 1-Amino-2-, -3-oder -4-methoxybenzol, 1-Amino-2-, -3-oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4- sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminoazobenzol-3,4'-disulfonsäure, 3-Methoxy-4-amino-6-methylazobenzol-2',4'-disulfonsäure oder 3-Methoxy-4-amino-6-methylazobenzol-2',5'-disulfonsäure.

Kupplungskomponenten

Phenol, 1-Hydroxy-3- oder 4-methylbenzol, 1-Hydroxybenzol-4-sulfonsäure, 1-Hydroxynaphthalin, 2-Hydroxynaphthalin, 2-Hydroxynaphthalin-6- oder 8-7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, -Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynapththalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw- 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetyl-amino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6-bzw. -4,6-disulfonsäure, 1-(4'-Aminobenzoylamino)-8-hydroxynaphthalin-3,6- bzw. -4,6--disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazol,1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-3-sulfomethyl-4-methyl-6-hydroxy-pyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridine, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo-naphthalin-3,6-disulfonsäure, 1-Amino-8-hydroxy-2-(2',5'-disulfophenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfato-äthylamino-4-methoxybenzol, 1-Amino-3-sulfo-benzylamino-benzol, 1-Amino-3-sulfo-benzylamino-4-chlorbenzol, 1-Amino-3-N,N-di-sulfo-benzylaminobenzol.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Eine andere vorteilhafte Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktions. Beispielsweise kann man einen Farbstoff der Formel (1), worin Z ein Rest $HO—CH_2CH_2—$ ist, herstellen und das Zwischenprodukt vor oder nach der Acylierung mit Schwefelsäure umsetzen, so dass die Hydroxygruppe in die Sulfatogruppe überführt, wird; oder man verwendet einen analogen Farbstoff, worin Z die Vinylgruppe $H_2C{=}CH—$ ist, und lagertan das Zwischenprodukt Thioschwefelsäure an, wobei ein Rest $HO_3SS—CH_2CH_2—$ entsteht.

Die Sulfatierung der Hydroxygruppe in einem Farbstoff der Formel (1) oder einem geeigneten Vorprodukt, erfolgt vorzugsweise durch Umsetzung mit konzentrierter Schwefelsäure bei 0°C bis mässig erhöhter Temperatur.

Die Sulfatierung kann auch durch Reaktion der Hydroxyverbindung mit 2 Aequivalenten Chlorsulfonsäure pro Hydroxygruppe in einem polaren organischen Lösungsmittel wie beispielsweise N-Methylpyrrolidon bei 10 bis 80°C erfolgen. Vorzugsweise erfolgt die Sulfatierung durch Eintragen de betreffenden Verbindung in Schwefelsäuremonohydrat bei Temperaturen zwischen 5 und 15°C.

Die Einführung eines anderen Restes fur Z in eine Verbindung der Formel (1) oder ein Zwischenprodukt anstelle eines Halogenatoms ode der Sulfatogruppe, beispielsweise einer Thiosulfato- oder Phosphatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Ein weiterer Gegenstand der Erfindung betrifft die Verwendung der Verbindungen der Formel

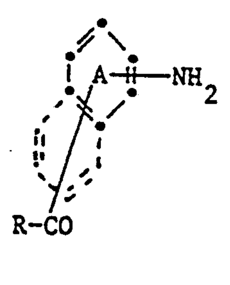

(9)

worin R und A die unter Formel (1) angegebenen Bedeutungen haben, als Diazokomponenten für die Herstellung von Azofarbstoffen.

Die Verbindungen der Formel (9) können hergestellt werden, indem man die entsprechenden Aminobenzoesäure- oder Aminonaphthoesäurechloride mit Aminen, welche den Resten der Formel (1a) bis (1d) entsprechen, kondensiert; oder man geht von einem Nitrobenzoyl- oder Nitronaphthoylchlorid aus, kondensiert mit dem Amin, und reduziert die Nitrogruppe zur Aminogruppe. Nach einer anderen, in der DE—OS—20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50° und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz vo Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide, in denen die Gruppierung $—SO_2—Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte überführt werden, in denen die Gruppierung $—SO_2—Z$ die Gruppierung $—SO_2—CH_2—CH_2—O—SO_3H$, $—SO_2—CH_2—CH_2—O—PO_3H_2$, $—SO_2—CH_2—CH_2$-Halogen oder $—SO_2—CH_2—CH_2—O$-Acyl bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxid oder Natriumcarbonat, in entsprechende Verbindungen überführt werden, in denen die Gruppierung $—SO_2—Z$ die Gruppierung $—SO_2—CH{=}CH_2$ bedeutet. Die so erhaltenen Produkte können wiederum durch Umsetzung (Addition) mit Salzen der Thioschwefelsäure, die Natriumthiosulfat, mit Dialkylaminen, wie Dimethyloder Diäthylamin, oder mit Phenol in Verbindungen überführt werden, in denen die Gruppierung $—SO_2—Z$ die Gruppierung $—SO_2—CH_2—CH_2—S—SO_3H$, $—SO_2—CH_2—CH_2—N(alkyl)_2$ oder

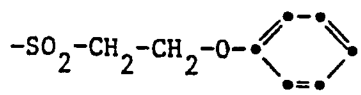

bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt als Diazokomponenten sind Verbindungen der Formel

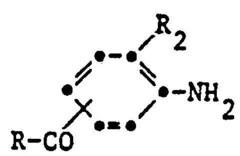

(11)

worin R ein Rest der Formel

$$Z-SO_2-CH_2-CH_2-\underset{V}{\underset{|}{N}}- \qquad (11a)$$

$$Z-SO_2-(CH_2)_m-O-(CH_2)_p-\underset{R_1}{\underset{|}{N}}- \qquad (11b)$$

$$Z-SO_2-(alk)-NH-(alk)-\underset{H}{\underset{|}{N}}- \qquad (11c)$$

oder

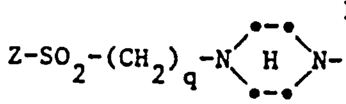

(11d)

ist; Z, V, $R_1$, alk, m, p und q die unter Formel (1) angegebenen Bedeutungen haben; und $R_2$ Wasserstoff, $C_{1-4}$-Alkyl, $C_{1-4}$-Alkoxy, Halogen, Hydroxy, Carboxy oder Sulfo ist.

Das bevorzugte Verfahren zur Herstellung der Verbindungen der Formel (11) ist dadurch gekennzeichnet, dass man ein Nitrobenzoylchlorid der Formel

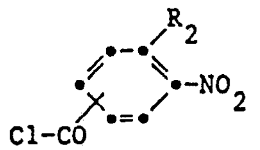

(12)

mit einem Amin der Formel

$$Z-SO_2-CH_2-CH_2-\underset{V}{\underset{|}{NH}} \qquad (13)$$

$$Z-SO_2-(CH_2)_m-O-(CH_2)_p-\underset{R_1}{\underset{|}{NH}} \qquad (14)$$

$$Z-SO_2-(alk)-NH-(alk)-NH_2 \qquad (15)$$

oder 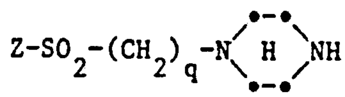 (16)

kondensiert, und die Nitrogruppe zur Aminogruppe reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Acetessigester oder Tetrahydrofuran bei Raumtemperatur bis etwa 40°C. Die Reduktion kann auch mit Fe/Salzsäure in wässriger Lösung durchgeführt werden.

Nach einer Abänderung des oben beschriebenen Verfahren können Verbindungen der Formel (11) auch in der Weise hergestellt werden, dass man ein Nitrobenzoylchlorid der Formel (12) mit einem Amin der Formel

$$HOCH_2CH_2-S-CH_2-CH_2-\underset{V}{\underset{|}{NH}} \qquad (13a)$$

$$HOCH_2CH_2-S-(CH_2)_m-O-(CH_2)_p-\underset{R_1}{\underset{|}{NH}} \qquad (14a)$$

$$HOCH_2CH_2-S-(alk)-NH-(alk)-NH_2 \qquad (15a)$$

oder 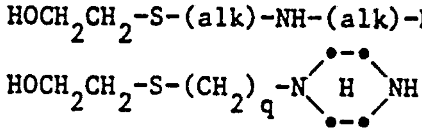 (16a)

kondensiert, das Kondensationsprodukt mit elementarem Chlor zu der entsprechenden β-Chloräthylsulfonyl-Verbindung oxydiert und die Nitrogruppe zur Aminogruppe reduziert.

Die Kondensation des Nitrobenzoylchlorids mit den Aminen der Formeln (13a) bis (16a) wird z.B. in Chloroform bei Raumtemperatur und in Gegenwart von alkalischen, säurebindenden Mitteln, z.B. Alkalihydroxyden, -carbonaten oder -bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die als Ausgangsverbindungen verwendeten Amine der Formeln (13) bis (16a) können analog dem Verfahren des Beispiels 1 der DE—OS—26 14 550 hergestellt werden.

Ausser den oben beschriebenen Reaktivfarbstoffen der Formeln (2) bis (8) sind als weitere wertvolle Vertreter die Reaktivfarbstoffe der folgenden Formeln zu nennen:

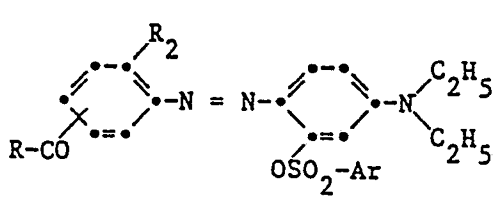

(17) ,

Ar: Aryl, z.B. Phenyl.

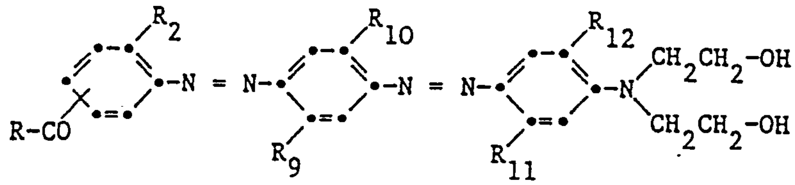

(18) ,

$R_9$ bis $R_{12}$: H, $C_{1-4}$-Alkyl, $C_{1-4}$-Alkoxy, Halogen, Acetylamino, Ureido.

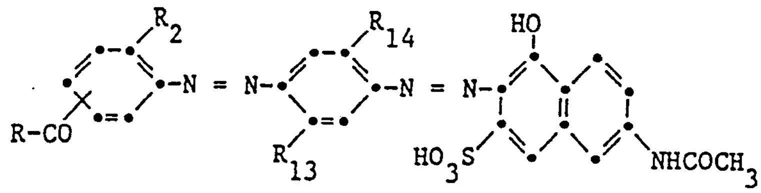

(19) ,

$R_{13}$, $R_{14}$: H, $C_{1-4}$-Alkyl, $C_{1-4}$-Alkoxy, Halogen, Acetylamino, Ureido.

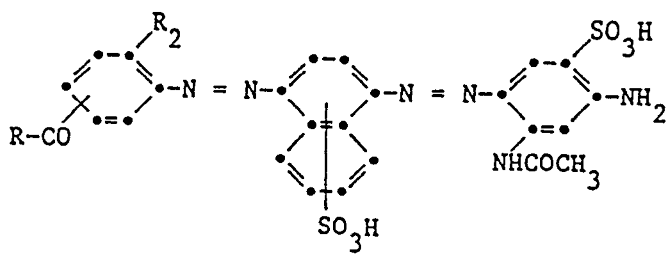

(20) ,

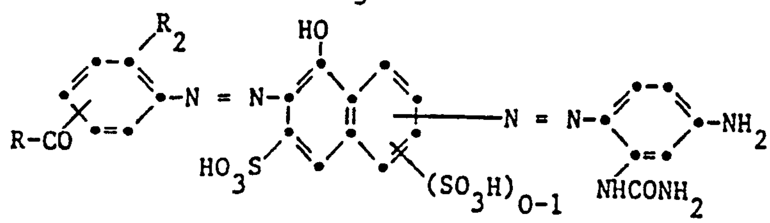

(22) ,

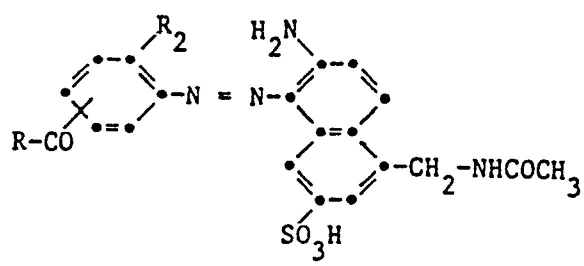

(23) ,

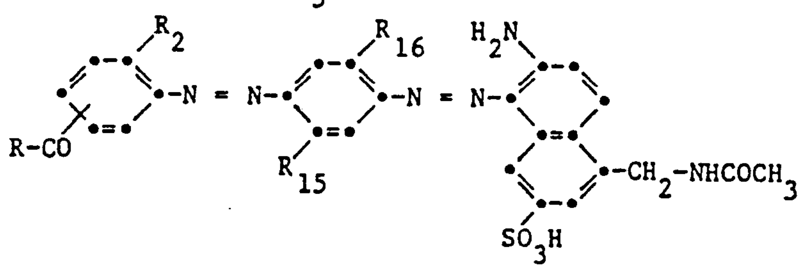

(24) ,

$R_{15}$,$R_{16}$: H, $C_{1-4}$-Alkyl, $C_{1-4}$-Alkoxy, Halogen, Acetylamino, Ureido.

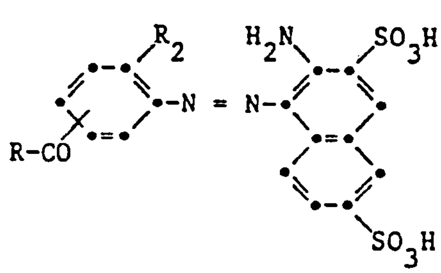

(25) ,

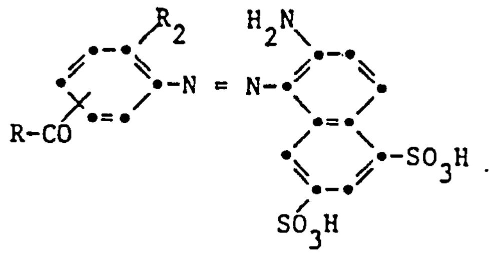

(26) ,

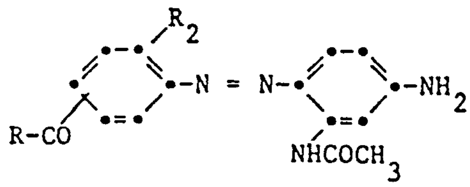

(27) ,

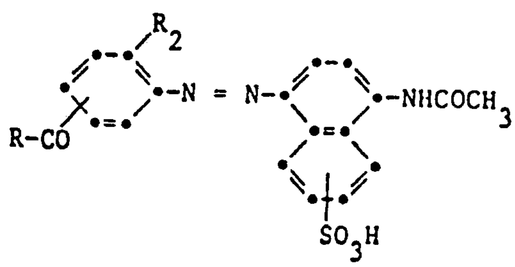

(28) ,

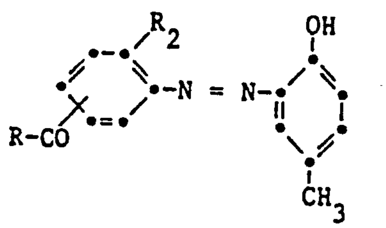

(29) ,

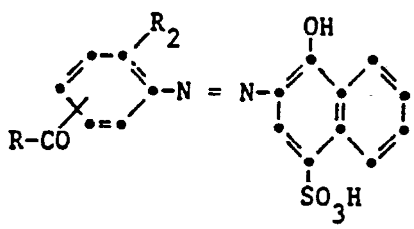

(30) ,

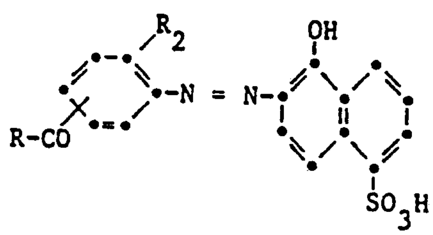

(31) ,

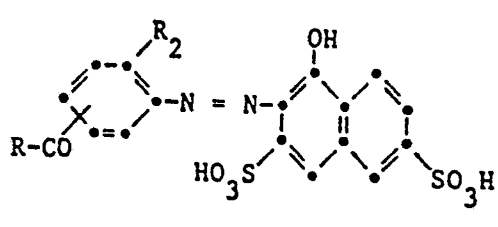

(32) ,

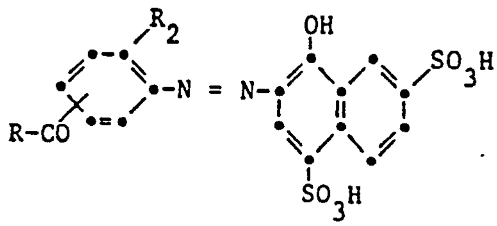

(33) ,

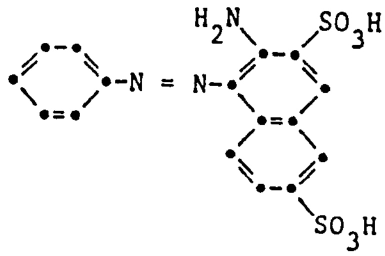

(34) ,

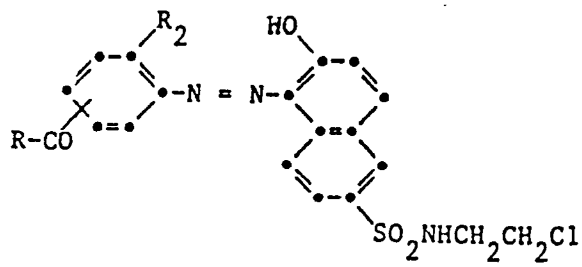

(35) ,

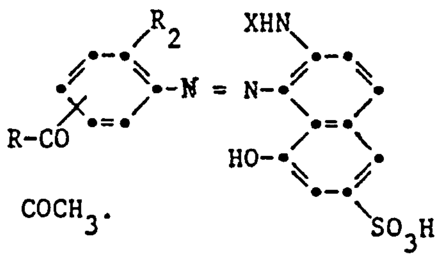

(36) ,

X: H, $COCH_3$.

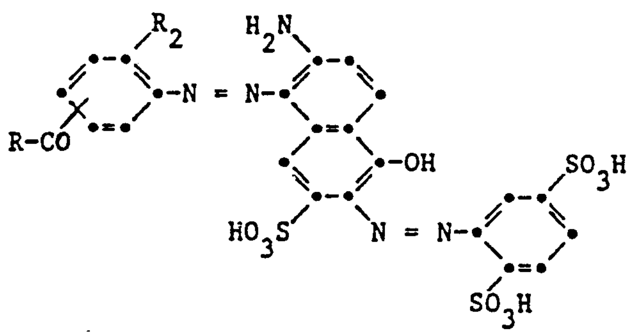

(37) ,

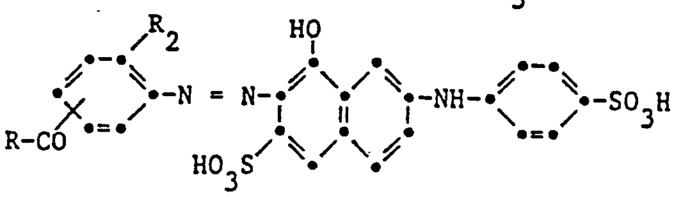

(38) ,

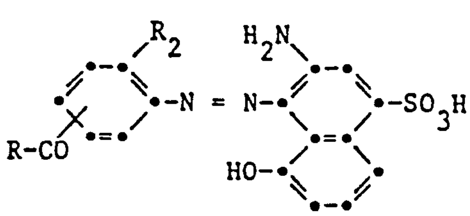

(39) ,

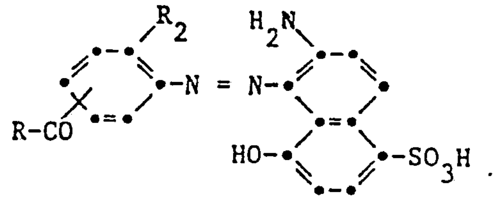

(40) ,

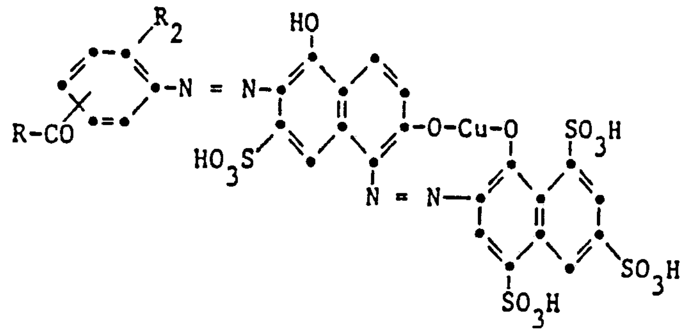

(41) ,

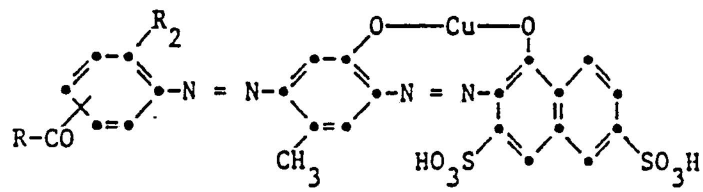

(42) ,

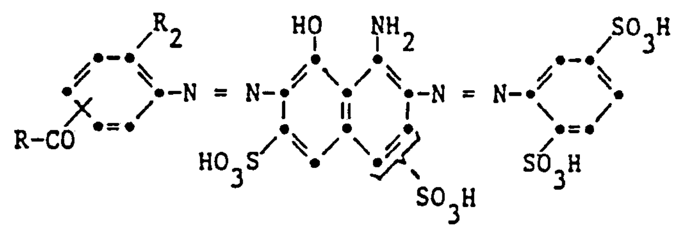

(43) ,

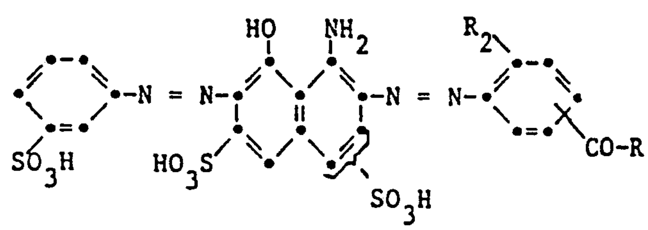

(44) ,

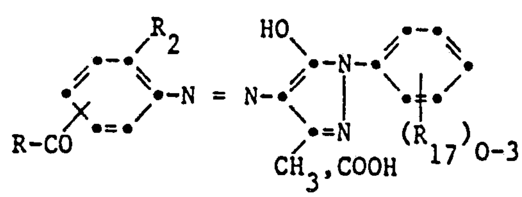

(45) ,

$R_{17}$: $C_{1-4}$-Alkyl, $C_{1-4}$-Alkoxy, Halogen, Carboxy, Sulfo.

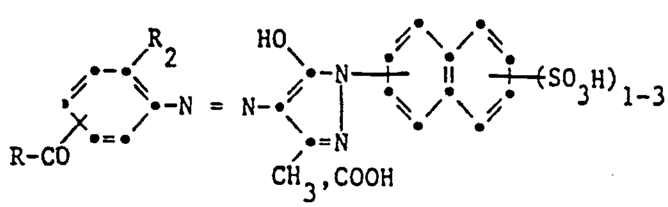

(46) ,

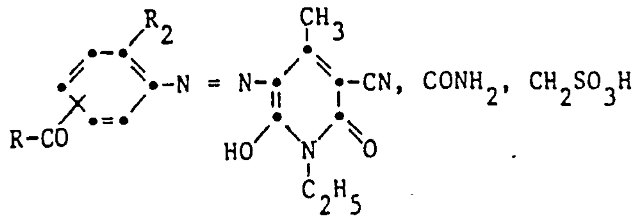 (47) .

in den Formlen (17) bis (47) sind die Reste $R_9$, $R_{10}$, . . . etc., die zu ein und derselben Formel gehören, voneinander unabhängig, und R und $R_2$ haben die unter den Formeln (1) und (2) angegebenen Bedeutungen. Vorzugsweise bedeuten die Reste $R_9$ bis $R_{16}$ Wasserstoff, Methyl, Aethyl, Methoxy, Aethoxy, Acetylamino, Ureido oder Chlor. Der Rest $R_{17}$ ist vorzugsweise Methyl, Methoxy, Chlor oder Sulfo.

Die Farbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kalten und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering is. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstablität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Es sind bereits z.B. aus der EP—A—0 172 789 (Prioritätstag 21.08.84; Anmeldetag 15.08.85; Veröffentlichungstag 26.02.86) Verbindungen de zuvor angegebenen Formel (11), worin $R_2$ Wasserstoff und R β-(β'-sulfatoethylsulfonyl)-ethylamino ist, ohne Angabe einer Verwendungsmöglichkeit bekannt. Weiterhin sind z.B. aus der DE—A—2 040 620 Monoazofarbstoffe enthaltend als Diazokomponente eine Verbindung de zuvor angegenbenen Formel (11), worin $R_2$ Wasserstoff oder Methoxy und R einen Rest der Formel

$$-\underset{\displaystyle R'}{\underset{|}{N}}-(CH_2)_t-SO_2-Z' \quad ,$$

worin R' Wasserstoff oder $C_1$—$C_3$-Alkyl, Z' β-Bromäthyl, β-Chloräthyl, β-Sulfatoäthyl oder β-Acetoxyäthyl und t 3, 4 oder, wenn R' $C_1$—$C_3$-Alkyl bedeutet, auch 2 sind, bedeuten, bekannt. Diese vermögen jedoch nicht alle Wünsche bezüglich der Echtheiten zu erfüllen.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1

33 Teile 4-Aminobenzoesäure-N'-β-(β' chloräthylsulfonyl)-äthylamidhydrochlorid werden unter Rühren in 300 Teile Wasser eingetragen. Nach Zugabe von 36 Teile 31%iger Salzsäure wird das Ganze auf 5° gekühlt. Bei dieser Temperatur lässt man langsam 20 Volumenteile einer wässrigen 5n-Natriumnitritlösung zutropfen und rührt etwa 1 Stunde nach. Ueberschüssige salpetrige Säure wird mit etwas Amidosulfonsäure zerstört.

Zur Kupplung werden 22,3 Teile des Natriumsalzes von N-Phenyltaurin, gelöst in 150 Teilen Wasser, zugesetzt; der pH-Wert wird durch allmähliche Zugabe von Natriumbicarbonat auf etwa 5,5 gestellt. Nach beendigter Kupplung wird die gebildete Azoverbindung durch Kaliumchlorid (in einer Menge von 25 Vol.-% des Lösungsvolumens) ausgefällt, abgesaugt und bei 60° unter reduziertem Druck getrocknet. Es wird ein orangerotes, salzhaltiges Pulver erhalten, das sich in Wasser mit gelboranger Farbe löst und die Verbindung der Formel

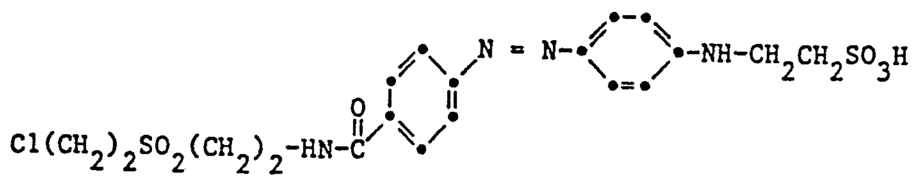

als Alkalimetallsalz, vorwiegend als Kaliumsaltz, enthält. Sie eignet sich ausgezeichnet zum Färben (einschliesslich Bedrucken) von Baumwolle nach den für faserreaktive Farbstoffe üblichen Applikations- und Fixiermethoden und liefert gelbstichig orange Färbungen und Drucke mit guten Licht- und Waschechtheiten.

Beispiel 2

Man verfährt wie in Beispiel 1 beschrieben, setzt jedoch anstelle des N-Phenyltaurins als Kupplungskomponente die äquivalente Menge N-(γ-Sulfopropyl)-anilin oder N-(γ-Sulfo-β-hydroxypropyl)-anilin ein und erhält so die entsprechenden Alkalimetallsalze der Azoverbindungen der Formeln

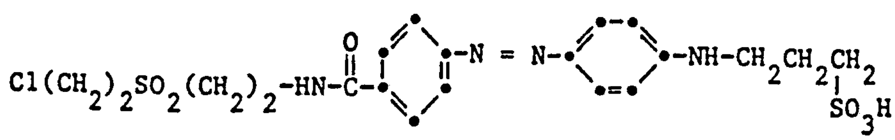

bzw.

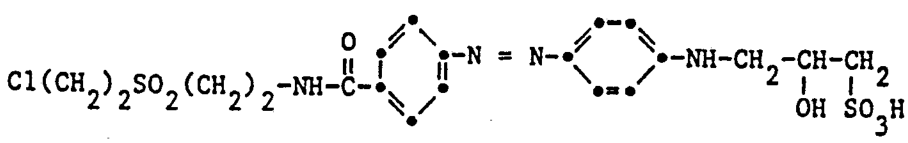

mit zur erfindungsgemässen Azoverbindung des Beispiels 1 vergleichbaren Nuance und ebenso guten coloristischen Eigenschaften.

Beispiel 3

33 Teile 3-Aminobenzoesäure-N'-β-(β'-chloräthylsulfonyl)-äthylamidhydrochlorid werden gemäss der in Beispiel 1 beschriebenen Arbeitsweise diazotiert. Nach Zerstören von überschüssiger salpetriger Säure fügt man eine gekühlte Lösung von 27,15 Teilen N-β-Sulfoäthyl-2-methyl-5-chloranilin in Form des Natriumsalzes in 150 Teilen Wasser hinzu und führt die Kupplung anfangs in stark saurem Bereich, später durch Zugabe von Natriumbicarbonat bei einem pH-Wert zwischen 5,5 und 6,0 durch. Nach beendigter Kupplung wird die Azoverbindung durch Zugabe von Kaliumchlorid ausgefällt, durch Filtration isoliert und bei 60° unter vermindertem Druck getrocknet.

Es wird ein oranges Pulver erhalten, das neben Elektrolyt überwiegend das Kaliumsalz der Azoverbindung der Formel

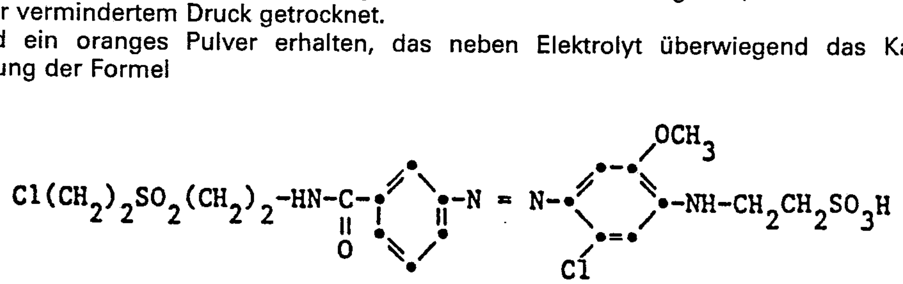

enthält. Sie eignet sich hervorragend als Farbstoff und liefert nach den für faserreaktive Farbstoffe üblichen und bekannten Applikationsund Fixiermethoden auf Baumwolle und Wolle klare goldorange Färbungen und Drucke mit sehr guten Licht- und Nassechtheiten.

Beispiel 4

Man verfährt wie im Beispiel 2 beschrieben, setzt jedoch anstelle der dort verwendeten Kupplungskomponente die äquivalente Menge an N-(γ-Sulfo-β-hydroxypropyl)-2-methyl-5-chloranilin oder N-(γ-Sulfopropyl)-2-methyl-5-chloranilin ein und erhält so die entsprechenden Alkalimetallsalze der Azoverbindungen der Formel

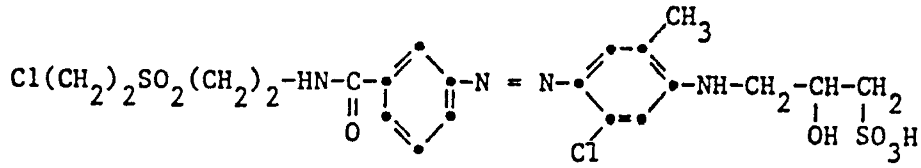

bzw.

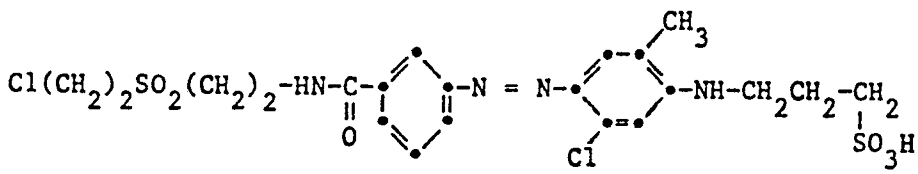

mit zur erfindungsgemässen Azoverbindung des Beispiels 2 sehr ähnlicher Nuance und ebenso guten coloristischen Eigenschaften.

Beispiel 5

Man verfährt in der in Beispiel 1 angegebenen Verfahrensweise der Diazotierung und Kupplung, setzt jedoch anstelle der dort angegebenen Kupplungskomponente 28,75 Teile des Natriumsalzes von N-β--(Sulfoäthyl)-2-methoxy-5-chloranilin ein. Nach Ausfällung der so hergestellten Azoverbindung mit Kaliumchlorid aus dem Kupplungsansatz erhält man ein orangerotes Pulver, das neben Elektrolyt überwiegend das Kaliumsalz der Verbindung der Formel

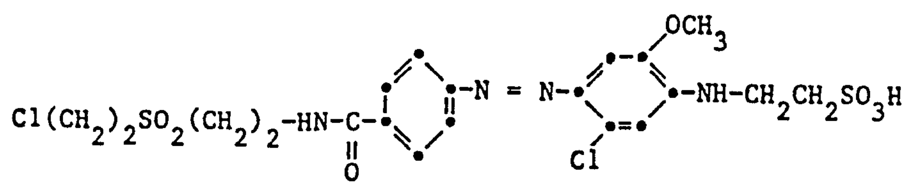

enthält. Die Verbindung eignet sich sehr gut als Farbstoff und liefert auf Baumwolle und Wolle orange Färbungen mit guter Lichtechtheit und sehr guter Beständigkeit gegenüber Waschbehandlungen.

Beispiel 6

Setzt man anstelle der im Beispiel 5 genannten Kupplungskomponente die äquivalente Menge des Natriumsalzes von N-(γ-Sulfo-β-hydroxypropyl)-2-methoxy-5-chloranilin ein und verfährt ansonsten wie in Beispiel 5 angegeben, so erhält man den entsprechenden erfindungsgemässen Farbstoff mit sehr ähnlicher Nuance und ebenfalls sehr guten coloristischen Eigenschaften.

Beispiel 7

Es wird in der in Beispiel 2 angegebenen Arbeitsweise der Diazotierung und Kupplung verfahren, jedoch setzt man anstelle der dort verwendeten Kupplungskomponente 31,6 Teile des Natriumsalzes von N-β-Sulfoäthyl-N-äthyl-2-methoxy-5-chloranilin ein. Die so hergestellte Azoverbindung wird aus der Kupplungslösung entweder durch Zugabe von Natriumchlorid oder durch Sprüchtroknung isoliert.

Es wird ein rotes Pulver erhalten, das neben Elektrolyt das Natriumsalz der Azoverbindung der Formel

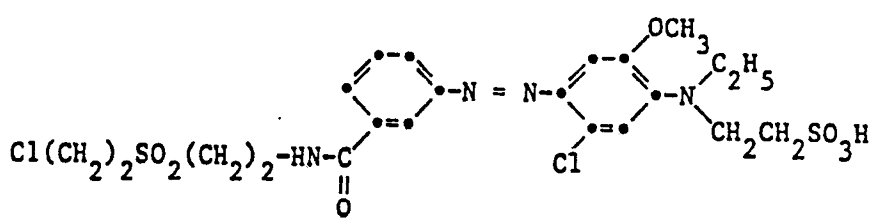

enthält. Sie eignet sich hervorragend als Farbstoff und liefert auf Baumwolle und Wolle gelbstichig rote Färbungen, die sehr gute Echtheitseigenschaften aufweisen.

Beispiel 8

Man verfährt bei der Diazotierung von 33 Teilen 4-Aminobenzoesäure-N'-β-(β'-chloräthylsulfonyl)-äthylamid-hydrochlorid analog der in Beispiel 1 angegebenen Verfahrensweise und lässt die Diazosuspension langsam in eine gekühlte Lösung von 28,75 Teilen des Natriumsalzes von N-β-Sulfoäthyl-2-chlor-5-methoxyanilin in 200 Teilen Wasser einfliessen, wobei der pH-Wert der Kupplungslösung durch Zugabe von Natriumbicarbonat zwischen 5 und 6,5 gehalten wird. Nach beendigter Kupplung wird die entstandene Azoverbindung durch Sprühtrocknung isoliert. Man erhält ein orangerotes Pulver, das neben Elektrolyt das Natriumsalz der Verbindung der Formel

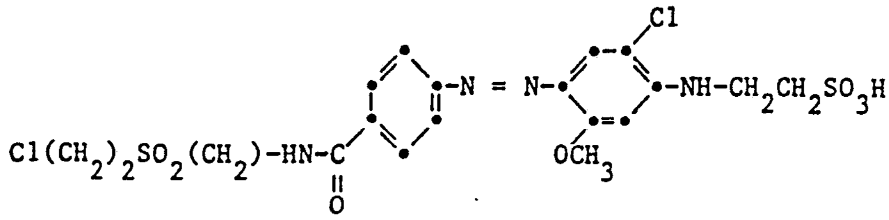

enthält. Diese eignet sich ausgezeichnet als Reaktivfarbstoff zum Färben und Bedrucken von Baumwolle und Wolle und liefert klare, goldorange Färbungen und Drucke, die eine gute Lichtechtheit und sehr gute Nassechtheiten aufweisen.

Beispiel 9

Die Diazotierung von 33 Teilen 3-Aminobenzoesäure-N'-β-(β'-chloräthylsulfonyl)-äthylamid-hydrochlorid wird analog der in Beispiel 2 angegebenen Arbeitsweise durchgeführt.

Zur Kupplung werden 38,75 Teile des Dinatriumsalzes von N,N-Bis-(β-sulfoäthyl)-3-chloranilin gelöst in 200 Teilen Wasser, zugesetzt und der pH-Wert der Kupplungslösung durch allmähliche Zugabe von Natriumbicarbonat auf etwa 5,5 bis 6,0 eingestellt. Nach beendigter Kupplung wird die entstandene Azoverbindung durch Sprühtrocknung isoliert. Man erhält ein orangefarbenes Pulver, das neben Elektrolyt das Natriumsalz der Verbindung der Formel

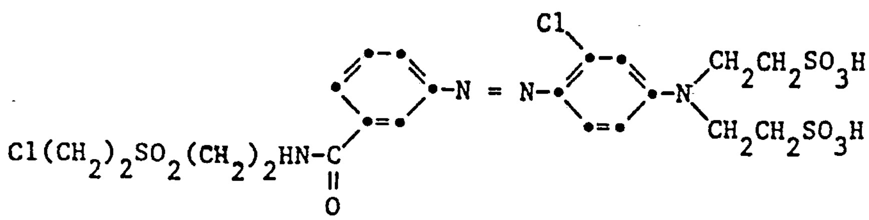

enthält. Dieses eignet sich sehr gut als Reaktivfarbstoff zum Färben (einschliesslich Bedrucken) von Baumwolle und Wolle und ergibt klare, goldgelbe Färbungen und Drucke mit guter Lichtechtheit und sehr guten Nassechtheiten.

Beispiel 10

35,5 Teile 4-Methoxy-3-aminobenzoesäure-N'-β-(β'-chloräthylsulfonyl)-äthylamid-hydrochlorid werden in 150 Teilen Wasser unter Zugabe von 11,5 Teilen Natriumbicarbonat gelöst. Anschliessend setzt man 20 Volumenteile einer wässrigen 5n-Natriumnitritlösung hinzu. Dieses Gemisch wird nach Abkühlen auf 0 bis 5° in ein Gemisch aus 100 Teilen Eis und 36 Volumenteilen 31%iger Salzsäure gegossen. Die entstehende Diazoniumverbindung fällt hierbei teilweise aus. Es wird etwa eine Stunde lang bei 0 bis 5° weitergerührt, sodann überschüssige salpetrige Säure mit etwas Amidosulfonsäure zerstört.

Zur Kupplungsreaktion gibt man diese Diazosuspension in kleinen Anteilen zu eine kalten Lösung von 26,5 Teilen des Natriumsalzes von N-β-Sulfoäthyl-N-äthyl-3-methylanilin in 200 Teilen Wasser und hält den pH-Wert durch Einstreuen von Natriumacetat zwischen 4 und 5.

Die gebildete Azoverbindung wird aus der Kupplungslösung entweder durch Zugabe von Natriumchlorid oder durch Sprühtrocknung isoliert. Mann erhält ein dunkelrotes Pulver, das neben Elektrolyt das Natriumsalz der Verbindung der Formel

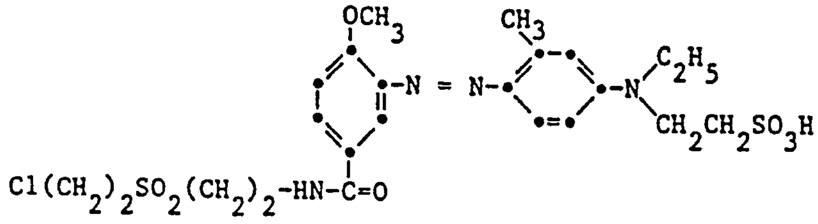

enthält. Diese Verbindung eignet sich sehr gut als Farbstoff und liefert nach den für faserreaktive Farbstoffe

üblichen und bekannten Applikations- und Fixiermethoden auf Baumwolle und Wolle farbstarke, gelbstichig rote Färbungen und Drucke mit guten Echtheiten.

Beispiel 11

Wenn man anstelle der im Beispiel 10 verwendeten Kupplungskomponente 29,5 Teile des Natriumsalzes von N-(γ-Sulfo-β-hydroxypropyl)-N-äthyl-3-methylanilin einsetzt, erhält man das Natriumsalz der Verbindung der Formel

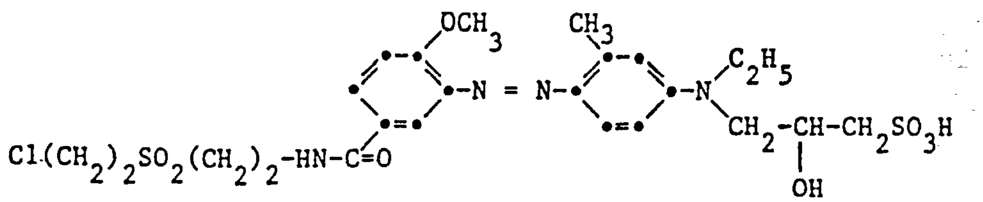

das einen Farbstoff mit gleich guten Eigenschaften und praktisch gleicher Nuance wie der Farbstoff des Beispiels 10 darstellt.

Beispiel 12

Man verfährt in der in Beispiel 10 angegebenen Verfahrensweise der Diazotierung und Kupplung, setzt jedoch anstelle der dort angegebenen Kupplungskomponente 38,1 Teile des Natriumsalzes von N-(γ-Sulfo-β-acetoxypropyl)-N-β-acetoxyäthylanilin ein. Nach Abscheidung der so hergestellten Azoverbindung durch Sprühtrocknung erhält man ein rotes Pulver, das neben Elektrolyt das Natriumsalz der Verbindung der Formel

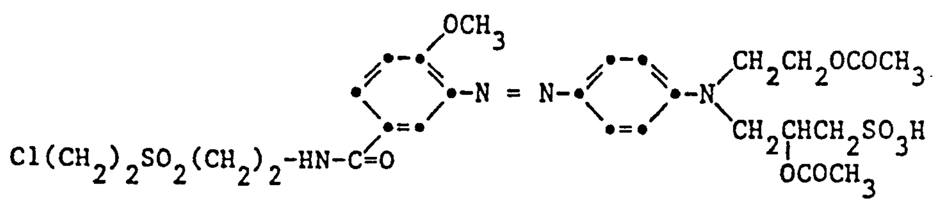

enthält. Diese liefert nach den für faserreaktive Farbstoffe üblichen Färbeweisen auf Baumwolle und Wollè gelbstichig rote Färbungen und Drucke mit guten Allgemeinechtheiten.

Beispiel 13

Es wird in der in Beispel 10 angegebenen Arbeitsweise der Diazotierung und Kupplung verfahren, jedoch setzt man anstelle der dort verwendeten Kupplungskomponente 25,1 Teile des Natriumsalzes von N-Aethyl-N-sulfoäthylanilin ein. Nach Abscheidung der so hergestellten Azoverbindung mit Kaliumchlorid aus dem Kupplungsansatz und Trocknung erhält man ein rotes Pulver, das neben Elektrolyt überwiegend das Kaliumsalz der Verbindung der Formel

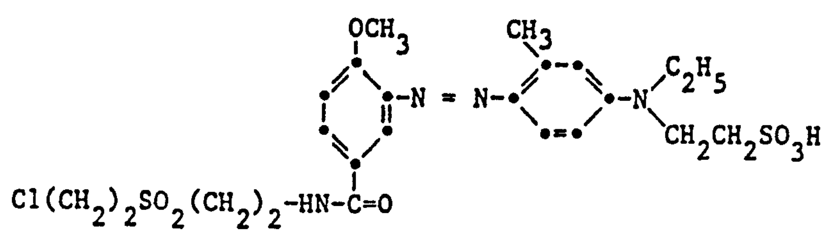

enthält. Dieses liefert nach den für Reaktivfarbstoffe üblichen Applikations- und Fixiermethoden auf Baumwolle und Wolle klare, gelbstichig rote Färbungen und Drucke mit guter Lichtechtheit und sehr guter Beständigkeit gegenüber Waschbehandlungen.

Beispiel 14

Man verfährt nach der in Beispiel 10 beschriebenen Arbeitsweise der Diazotierung und Kupplung, setzt jedoch anstelle der dort verwendeten Kupplungskomponente 36,7 Teile des Dinatriumsalzes von N,N-Bis-(β-sulfoäthyl)-3-methylanilin ein. Nach Isolierung der so hergestellten Azoverbindung durch Sprühtrocknung erhält man ein rotes Pulver, das neben Elektrolyt das Natriumsalz der Verbindung der Formel

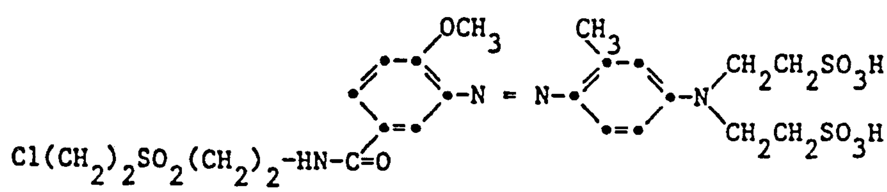

enthält. Dieses liefert nach den für Reaktivfarbstoffe üblichen Färbeweisen auf Baumwolle und Wolle gelbstichig rote Färbungen und Drucke mit sehr guter Beständigkeit gegenüber Waschbehandlungen.

Beispiel 15

34 Teile 4-Methyl-3-aminobenzoesäure-N'-β-(β'-chloräthylsulfonyl)-äthylamid-hydrochlorid werden in 150 Teilen Wasser unter Zugabe von 11,5 Teilen Natriumbicarbonat gelöst. Anschliessend setzt man 20 Volumenteile einer wässrigen 5n-Natriumnitritlösung hinzu. Dieses Gemisch wird nach Abkühlen auf 0 bis 5° in ein Gemisch aus 100 Teilen Eis und 36 Volumenteilen 31%eiger Salzsäure gegossen. Die entstehende Diazoniumverbindung fällt hierbei teilweise aus. Es wird etwa eine Stunde lang bei 0 bis 5° weitergerührt, sodann überschüssige salpetrige Säure mit etwas Amidosulfonsäure zerstört.

Zur Kupplungsreaktion gibt man diese Diazosuspension in kleinen Anteilen zu einer kalten Lösung von 26,5 Teilen des Natriumsalzes von N-β-Sulfoäthyl-N-äthylanilin in 200 Teilen Wasser und hält den pH-Wert durch Einstreuen von Natriumacetat zwischen 4 und 5.

Die gebildete Azoverbindung wird aus der Kupplungslösung entweder durch Zugabe von Natriumchlorid oder durch Sprühtrocknung isoliert. Man erhält ein dunkelrotes Pulver, das neben Elektrolyt das Natriumsalz der Verbindung der Formel

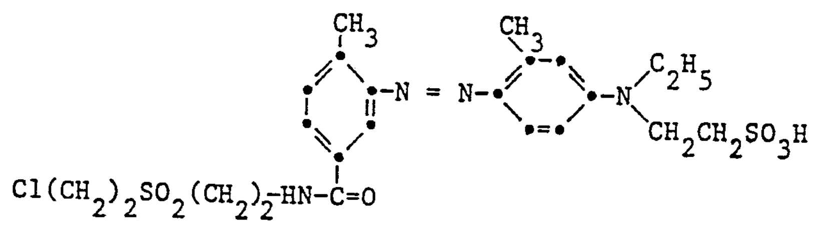

enthält. Diese Verbindung eignet sich sehr gut als Farbstoff und liefert nach denn für faserreaktive Farbstoffe üblichen und bekannten Applikations- und Fixiermethoden auf Baumwolle und Wolle farbstarke, gelbstichig rote Färbungen und Drucke mit guten Echtheiten.

Beispiel 16

Die diazotierung von 45 Teilen 3-Aminobenzoesäure-N'-bis-β-(β'-chloräthylsulfonyl)-äthylamid-hydrochlorid wird analog der in Beispiel 2 angegebenen Arbeitsweise durchgeführt.

Zur Kupplung werden 38,75 Teile des Dinatriumsalzes von N,N-Bis-(β-sulfoäthyl)-3-chloranilin, gelöst in 200 Teilen Wasser, zugesetzt und der pH-Wert der Kupplungslösung durch allmähliche Zugabe von Natriumbicarbonat auf etwa 5,5 bis 6,0 eingestellt. Nach beendigter Kupplung wird die entstandene Azoverbindung durch Sprühtrocknung isoliert. Man erhält ein orangefarbenes Pulver, das neben Elektrolyt das Natriumsalz der Verbindung de Formel

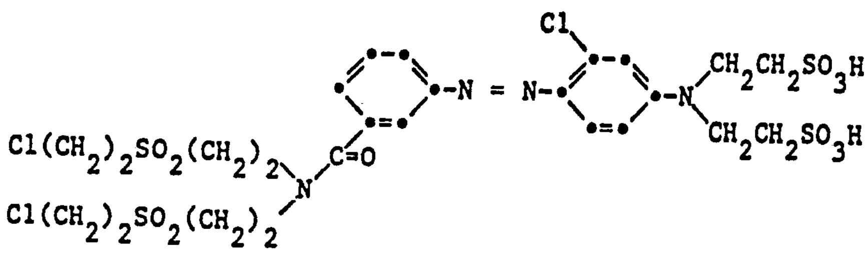

enthält. Dieses eignet sich sehr gut als Reaktivfarbstoff zum Färben (einschliesslich Bedrucken) von Baumwolle und Wolle und ergibt klare, goldorange Färbungen und Drucke mit guter Lichtechtheit und sehr guten Nassechtheiten.

Beispiel 17

Die Diazotierung von 33 Teilen 4-Aminobenzoesäure-N'-β-(β'-chloräthylsulfonyl)-äthylamin-hydrochlorid wird analog der in Beispiel 2 angegebenen Arbeitsweise durchgeführt.

Zur Kupplung werden 38,75 Teile des Dinatriumsalzes von N,N-Bis-(β-sulfoäthyl)-3-chloranilin, gelöst in 200 Teilen Wasser, zugesetzt und der pH-Wert der Kupplungslösung durch allmähliche Zugabe von Natriumbicarbonat auf etwa 5,5 bis 6,0 eingestellt. Nach beendigter Kupplung wird die entstandene Azoverbindung durch Sprühtrocknung isoliert. Man erhält ein orangefarbenes Pulver, das neben Elektrolyt das Natriumsalz der Verbindung der Formel

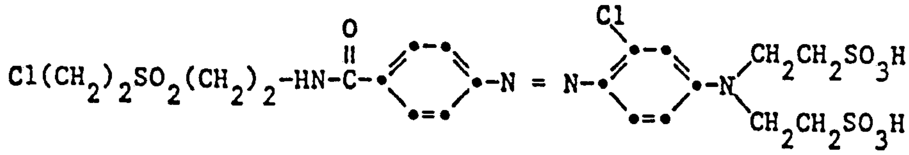

enthält. Dieses eignet sich sehr gut als Reaktivfarbstoff zum Färben (einschliesslich Bedrucken) von Baumwolle und Wolle und ergibt klare, goldorange Färbungen und Drucke mit guter Lichtechtheit und sehr guten Nassechtheiten.

Beispiel 18

35 Teile 4-Chlor-3-aminobenzoesäure-N'-β-(β'-chloräthylsulfonyl)-äthylamid-hydrochlorid werden in 150 Teilen Wasser unter Zugabe von 11,5 Teilen Natriumbicarbonat gelöst. Anschliessend setzt man 20 Volumenteile einer wässrigen 5n-Natriumnitritlösung hinzu. Dieses Gemisch wird nach Abkühlen auf 0 bis 5° in ein Gemisch aus 100 Teilen Eis und 36 Volumenteilen 31%iger Salzsäure gegossen. Die entstehende Diazoniumverbindung fällt hierbei teilweise aus. Es wird etwa eine Stunde lang bei 0 bis 5° weitergerührt, sodann überschüssige salpetrige Säure mit etwas Amidosulfonsäure zerstört.

Zur Kupplungsreaktion gibt man diese Diazosuspension in kleinen Anteilen zu einer kalten Lösung von 26,5 Teilen des Natriumsalzes von N-β-Sulfoäthyl-N-äthyl-3-methylanilin in 200 Teilen Wasser und hält den pH-Wert durch Einstreuen von Natriumacetat zwischen 4 und 5.

Die gebildete Azoverbindung wird aus der Kupplungslösung entweder durch Zugabe von Natriumchlorid oder durch Sprühtrocknung isoliert. Man erhält ein dunkelrotes Pulver, das neben Elektrolyt das Natriumsalz der Verbindung der Formel

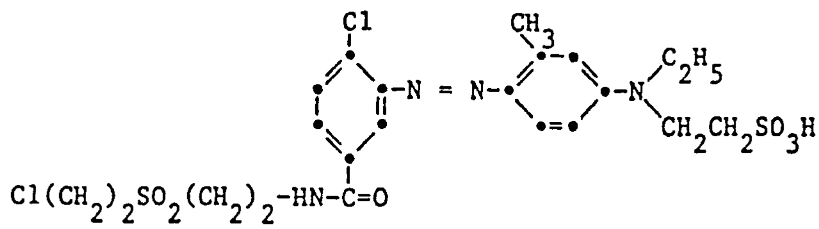

enthält. Diese Verbindung eignet sich sehr gut als Farbstoff und liefert nach den für faserreaktive Farbstoffe üblichen und bekannten Applikations- und Fixiermethoden auf Baumwolle und Wolle farbstarke, gelbstichig rote Färbungen und Drucke mit guten Echtheiten.

Beispiele 19 bis 82

Die in den nachfolgenden Tabellenbeispielen durch ihre Diazokomponenten und Kupplungskomponenten charakterisierten erfindungsgemässen Azoverbindungen der allgemeinen Formel (1) lassen sich ebenfalls in erfindungsgemässer Weise, beispielsweise gemäss den Verfahrensweisen der obigen Ausführungsbeispiele, herstellen.

Diese faserreaktiven erfindungsgemässen Azoverbindungen zeigen sehr gute Farbstoffeigenschaften mit sehr guten anwendungstechnischen Eigenschaften und liefern Färbungen und Drucke auf den in der Beschreibung genannten Fasermaterialien, insbesondere auf Cellulosefasermaterialien und Wolle, nach den für faserreaktive Farbstoffe üblichen Applikations- und Fixiermethoden mit guten bis sehr guten Echtheiten in den angegebenen Farbtönen auf Baumwolle.

Die in den Beispielen genannten Diazokomponenten $D_1$ bis $D_{13}$ sind im Anschluss an die Tabelle einzeln aufgeführt.

Tabelle 1

| Beispiel | Diazokomponente | Kupplungskomponente | Farbton auf Baumwolle |
|---|---|---|---|
| 19 | $D_2$ | N-(2-Chlor-prop-1-en-3-yl)-N-(β-sulfoäthyl)-anilin | gelbstichig orange |
| 20 | $D_2$ | 3-Methyl-N-äthyl-N-(β-sulfoäthyl)-anilin | orange |
| 21 | $D_3$ | N-Methyl-N-(β-sulfoäthyl)-anilin | orange |
| 22 | $D_6$ | 3-Chlor-N-(β-acetoxyäthyl)-N-(β-sulfoäthyl)-anilin | orange |
| 23 | $D_6$ | N-(β-Sulfoäthyl)-anilin | orange |
| 24 | $D_{13}$ | N-(β-Sulfoäthyl)-anilin | orange |
| 25 | $D_1$ | N-Methyl-N-(β-sulfoäthyl)-anilin | orange |
| 26 | $D_9$ | N-(β-Hydroxyäthyl)-N-(β-sulfoäthyl)-anilin | rotstichig orange |
| 27 | $D_4$ | N-(β-Sulfoäthyl)-anilin | orange |
| 28 | $D_5$ | 2-Methoxy-5-chlor-N-(β-sulfoäthyl)-anilin | gelbstichig rot |
| 29 | $D_7$ | N-(2-Brom-prop-1-en-3-yl)-N-(β-sulfoäthyl)-anilin | gelbstichig rot |
| 30 | $D_8$ | 3-Chlor-N-äthyl-N-(β-sulfoäthyl)-anilin | rot |
| 31 | $D_{12}$ | 2,5-Dichlor-N-(γ-sulfo-β-hydroxypropyl)-anilin | klares Goldgelb |
| 32 | $D_{13}$ | 2-Chlor-3-methyl-N-(γ-sulfo-β-hydroxypropyl)-anilin | klares gelbstichiges Orange |
| 33 | $D_1$ | N-Aethyl-N-(γ-sulfo-β-hydroxypropyl)-anilin | orange |
| 34 | $D_1$ | 2-Methoxy-5-chlor-N-äthyl-N-(γ-sulfo-β-hydroxypropyl)-anilin | gelbstichig rot |
| 35 | $D_1$ | N-(β-Sulfo-α-methyl-äthyl)-anilin | gelbstichig orange |

Tabelle 1 (Fortsetzung)

| Beispiel | Diazokomponente | Kupplungskomponente | Farbton auf Baumwolle |
|---|---|---|---|
| 36 | $D_9$ | N-Aethyl-N-(γ-sulfo-β-hydroxy-propyl)-anilin | orange |
| 37 | $D_5$ | 3-Chlor-N-(β-chloräthyl)-N-(γ-sulfo-β-chlorpropyl)-anilin | orange |
| 38 | $D_5$ | 3-Methyl-N-(β-hydroxy-β-phenyl-äthyl)-N-(γ-sulfo-β-chlorpropyl)-anilin | rotstichig orange |
| 39 | $D_{12}$ | 3-Methyl-N-äthyl-N-(γ-sulfo-β-acetoxypropyl)-anilin | gelbstichig rot |
| 40 | $D_{13}$ | 2-Methoxy-5-chlor-N-(β-hydroxyäthyl)-N-(γ-sulfo-β-hydroxypropyl)-anilin | rot |
| 41 | $D_2$ | N-(β-Sulfo-α-methyl-äthyl)-anilin | gelbstichig orange |
| 42 | $D_5$ | 3-Chlor-N-(β-sulfoäthyl)-anilin | goldorange |
| 43 | $D_6$ | 2,5-Dichlor-N-(β-sulfoäthyl)-anilin | goldgelb |
| 44 | $D_4$ | 2-Methyl-N-(β-sulfoäthyl)-anilin | goldorange |
| 45 | $D_1$ | 2,6-Dimethyl-N-(β-sulfoäthyl)-anilin | gelbstichig orange |
| 46 | $D_2$ | 2,3-Dichlor-N-(β-sulfoäthyl)-anilin | gelbstichig orange |
| 47 | $D_3$ | 2-Chlor-5-methyl-N-(β-sulfoäthyl)-anilin | goldgelb |
| 48 | $D_{13}$ | 3-Methoxy-N-(β-sulfoäthyl)-anilin | gelbstichig braun |
| 49 | $D_9$ | N-Aethyl-N-(β-sulfoäthyl)-anilin | gelbstichig orange |
| 50 | $D_5$ | 2-Methoxy-5-chlor-N-(β-hydroxy-äthyl)-N-(β-sulfoäthyl)-anilin | gelbstichig rot |
| 51 | $D_1$ | 2-Methoxy-N-(β-sulfoäthyl)-anilin | orange |
| 52 | $D_7$ | N-Butyl-N-(β-sulfoäthyl)-anilin | gelbstichig orange |
| 53 | $D_8$ | 2,5-Dichlor-N-(β-sulfoäthyl)-anilin | gelbstichig orange |
| 54 | $D_{13}$ | 3-Methyl-N-benzyl-N-(β-sulfo-äthyl)-anilin | gelbstichig rot |
| 55 | $D_{12}$ | 3-Methyl-N-(β-hydroxyäthyl)-N-(β-sulfoäthyl)-anilin | gelbstichig rot |

Tabelle 1 (Fortsetzung)

| Beispiel | Diazokomponente | Kupplungskomponente | Farbton auf Baumwolle |
|---|---|---|---|
| 56 | $D_9$ | N-(β-Hydroxy-β-phenyläthyl)-N-(β-sulfoäthyl)-anilin | gelbstichig rot |
| 57 | $D_1$ | 2,5-Dichlor-N-(β-sulfoäthyl)-anilin | gelbstichig rot |
| 58 | $D_5$ | 2-Methyl-5-chlor-N-(β-sulfoäthyl)-anilin | orange |
| 59 | $D_5$ | 2,3-Dichlor-N-(β-sulfoäthyl)-anilin | gelbstichig orange |
| 60 | $D_5$ | N-(β-Sulfoäthyl)-anilin | gelbstichig orange |
| 61 | $D_5$ | N-(β-Acetoxyäthyl)-N-(β-sulfoäthyl)-anilin | gelbstichig orange |
| 62 | $D_1$ | 3-Methyl-N-(β-cyanoäthyl)-N-(β-sulfoäthyl)-anilin | orange |
| 63 | $D_2$ | 3-Chlor-N-(β-carboxyäthyl)-N-(β-sulfoäthyl)-anilin | gelbstichig orange |
| 64 | $D_3$ | 3-Chlor-N-(β-hydroxyäthyl)-N-(β-sulfoäthyl)-anilin | rot |
| 65 | $D_{12}$ | 3-Methyl-N-(β-acetoxyäthyl)-N-(β-sulfoäthyl)-anilin | blaustichig rot |
| 66 | $D_5$ | N-Aethyl-N-(γ-sulfo-β-hydroxypropyl)-anilin | gelb |
| 67 | $D_6$ | 3-Methyl-N-methyl-N-(γ-sulfo-β-hydroxypropyl)-anilin | orange |
| 68 | $D_6$ | 3-Chlor-N-(β-cyanäthyl)-N-(γ-sulfo-β-hydroxypropyl)-anilin | orange |
| 69 | $D_{13}$ | N-(β-Carboxyäthyl)-N-(γ-sulfo-β-hydroxypropyl)-anilin | orange |
| 70 | $D_9$ | 2-Methoxy-5-chlor-N-(β-sulfoäthyl)-anilin | gelbstichig rot |

Tabelle 1 (Fortsetzung)

| Beispiel | Diazokomponente | Kupplungskomponente | Farbton auf Baumwolle |
|---|---|---|---|
| 71 | $D_4$ | 2-Hydroxy-N-(γ-sulfo-β-hydroxypropyl)-anilin | rot |
| 72 | $D_1$ | 3-Chlor-N-(γ-sulfopropyl)-anilin | rotstichig orange |
| 73 | $D_{12}$ | N-Methyl-N-(β-sulfo-α-methyläthyl)-anilin | orange |
| 74 | $D_{13}$ | 3-Methyl-N-äthyl-N-(γ-sulfopropyl)-anilin | gelbstichig rot |
| 75 | $D_4$ | 2-Chlor-N-(γ-sulfo-β-hydroxypropyl)-anilin | blaustichig rot |
| 76 | $D_3$ | N-Aethyl-N-(γ-sulfopropyl)-anilin | bordo |
| 77 | $D_1$ | N,N-Bis-(β-sulfoäthyl)-3-chloranilin | rotstichig orange |
| 78 | $D_4$ | N,N-Bis-(β-sulfoäthyl)-3-methylanilin | gelbstichig rot |
| 79 | $D_7$ | N-(β-Hydroxyäthyl)-N-(β-sulfoäthyl)-3-chloranilin | gelbstichig orange |
| 80 | $D_5$ | N,N-Bis-(γ-sulfo-β-hydroxypropyl)-3-chloranilin | gelbstichig orange |
| 81 | $D_9$ | N-Aethyl-N-(β-sulfoäthyl)-3-methylanilin | rotstichig orange |
| 82 | $D_{12}$ | N,N-Bis-(β-sulfoäthyl)-anilin | rotstichig orange |

**Diazokomponenten**

$D_1$ 3-Aminobenzoesäure-N'-β-(β'-chloräthylsulfonyl)-äthylamid

$D_2$ 4-Chlor-3-aminobenzoesäure-N'-β-(β'-chloräthylsulfonyl)-äthylamid

$D_3$ 4-Methyl-3-aminobenzoesäure-N'-β-(β'-chloräthylsulfonyl)-äthylamid

$D_4$ 4-Methoxy-3-aminobenzoesäure-N'-β-(β'-chloräthylsulfonyl)-äthylamid

$D_5$ 3-Aminobenzoesäure-N'-β-[β'-(β''-chloräthylsulfonyl-äthyloxy]-äthylamid

$D_6$ 3-Aminobenzoesäure-N'-γ-(β'-chloräthylsulfonyl)-propylamid

$D_7$ 3-Aminobenzoesäure-N'-bis-[β-(β'-chloräthylsulfonyl-äthyl]-amid

$D_8$ 3-Aminobenzoesäure-N'-bis-[γ-(β'-chloröthylsulfonyl)-propyl]-amid

$D_9$ 4-Aminobenzoesäure-N'-β-(β'-chloräthylsulfonyl)-äthylamid

$D_{10}$ 4-Aminobenzoesäure-N'-β-[β'-(β''-chloräthylsulfonyl)-äthyloxy]-äthylamid

$D_{11}$ 4-Aminobenzoesäure-N'-γ-(β'-chloräthylsulfonyl)-propylamid

$D_{12}$ 4-Aminobenzoesäure-N'-bis-[β-(β'-chloräthylsulfonyl-äthyl]-amid

$D_{13}$ 4-Aminobenzoesäure-N'-bis-[γ-(β'-chloräthylsulfonyl)-propyl]-amid

Beispiel 83

33 Teile 3-Aminobenzoesäure-N'-β-(β'-chloräthylsulfonyl)-äthylamidhydrochlorid werden unter Rühren in 300 Teile Wasser eingetragen. Sodann gibt man 46 Teile 31%ige Salzsäure zu und kühlt die Suspension auf etwa 5° ab. Bei dieser Temperatur lässt man langsam 20 Volumenteile einer wässrigen 5n-Natriumnitritlösung zutropfen und rührt etwa 1 bis 2 Stunden lang nach. Die überschüssige salpetrige Säure wird mit etwas Amidosulfonsäure zerstört.

Zur Kupplungsreaktion gibt man eine wässrige Lösung von 23 Teilen 3-Amino-acetanilid-4-sulfonsäure hinzu und stellt den pH-Wert durch allmähliche Zugabe von Natriumbicarbonat auf etwa 4 ein. Nach beendigter Kupplung wird der pH-Wert auf 5,5 bis 6,0 gestellt und die entstandene Azoverbindung durch Sprühtrocknung der wässrigen Lösung isoliert.

Es wird ein gelboranges, elektrolythaltiges Pulver erhalten, das das Natriumsalz der Verbindung der Formel

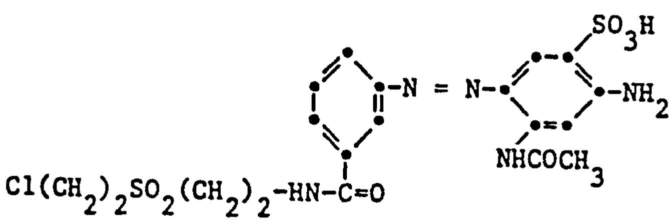

enthält. Diese besitzt sehr gute Farbstoffeigenschaften und eignet sich sehr gut zum Färben (einschliesslich Bedrucken) von beispielsweise Cellulosefasern, wie Baumwolle, nach den für faserreaktive Farbstoffe

üblichen Applikations- und Fixiermethoden. Sie liefert klare, goldgelbe Färbungen und Drucke mit guten Licht- und Nassechtheiten. Auf Wolle werden ebenfalls gute Färbungen und Drucke erhalten, die sich durch klare, goldgelbe Nuancen von hoher Farbstärke sowie durch sehr gute Licht- und Nassechtheiten auszeichnen.

Beispiel 84

Man verfährt in der im Beispiel 1 angegebenen Verfahrensweise zur Herstellung einer erfindungsgemässen Azoverbindung setzt jedoch anstelle der dort verwendeten Kupplungskomponente 24,4 Teile 3-Aminopropylamino-benzol-4-sulfonsäure ein. Man erhält nach Aufarbeitung des Syntheseansatzes das Natriumsalz der Verbindung der Formel

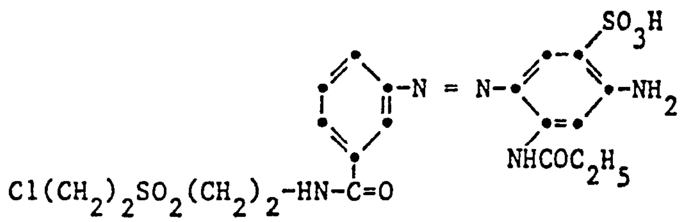

das ebenfalls einen wertvollen Farbstoff mit faserreaktiven Eigenschaften darstelt. Dieser erfindungsgemässe Verbindung färbt nach den üblichen Applikations- und Fixiermethoden für faserreaktive Farbstoffe Cellulosefasermaterialien ebenfalls in klaren, goldgelben Tönen mit guten Licht- und Nassechtheiten. Ebenso liefert sie auf Wolle kräftige, egale Färbungen mit klarer, goldgelber Nuance und sehr guten Licht- und Nassechtheiten.

Beispiel 85

35,5 Teile 4-Methoxy-3-aminobenzoesäure-N'-β-(β'-chloräthylsulfonyl)äthylamid-hydrochlorid trägt man unter Rühren in 280 Teile Wasser ein. Nach Zugabe von 36 Teilen 31%iger Salzsäure kühlt man die Suspension auf 5° ab. Bei dieser Temperatur lässt man langsam 20 Volumenteile einer wässrigen 5n-Natriumnitritlösung zutropfen und rührt den Reaktionsansatz noch etwa eine Stunde nach. Ueberschüssige salpetrige Säure wird anschliessend mit etwas Amidosulfonsäure zerstört.

Zur Durchführung der Kupplungsreaktion wird eine Lösung von 23 Teilen 3-Amino-acetanilid-4-sulfonsäure in etwa 150 Teilen Wasser zur obigen Diazoniumsalzlösung zugegeben, wobei der pH-Wert mittels Natriumbicarbonat auf etwa 4 eingestellt und gehalten wird. Nach beendigter Kupplung wird der pH-Wert auf 5,5 bis 6 erhöht und die entstandene erfindungsgemässe Azoverbindung durch Kaliumchlorid ausgefällt, abgesaugt und bei 60° unter reduziertem Druck getrocknet. Man kann die Azoverbindung auch durch Sprühtrocknung der wässrigen Lösung isolieren.

Es wird ein oranges, elektrolythaltiges Pulver erhalten, das das Alkalimetallsalz, wie vorwiegend das Kaliumsalz bzw. das Natriumsalz der formel

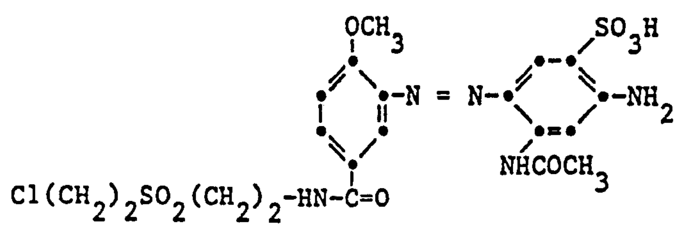

enthält. Die erfindungsgemässe Verbindung eignet sich hervorragend als Farbstoff und liefert nach den für faserreaktive Farbstoffe üblichen und bekannten Applikations- und Fixiermethoden auf Baumwolle und Wolle klare, orange Färbungen und Drucke mit sehr guten Echtheitseigenschaften, welche in der Beschreibung zuvor erwähnt sind.

Beispiel 86

Man verfährt gemäss den in Beispiel 2 angegebenen Verfahrensweisen zur Herstellung einer erfindungsgemäsen Azoverbindung, ersetzt jedoch dort die Kupplungskomponente durch 24,4 Teile 3-Amino-propionaminobenzol-4-sulfonsäure. Man erhält die entsprechende erfindungsgemässe Azoverbindung mit der Propionylaminogruppe in der Kupplungskomponente. Diese erfindungsgemässe Verbindung zeigt ebenfalls sehr gute Farbstoffeigenschaften und liefert beispielsweise auf Baumwolle Färbungen und Drucke mit gleicher Nuance und eben solchen guten Echtheitseigenschaften.

Beispiel 87

33 Teile 4-Aminobenzoesäure-N'-β-(β'-chloräthylsulfonyl)-äthylamidhydrochlorid werden unter Rühren in 300 Teile Wasser eingetragen. Sodann gibt man 36 Teile 31%ige Salzsäure zu und kühlt die Suspension auf etwa 5° ab. Bei dieser Temperatur lässt man langsam 20 Volumenteile einer wässrigen 5n-Natriumnitritlösung zutropfen und rührt etwa 1 bis 2 Stunden lang nach. Die überschüssige salpetrige Säure wird mit etwas Amidosulfonsäure zerstört.

Zur Kupplungsreaktion gibt man eine wässrige Lösung von 23 Teilen 3-Amino-acetanilid-4-sulfonsäure

hinzu und stellt den pH-Wert durch allmähliche Zugabe von natriumbicarbonat auf etwa 4 ein. Nach beendigter Kupplung wird der pH-Wert auf 5,5 bis 6,0 gestellt und die entstandene Azoverbindung durch Sprühtrockung der wässrigen Lösung isoliert.

Es wird ein gelboranges, elektrolythaltiges Pulver erhalten, das das Natriumsalz der Verbindung der Formel

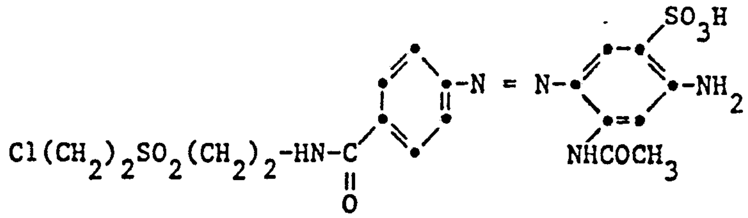

enthält. Diese besitzt sehr gute Farbstoffeigenschaften und eignet sich sehr gut zum Färben, einschliesslich Bedrucken, von beispielsweise Cellulosefasern, wie Baumwolle, nach den für faserreaktive Farbstoffe üblichen Applikations- und fixiermethoden. Sie liefert klare, goldgelbe Färbungen und Druck mit guten Licht- und Nassechtheiten. Auf Wolle werden ebenfalls gute Färbungen und Drucke erhalten, die sich durch klare, goldgelbe Nuancen von hoher Farbstärke sowie durch sehr gute Licht- und Nassechtheiten auszeichnen.

Beispiel 88

44 Teile 4-Aminobenzoesäure-N-bis-β-(β'-chloräthylsulfonyl)-äthylamidhydrochlorid werden unter Rühren in 300 Teile Wasser eingetragen. Sodann gibt man 36 Teile 31%ige Salzsäure zu und kühlt die Suspension auf etwa 5° ab. Bei dieser Temperatur lässt man langsam 20 volumenteile einer wässrigen 5n-Natriumnitritlösung zutropfen und rührt etwa 1 bis 2 Stunden lang nach. Die überschüssige salpetrige Säure wird mit etwas Amidosulfonsäure zerstört.

Zur Kupplungsreaktion gibt man eine wässrige Lösung von 23 Teilen 3-Amino-β-carbonsäure-propionylaminobenzol-4-sulfonsäure hinzu und stellt den pH-Wert durch allmähliche Zugabe von Natriumbicarbonat auf etwa 4 ein. Nach beendigter Kupplung wird der pH-Wert auf 5,5 bis 6,0 gestellt und die entstandene Azoverbindung durch Sprühtrocknung der wässrigen Lösung isoliert.

Es wird ein gelboranges, elektrolythaltiges Pulver erhalten, das das Natriumsalz der Verbindung der Formel

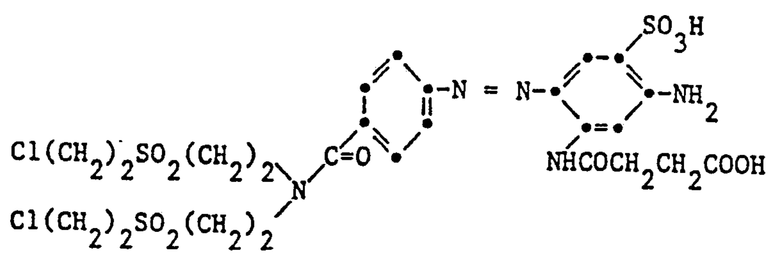

enthält. Diese besitzt sehr gute Farbstoffeigenschaften und eignet sich sehr gut zum Färben (einschliesslich Bedrucken) von beispielsweise Cellulosefasern, wie Baumwolle, nach den für faserreaktive Farbstoffe üblichen Applikations- und Fixiermethoden. Sie liefert klare, goldgelbe Färbungen und Drucke mit guten Licht- und Nassechtheiten. Auf Wolle werden ebenfalls gute Färbungen und Drucke erhalten, die sich durch klare, goldgelbe Nuancen von hoher Farbstärke sowie durch sehr gute Licht- und Nassechtheiten auszeichnen.

Beispiel 89

Man verfährt gemäss der im Beispiel 1 angegebenen Verfahrensweise der Diazotierung und Kupplung, setzt jedoch anstelle der dort angegebenen Kupplungskomponente 32,1 Teile 3-Amino-α-bromacryloyl-amino-benzol-4-sulfonsäure ein. Nach beendigter Synthese wird die Reaktionslösung sprühgetrocknet. Man erhält ein orangebraunes, elektrolythaltiges Pulver, das das Natriumsalz der Verbindung der Formel

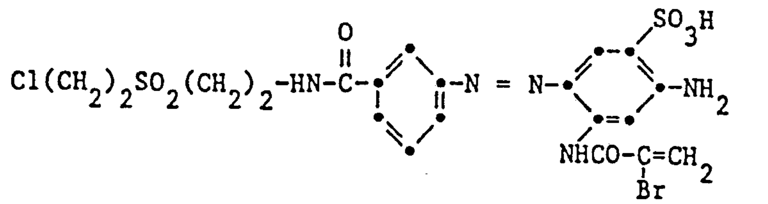

enthält. Diese erfindungsgemässe Azoverbindung liefert nach den für faserreaktive Farbstoffe üblichen Färbeweisen auf Baumwolle und wolle goldgelbe Färbungen und Drucke mit sher guten Licht- und Nassechtheitseigenschaften, wie beispielsweise den in der Beschreibung genannten Echtheiten.

Beispiel 90

Man verfährt zur Herstellung einer erfindungsgemässen Azoverbindung gemäss der im Beispiel 4 angegebenen Verfahrenzweise, ersetzt jedoch die dort verwendete Kupplungskomponente durch 29,2 Teile 3-Amino-o-carbonsäure-benzoylamino-benzol-4-sulfonsäure. Nach Isolierung der hergestellten Azoverbindung durch Sprühtrocknung wird ein elektrolythaltiges gelbbraunes Pulver mit dem Natriumsalz der Verbindung der Formel

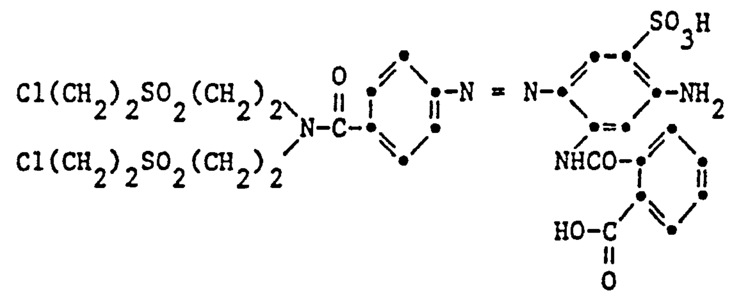

erhalten. Diese erfindungsgemässe Azoverbindung zeigt sehr gute faserreaktive Farbstoffeigenschaften und liefert in üblicher Weise auf Baumwolle und wolle klare, rotstichig gelbe Färbungen und Drucke mit guter Lichtechtheit und sehr guter Beständigkeit gegenüber Waschbehandlungen.

Beispiel 91

Man verfährt gemäss der Verfahrensweise des Beispiels 1, ersetzt jedoch die dort verwendete Kupplungskomponente durch 34,2 Teile 3-Amino-p-tosylamino-benzol-4-sulfonsäure. Nach Isolierung erhält man das Natriumsalz der Verbindung der Formel

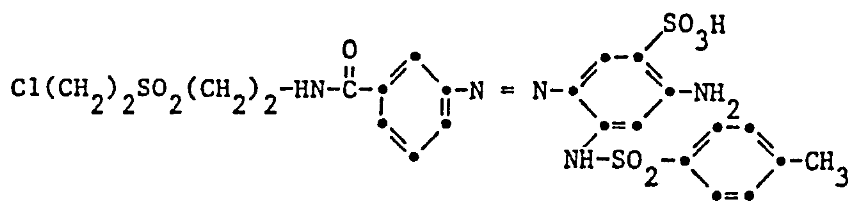

die auf Baumwolle und wolle Färbungen und Drucke mit kräftiger rotstichig gelber Nuance und mit guten Echtheitseigenschaften ergeben.

Beispiel 92

Man verfährt zur Herstellung einer erfindungsgemässen Verbindung gemäss der Verfahrensweise des Beispiels 1, ersetzt jedoch die dort verwendete Kupplungskomponente durch 27,3 Teile 3-Amino-N'-isopropylureidobenzol-4-sulfonsäure. Nach Isolierung der synthetisierten Azoverbindung durch Sprühtrocknung erhält man ein gelbbraunes, elektrolythaltiges Pulver, das das Natriumsalz der Verbindung der Formel

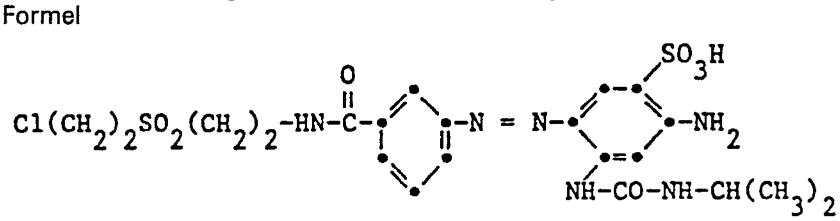

enthält und das auf Baumwolle und Wolle nach den für faserreaktive Farbstoffe üblichen Anwendungsmethoden auf Baumwolle und Wolle kräftige, goldorange Färbungen und Drucke mit guter Lichtechtheit und sehr guten Waschechtheitseigenschaften liefert.

Beispiel 93

Eine Suspension von 33 Teilen 4-Aminobenzoesäure-N'-β-(β'-chloräthylsulfonyl)-äthylamid-hydrochlorid in 100 Teilen Wasser, 100 Teilen Eis und 21 Teilen einer konzentrierten wässrigen Salzsäure wird langsam mit einer wässrigen Lösung von 7,5 Teilen Natriumnitrit versetzt. Anschliessend wird noch eine Stunde lang nachgerührt und überschüssiges Nitrit mit Amidosulfonsäure zerstört.

Zur Durchführung der Kupplungsreaktion versetzt man die so hergestellte Diazoniumsalzsuspension mit einer neutralen wässrigen Lösung von 32,2 Teilen 3-Amino-4-sulfo-phenylharnstoff. Diese kann gemäss bekannten Verfahrensweisen aus 18,8 Teilen 1,3-Diaminobenzol-4-sulfonsäure mit 8,7 Teilen Kaliumcyanat bei einem pH-Wert von 5 hergestellt werden. Das Kupplungsgemisch wird noch 3 bis 4 Stunden bei einem pH-Wert von 2,5 gerührt und der pH-Wert der Syntheselösung auf 4 bis 6 gestellt. Die erfindungsgemässe Azoverbindung wird durch Sprühtrocknung isoliert.

Man erhält ein gelbbraunes, elektrolythaltiges Pulver, das das Alkalimetallsalz, vorwiegend Natriumsalz, der Verbindung der formel

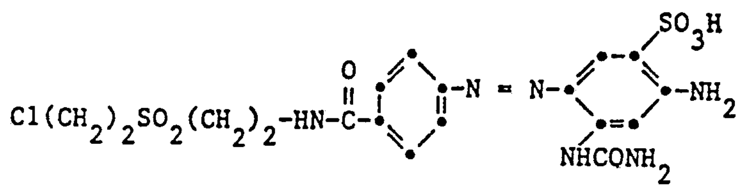

enthält, die gute faserreaktive Farbstoffeingenschaften besitzt, ein sehr gutes Ziehvermögen aus langen flotten aufweist und nach üblichen Applikations- und Fixiermethoden für faserreaktive Farbstoffe auf Baumwolle Färbungen und Drucke mit rotstichig gelber Nuance und guten Licht- und Nassechtheitseigenschaften liefert.

Beispiel 94

35 Teile 4-Chlor-3-aminobenzoesäure-N'-β-(β'-chloräthylsulfonyl)äthylamid-hydrochlorid trägt man unter Rühren in 280 Teile Wasser ein. Nach Zugabe von 36 Teilen 31%iger Salzsäure kühlt man die Suspension auf 5° ab. Bei dieser Temperatur lässt man langsam 20 Volumenteile einer wässrigen 5n-Natriumnitritlösung zutropfen und rührt den Reaktionsansatz noch etwa eine Stunde nach. Ueberschüssige salpetrige Säure wird anschliessend mit etwas Amidosulfonsäure zerstört.

Zur Durchführung der Kupplungsreaktion wird eine Lösung von 23 Teilen 3-Amino-acetanilid-1-sulfonsäure in etwa 150 Teilen Wasser zur obigen Diazoniumsalzlösung zugegeben, wobei der pH-Wert mittels Natriumbicarbonat auf etwa 4 eingestellt und gehalten wird. Nach beendigter Kupplung wird der pH-Wert auf 5,5 bis 6 erhöht und die entstandene erfindungsgemässe Azoverbindung durch Kaliumchlorid ausgefällt, abgesaugt und bei 60° unter reduziertem Druck getrocknet. Man kann die Azoverbindung auch durch Sprühtrocknung der wässrigen Lösung isolieren.

Es wird ein goldgelbes, elektrolythaltiges Pulver erhalten, das das Alkalimetallsalz, wie vorwiegend das Kaliumsalz bzw. das Natriumsalz der Formel

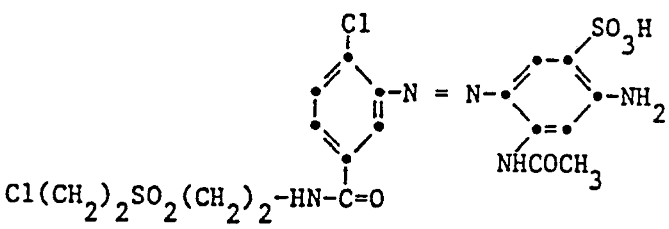

enthält. Die erfindungsgemässe Verbindung eignet sich hervorragend als Farbstoff und liefert nach den für faserreaktive Farbstoffe üblichen und bekannten Applikations- und Fixiermethoden auf Baumwolle und Wolle klare, wenig rotstichig gelbe Färbungen und Drucke mit sehr guten Echtheitseigenschaften, welche in der Beschreibung zuvor erwähnt sind.

Beispiel 95

34,1 Teile 4-Methyl-3-aminobenzoesäure-N'-β-(β'-chloräthylsulfonyl)äthylamid-hydrochlorid trägt man unter Rühren in 280 Teile Wasser ein. Nach Zugabe von 36 Teilen 31%iger Salzsäure kühlt man die Suspension auf 5° ab. Bei dieser Temperatur lässt man langsam 20 Volumenteile einer wässrigen 5n-Natriumnitritlösung zutropfen und rührt den Reaktionsansatz noch etwa eine Stunde nach. Ueberschüssige salpetrige Säure wird anschliessend mit etwas Amidosulfonsäure zerstört.

Zur Durchführung der Kupplungsreaktion wird eine Lösung von 23 Teilen 3-Amino-acetanilid-1-sulfonsäure in etwa 150 Teilen Wasser zur obigen Diazoniumsalzlösung zugegeben, wobei der pH-Wert mittels Natriumbicarbonat auf etwa 4 eingestellt und gehalten wird. Nach beendigter Kupplung wird der pH-Wert auf 5,5 bis 6 erhöht und die entstandene erfindungsgemässe Azoverbindung durch Kaliumchlorid ausgefällt, abgesaugt und bei 60° unter reduziertem Druck getrocknet. Man kann die Azoverbindung auch durch Sprühtrocknung der wässrigen Lösung isolieren.

Es wird ein goldgelbes, elektrolythaltiges Pulver erhalten, das das Alkalimetallsalz, wie vorwiegend das Kaliumsalz bzw. das Natriumsalz der Formel

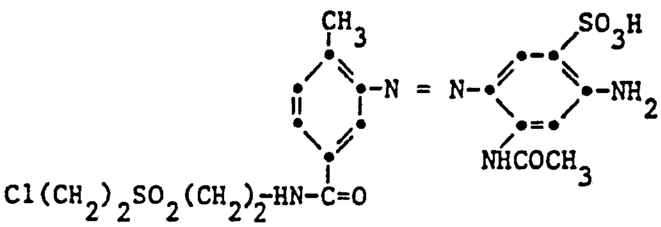

enthält. Die erfindungsgemässe Verbindung eignet sich hervorragend als Farbstoff und liefert nach den für faserreaktive Farbstoffe üblichen und bekannten Applikations- und Fixiermethoden auf Baumwolle und

Wolle klare, wenig rotstichig gelbe Färbungen und Drucke mit sehr guten Echtheitseigenschaften, welche in der Beschreibung zuvor erwähnt sind.

Weitere Reaktivfarbstoffe können erhalten werdend, wenn die in der Folgenden Tabelle 2 genannten Diazo- und Kupplungskomponenten nach den Verfahren der vorstehenden Beispiele miteinander umsetzt.

Tabelle 2

| Beispiel | Diazokomponente | Kupplungskomponente | Farbton auf Baumwolle |
|---|---|---|---|
| 96 | $D_1$ | 3-Amino-acryloylamino-benzol-4-sulfonsäure | rotstichig gelb |
| 97 | $D_2$ | 3-Amino-isobutyrylamino-benzol-1-sulfonsäure | rotstichig gelb |
| 98 | $D_{12}$ | 3-Amino-3'-chlorbenzoylamino-benzol-4-sulfonsäure | gelbstichig orange |
| 99 | $D_{13}$ | 3-Amino-3'-sulfobenzoylamino-benzol-4-sulfonsäure | gelbstichig orange |
| 100 | $D_5$ | 3-Amino-methansulfonylamino-benzol-4-sulfonsäure | rotstichig gelb |
| 101 | $D_6$ | 3-Amino-β-hydroxyäthylsulfonyl-amino-benzol-4-sulfonsäure | rotstichig gelb |
| 102 | $D_7$ | 3-Amino-benzolsulfonylamino-benzol-4-sulfonsäure | gelbstichig orange |
| 103 | $D_8$ | 3-Amino-chloracetanilid-4-sulfonsäure | rotstichig gelb |
| 104 | $D_{12}$ | 3-Amino-N'-cyclohexylureido-benzol-4-sulfonsäure | gelbstichig orange |
| 105 | $D_{13}$ | 3-Amino-β-carboxyacryloylamino-benzol-4-sulfonsäure | rotstichig gelb |
| 106 | $D_1$ | 3-Amino-propionylamino-benzol-4-sulfonsäure | rotstichig gelb |
| 107 | $D_9$ | 3-Amino-isobutyrylamino-benzol-4-sulfonsäure | gelb |
| 108 | $D_5$ | 3-Amino-N'-cyclohexylureido-benzol-4-sulfonsäure | gelbstichig orange |
| 109 | $D_1$ | 3-Amino-p-tosylamino-benzol-4-sulfonsäure | rotstichig gelb |
| 110 | $D_2$ | 3-Amino-äthylsulfonylamino-benzol-4-sulfonsäure | gelbstichig orange |

Tabelle 2 (Fortsetzung)

| Beispiel | Diazokomponente | Kupplungskomponente | Farbton auf Baumwolle |
|---|---|---|---|
| 111 | $D_1$ | 3-Amino-N'-isopropylureido-benzol-4-sulfonsäure | gelbstichig orange |
| 112 | $D_3$ | 3-Amino-acetanilid-4-sulfonsäure | gelb |
| 113 | $D_9$ | 3-Amino-acetanilid-4-sulfonsäure | gelb |
| 114 | $D_4$ | 3-Amino-acetanilid-4-sulfonsäure | rotstichig orange |
| 115 | $D_1$ | 3-Aminobenzoylamino-benzol-4-sulfonsäure | orange |
| 116 | $D_2$ | 3-Amino-benzolsulfonylamino-benzol-4-sulfonsäure | gelbstichig orange |
| 117 | $D_4$ | 3-Amino-propionylamino-benzol-4-sulfonsäure | rotstichig gelb |
| 118 | $D_{12}$ | 3-Amino-ureidobenzol-4-sulfonsäure | gelbstichig orange |
| 119 | $D_{13}$ | 3-Amino-ureidobenzol-4-sulfonsäure | gelbstichig orange |
| 120 | $D_5$ | 3-Amino-N'-(4"-chlorphenyl)-ureido-benzol-4-sulfonsäure | orange |
| 121 | $D_6$ | 3-Amino-3'-sulfobenzoylamino-benzol-4-sulfonsäure | rotstichig gelb |
| 122 | $D_7$ | 3-Amino-acetanilid-4-sulfonsäure | braunstichig rot |
| 123 | $D_8$ | 3-Amino-acetanilid-4-sulfonsäure | gelbstichig orange |
| 124 | $D_{12}$ | 3-Amino-acetanilid-4-sulfonsäure | gelb |
| 125 | $D_{13}$ | 3-Amino-acetanilid-4-sulfonsäure | goldgelb |
| 126 | $D_1$ | 3-Amino-vinylsulfonylamino-benzol-4-sulfonsäure | gelbstichig orange |
| 127 | $D_9$ | 3-Amino-chlorpropionylamino-benzol-4-sulfonsäure | orange |

Tabelle 2 (Fortsetzung)

| Beispiel | Diazokomponente | Kupplungskomponente | Farbton auf Baumwolle |
|---|---|---|---|
| 128 | $D_5$ | 3-Amino-sulfopropionylamino-benzol-4-sulfonsäure | rotstichig gelb |
| 129 | $D_1$ | 3-Amino-benzoylamino-benzol-4-sulfonsäure | gelb |
| 130 | $D_1$ | 3-Amino-ureidobenzol-4-sulfonsäure | gelb |
| 131 | $D_{12}$ | 3-Amino-N'-phenylureido-benzol-4-sulfonsäure | gelb |
| 132 | $D_{13}$ | 3-Amino-acetanilid-4-sulfonsäure | gelbstichig orange |
| 133 | $D_9$ | 3-Amino-ureidobenzol-4-sulfonsäure | gelbstichig orange |
| 134 | $D_1$ | 3-Amino-benzanilid-4-sulfonsäure | gelbstichig orange |
| 135 | $D_4$ | 3-Amino-acetanilid-4-sulfonsäure | gelbbraun |
| 136 | $D_5$ | 3-Amino-acetanilid-4-sulfonsäure | rotstichig gelb |
| 137 | $D_4$ | 3-Amino-benzanilid-4-sulfonsäure | rotstichig gelb |
| 138 | $D_1$ | 3-Amino-acetanilid-4-sulfonsäure | gelbstichig orange |
| 139 | $D_7$ | 3-Amino-acetanilid-4-sulfonsäure | rotstichig gelb |
| 140 | $D_{12}$ | 3-Amino-acetanilid-4-sulfonsäure | gelbstichig orange |
| 141 | $D_{13}$ | 3-Amino-ureidobenzol-4-sulfonsäure | gelbstichig orange |

Die Diazokomponenten $D_1$ bis $D_{13}$ entsprechen den im Anschluss an die Tabelle 1 genannten Verbindungen.

Beispiel 142

Die salzsauer diazotierte Lösung von 33 Teilen 4-Aminobenzoesäure-N'-β-(β'-chloräthylsulfonyl)-äthylamid-hydrochlorid wird bei 0 bis 5° und pH = 5 bis 6 zu einer Lösung von 28,4 Teilen 1-(2'-Sulfophenyl-3-carboxy-5-pyrazolon gegeben und gekuppelt. Der gelbe Monoazofarbstoff wird isoliert; er entspricht der Formel

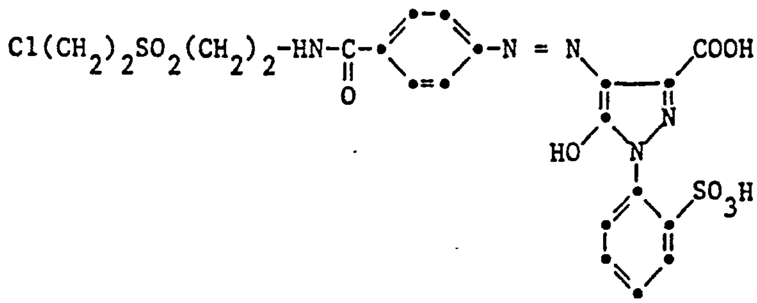

Nach der in Beispiel 142 beschriebenen Verfahrensweise lassen sich auch die Reaktivfarbstoffe der folgenden Formeln herstellen.

143 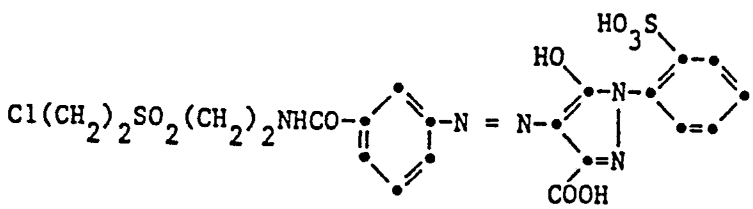 gelb

144 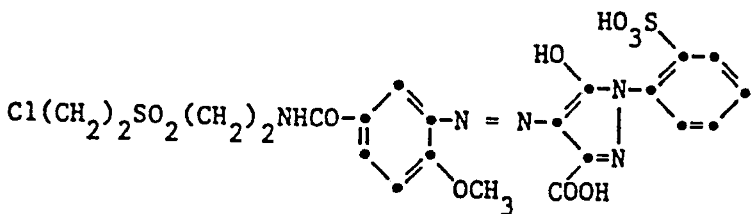 goldgelb

145 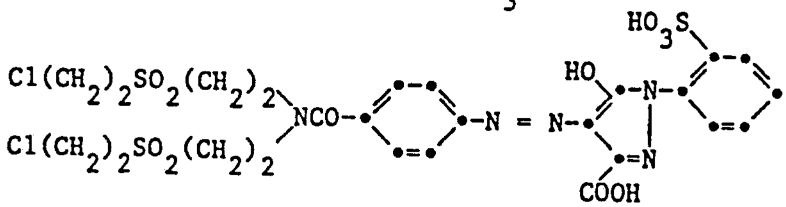 gelb

146 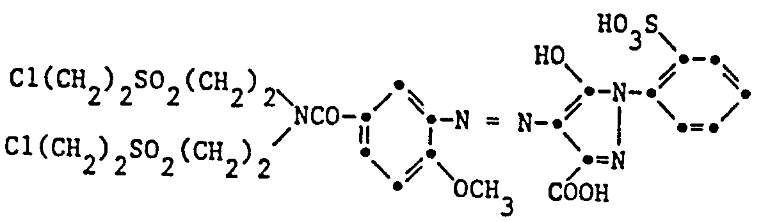 goldgelb

147 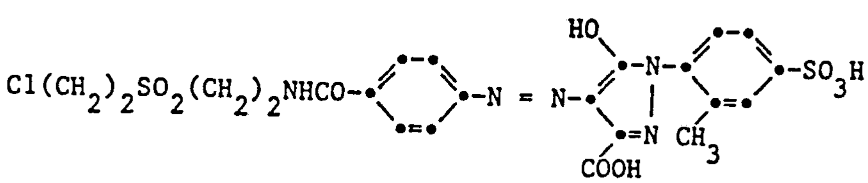 gelb

148 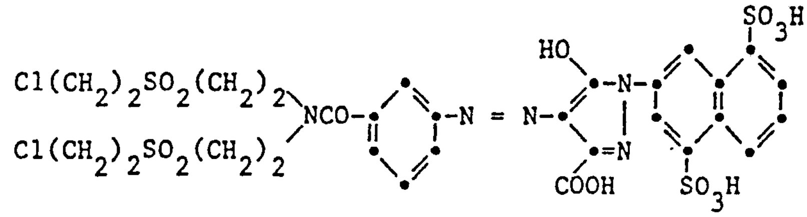 goldgelb

149 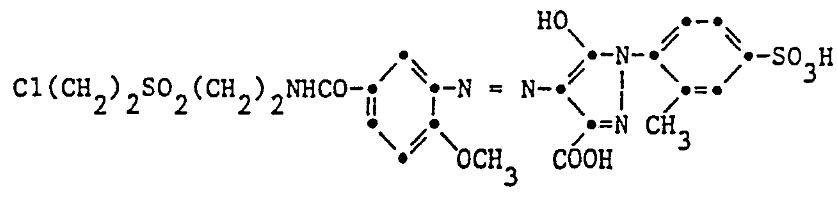 goldgelb

150 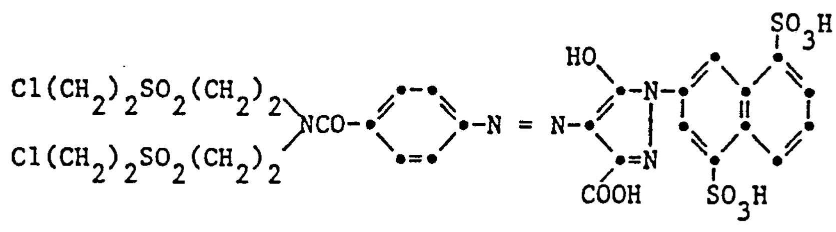 gelb

151 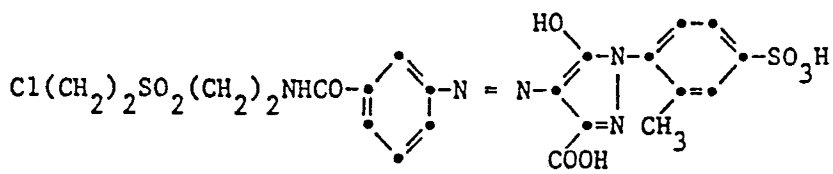 gelb

152 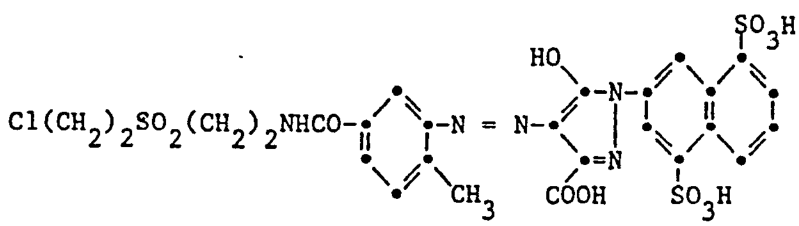 gelb

Beispiel 153

Die salzsauer diazotierte Lösung von 32 Teilen 4-Aminobenzoesäure-N'-β-(β'-chloräthylsulfonyl)-äthylamid-hydrochlorid wird bei 0 bis 5° und pH = 5 bis 7 zu einer Lösung von 29 Teilen 1-Aethyl-3-aminocarbonyl-4-methyl-5-sulfomethyl-6-hydroxypyridon-2 gegeben und gekuppelt. Der gelbe Monoazofarbstoff wird isoliert, er entspricht der Formel

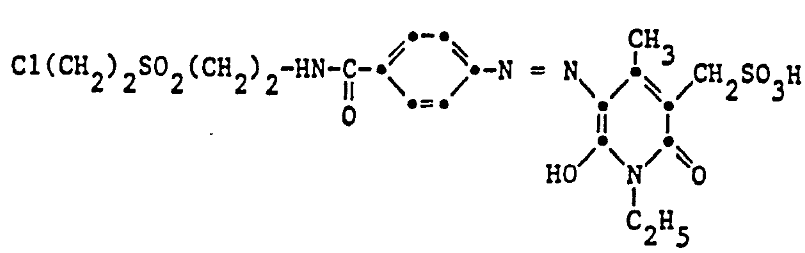

Beispiel 154

Die salzsauer diazotierte Lösung von 32 Teilen 3-Aminobenzoesäure-N'-β-(β'-chloräthylsulfonyl)-äthylamid-hydrochlorid wird bei 0 bis 5° und pH = 5 bis 7 zu einer Lösung von 29 Teilen 1-Aethyl-3-aminocarbonyl-4-methyl-5-sulfomethyl-6-hydroxypyridon-2 gegeben und gekuppelt. Der gelbe Monoazofarbstoff wird isoliert, er entspricht der Formel

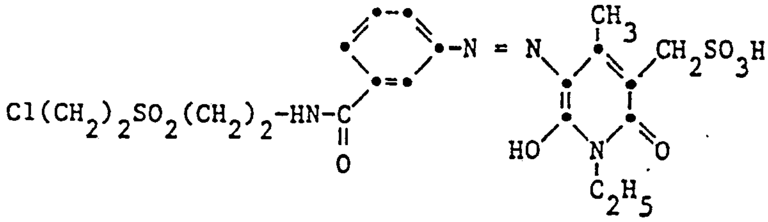

Beispiel 155

Zu einer salzsauer diazotierten Lösung von 66 Teilen 3-Aminobenzoesäure-N'-β-(β'-chloräthylsulfonyl)-äthylamid-hydrochlorid werden 1200 Teile einer neutralen Lösung von 56,2 Teilen 2-Acetylamino-5-naphthol-7-sulfonsäure in 400 Teilen Eis/Wasser-Mischung getropft und bei pH 6 bis 7 gekuppelt. Anschliessend wird der Farbstoff mit Kochsalz abgeschieden.

Das Pressgut wird durch Zerstäubungstrocknung getrocknet. Man erhält ein Pulver, das Baumwolle in reinen orangen Tönen färbt, und folgende Struktur aufweist:

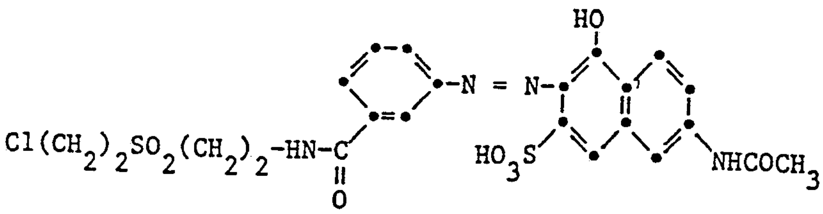

Weitere Farbstoffe, die nach der in Beispiel 155 gegebenen Vorschrift hergestellt werden können, sind die Reaktivfarbstoffe der folgenden Formeln.

156 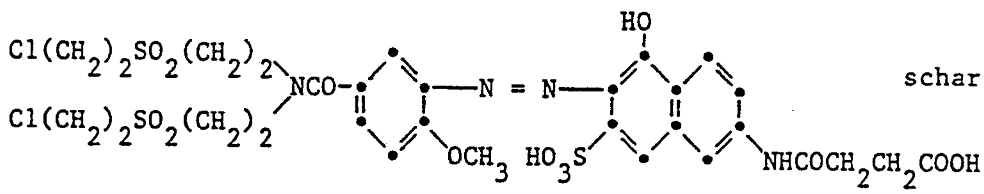 scharlach

157 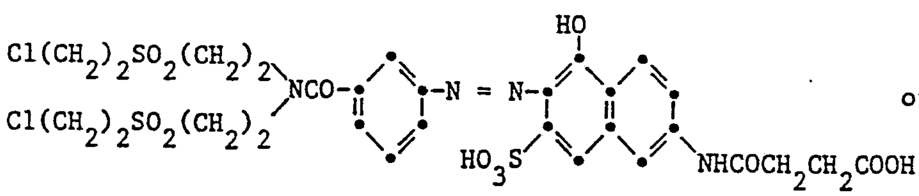 orange

158 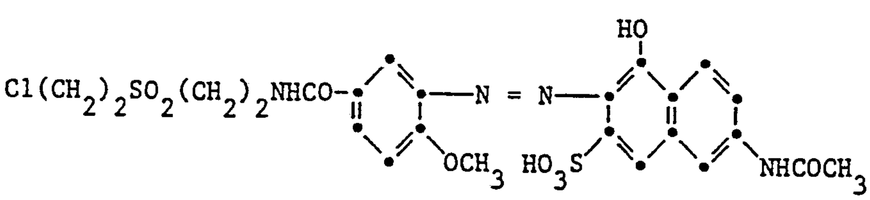 scharlach

159 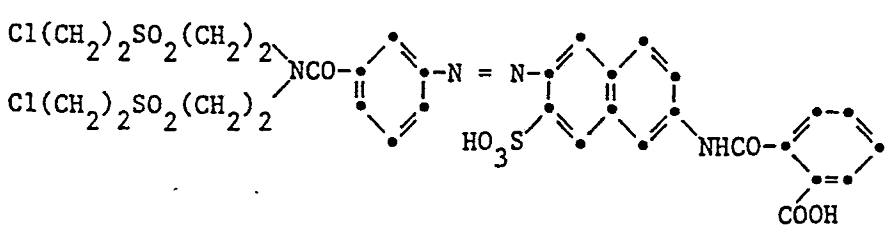 orange

160 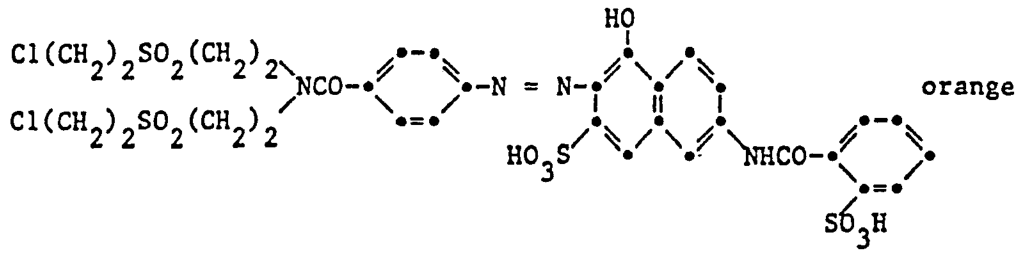 orange

161 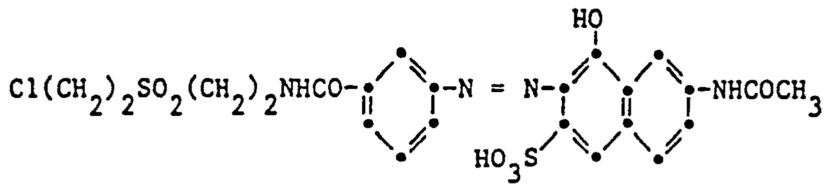 scharlach

162 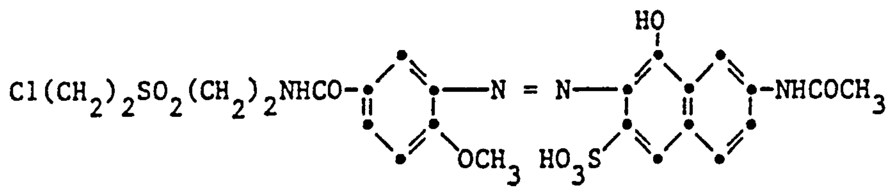 rot

163 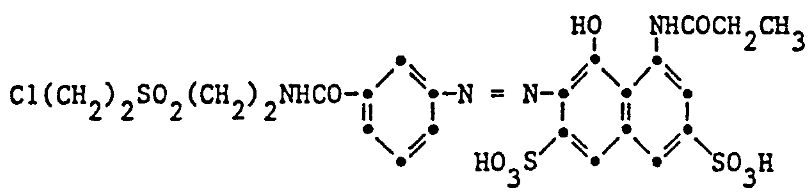 gelb- stichig rot

164 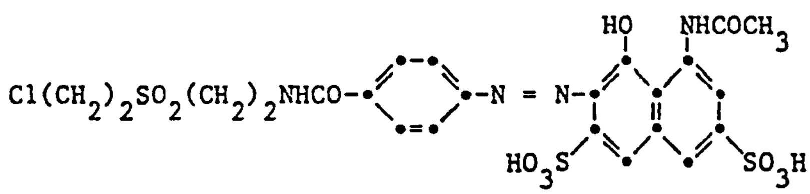 rot

165 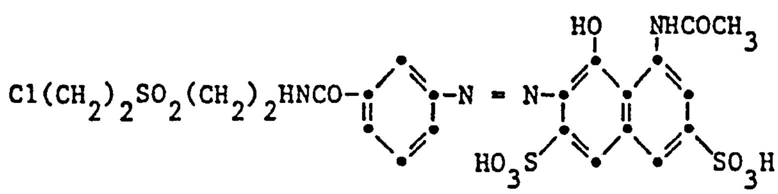 gelb- stichig rot

166 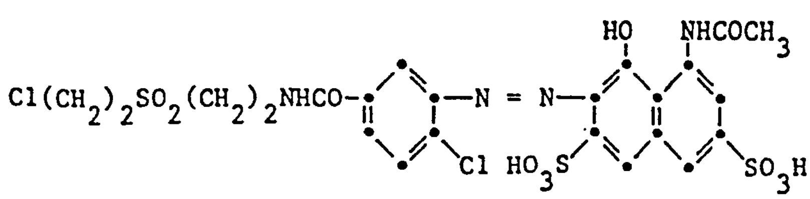 gelb- stichig rot

167 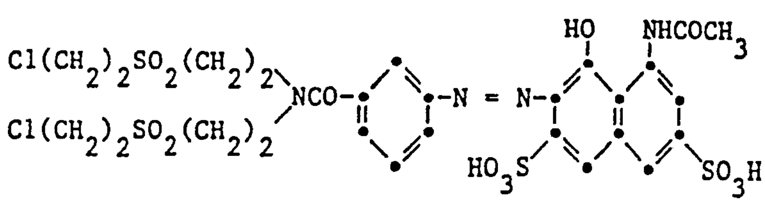 gelb- stichig rot

168 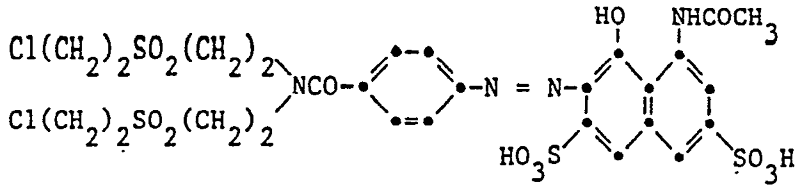 gelb-stichig rot

169 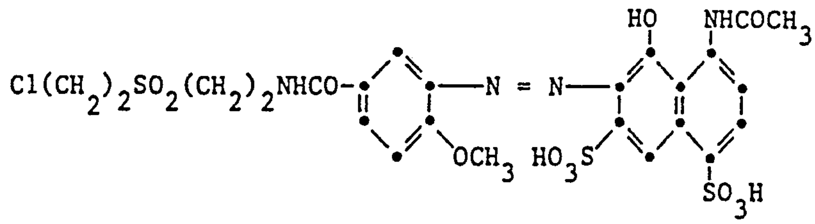 rot

170 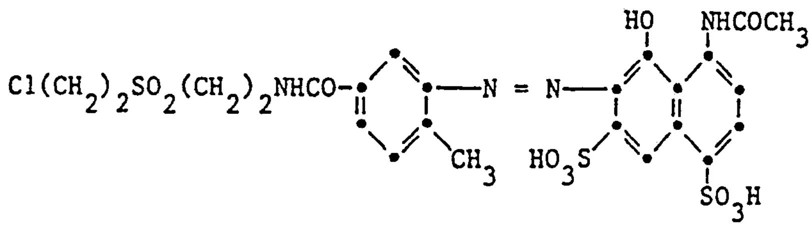 rot

171 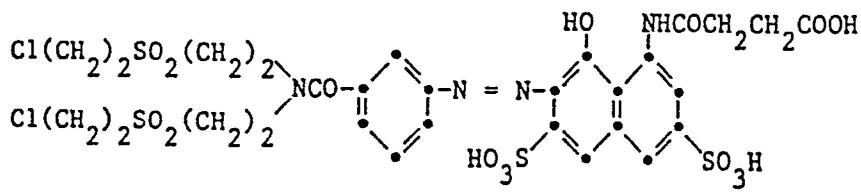 gelb-stichig rot

172 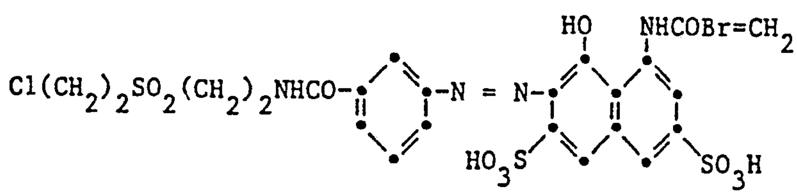 gelb-stichig rot

173 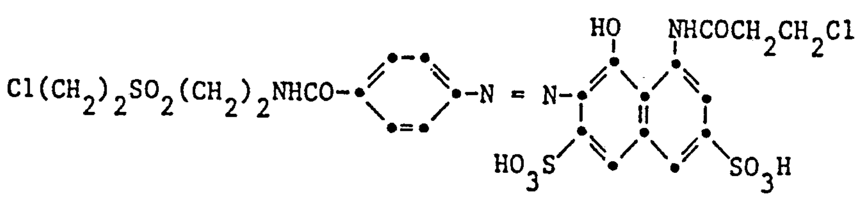 gelb-stichig rot

174 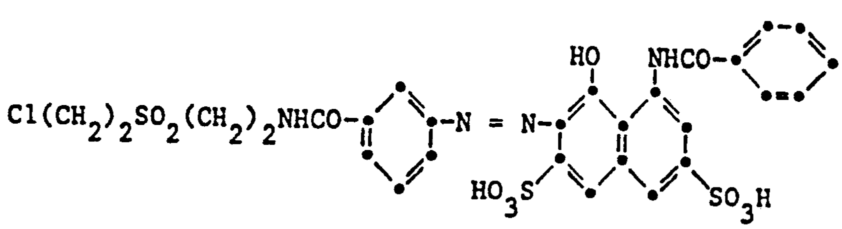 rot

175 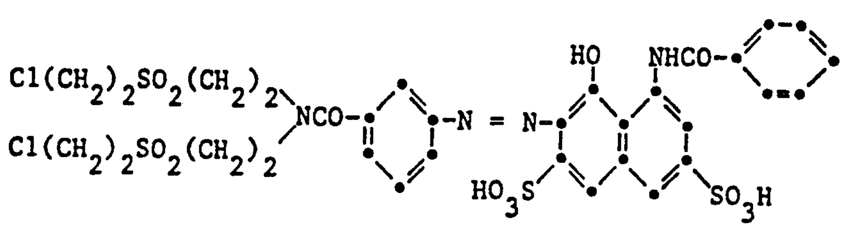 rot

176 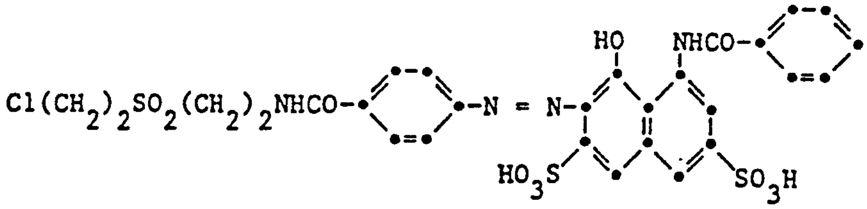 rot

177 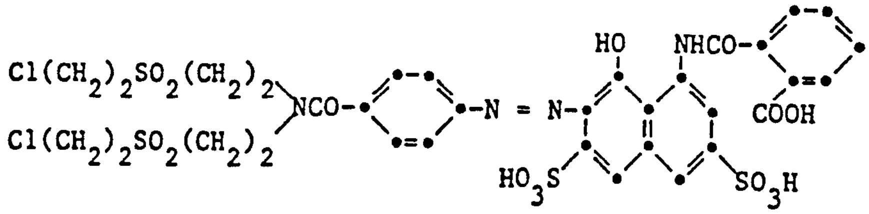 rot

178 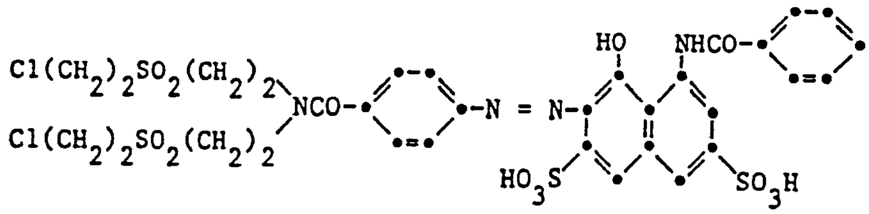 rot

179 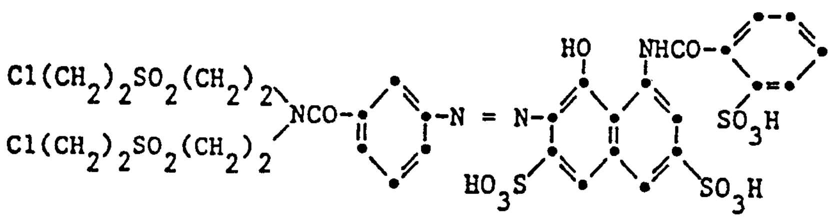 rot

180 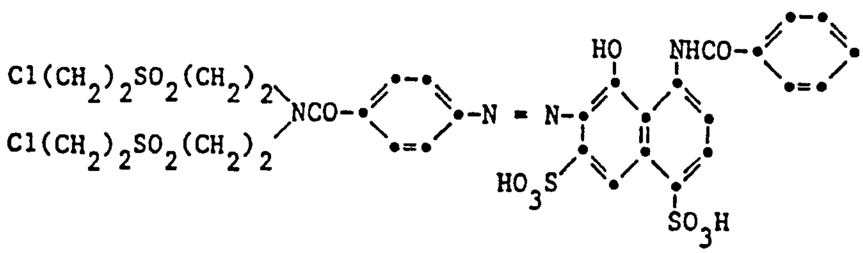 rot

181 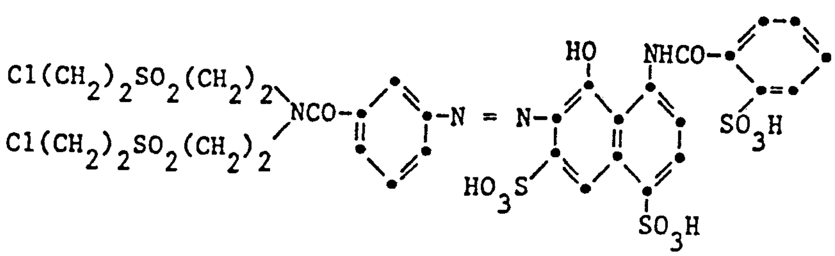 rot

182 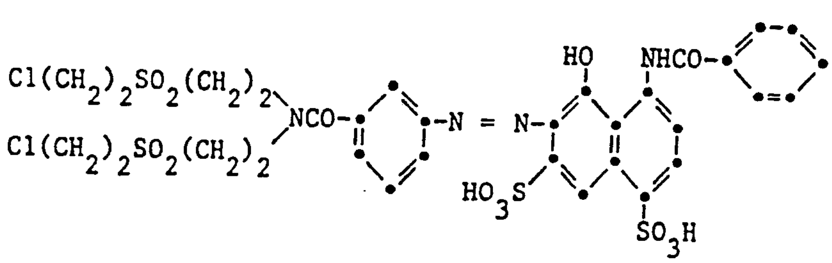 rot

183 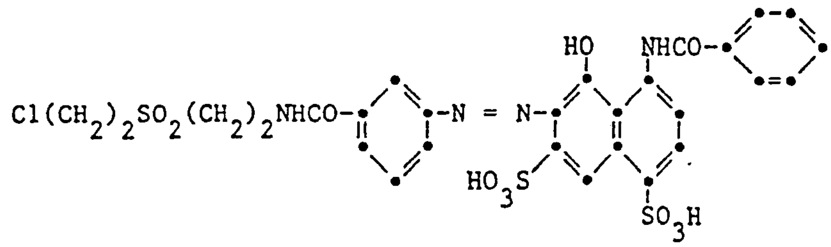 rot

184 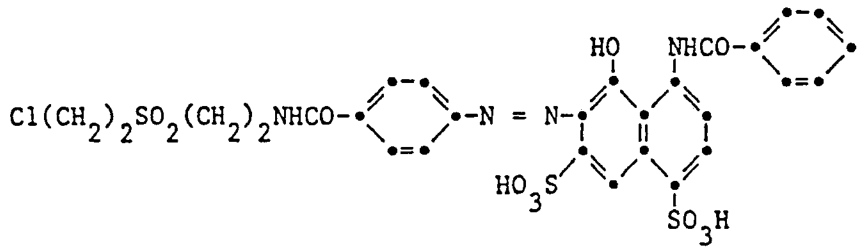 rot

Beispiel 185

186 Teile 3-Nitrobenzoylchlorid werden in 1200 Teilen Nitrobenzol bei Raumtemperatur gelöst. Anschliessend gibt man 210 Teile β-(β-Chloräthylsulfonyl)-äthylamino-hydrochlorid zu. Unter gutem Rühren und überleiten von Stickstoff wird die Suspension auf 100° erhitzt und bei dieser Temperatur ca. 3 Stunden gerührt (bis man 2 Mol Salzsäure mit Natronlauge neutralisiert hat). Es entsteht eine Lösung, die dann auf Raumtemperatur abgekühlt wird. Dabei fällt das Produkt aus. Dieses wird abfiltriert und das Nutschgut mit methanolischer Lösung nitrobenzolfrei gewaschen. (Anstelle der methanolischen Behandlung kann man das Nitrobenzol durch Wasserdampfdestillation entfernen.)

Man erhält 235 Teile analysereines Produkt folgender Konstitution:

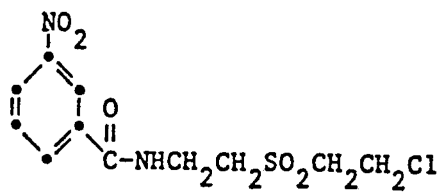

Analyse: theor. Chlor kovalent 11,1 %

gef. Chlor kovalent 11,2 %.

Beispiel 186

52 Teile 2'-Aminoäthyl-2-thioäthanol werden in 600 Teilen Chloroform bei Raumtemperatur gelöst. Anschliessend gibt man 50 Teile Natriumcarbonat bei 10 bis 20° zu. Dann werden 74 Teile 3-Nitrobenzoylchlorid gelöst in 200 Teilen chloroform zugetropft (leicht exotherm) und 1 Stunde bei Raumtemperatur gerührt. Nun werden nochmals 50 Teile Natriumcorbonat zugegeben und 12 Stunden bei Raumtemperatur reagieren gelassen. Das entstandene Kochsalz wird entfernt und das Chloroform wird mittels Hochvakuum abdestilliert. Der Rückstand wird nun nach bekannten Verfahren mit Chlor/Salzsäure-Mischung zu dem in Beispiel 185 erwähnten Produkt oxydiert.

Beispiel 187

Dasselbe Proudkt erhält man auch, wenn anstelle von Nitrobenzol, o-Dichlorbenzol, Trichlorbenzol, Toluol oder Benzol etc. verwendet wird.

Beispiel 188

Verfährt man wie im Beispiel 185 und benützt anstelle von 186 Teilen 3-Nitrobenzoylchlorid dieselbe Menge 4-Nitrobenzoylchlorid, so erhält man folgendes Produkt:

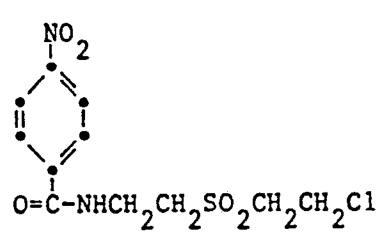

Beispiel 189

Verfährt man wie im Beispiel 185 und verwendet anstelle von 210 Teilen β-(β-Chloräthylsulfonyl)-äthylamin eine äquimolare Menge des γ-(β-Chloräthylsulfonyl)propylamin-hydrochlorids, so erhält man folgendes Produkt:

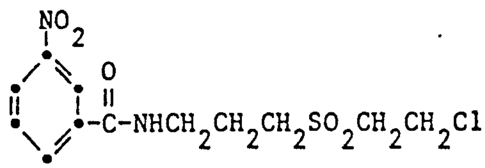

Beispiel 190

Verfährt man wie im Beispiel 185 und verwendet anstelle von 210 Teilen β-(β-Chloräthylsulfonyl--äthylamin aquimolare Mengen von Bis-[β-(β'-chloräthylsulfonyl)-äthyl]-amin-hydrochlorid, so erhält man folgendes Produkt:

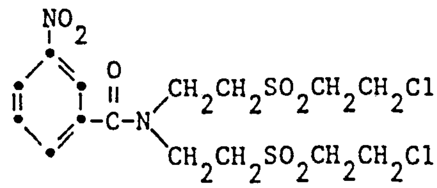

Beispiel 191

Verfährt man wie im Beispiel 188 und verwendet anstelle von 210 Teilen β-(β'-Chloräthylsulfonyl)-äthylamin äquimolare Mengen von Bis-[β-(β'-chloräthylsulfonyl)-äthyl]-amin-hydrochlorid, so erhält man folgendes folgendes Produk

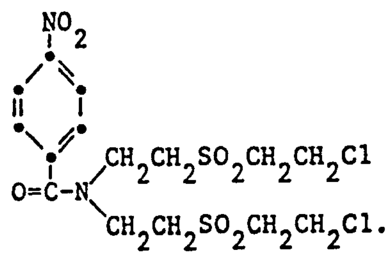

In analoger Weise, wie in den Beispielen 185 bis 191 beschrieben, können die Zwischenprodukte der folgenden Formeln synthetisiert werden.

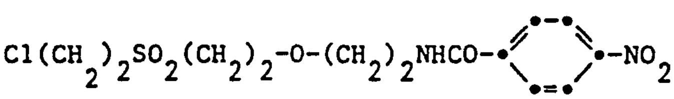

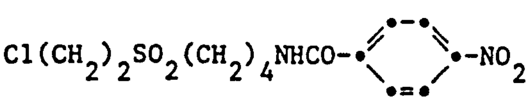

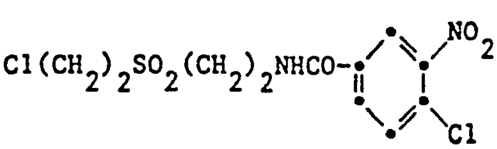

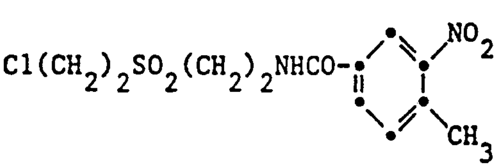

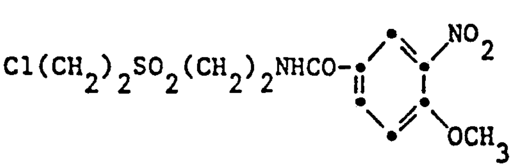

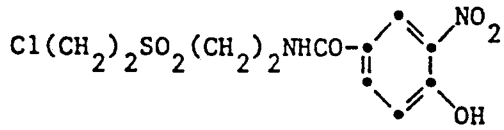

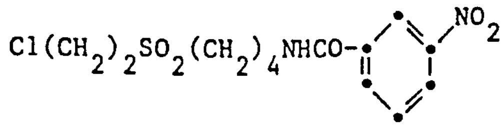

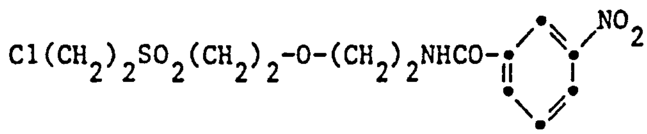

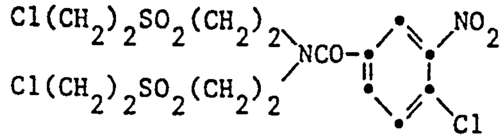

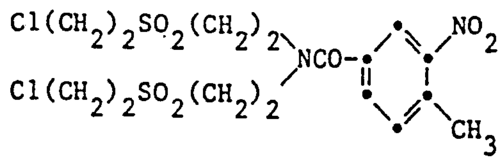

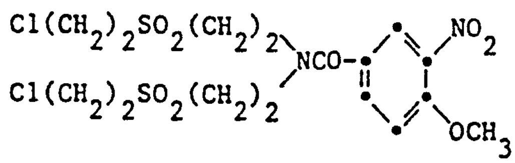

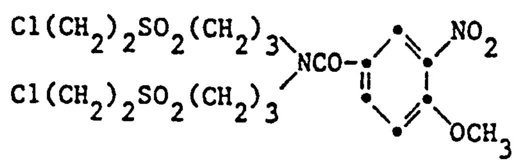

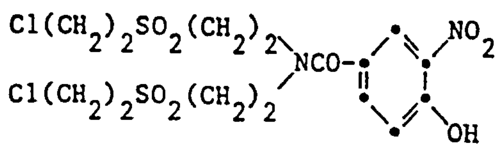

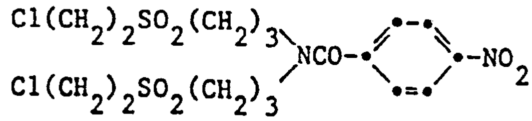

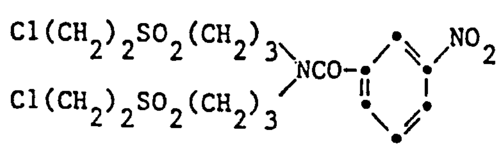

Die in den Beispielen 185 bis 191 beschriebenen und im Anschluss an Beispiel 191 genannten Zwischenprodukte werden katalytisch in Alkohol, Acetessigester oder Tetrahydrofuran bei Raumtemperatur bis etwa 40°C mit Pd/Kohlenstoff hydriert oder mit Fe/Salzäure reduziert. Dabei geht die Nitrogruppe in die $-NH_2$ Gruppe über. Die so erhaltenen Amine werden erfindungsgemäss als Ausgangsverbindungen zur Herstellung der Reaktivfarbstoffe der Formel (1) verwendet.

Beispiel 192

Die salzsauer diazotierte Lösung von 37 Teilen 1-Amino-4-β-(β'-chloräthylsulfonyl)-äthylaminocarbonyl-benzol-2-sulfonsäure wird bei 0 bis 5° und pH 4 bis 5 zu einer Lösung von 23 Teilen 3-Aminoacetanilid-4-sulfonsäure gegeben und gekuppelt. Der gelbe Monoazofarbstoff wird isoliert. Er entspricht der Formel

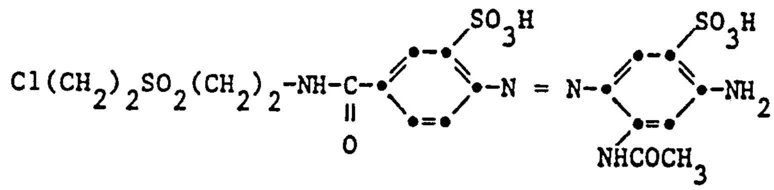

Beispiel 193

Die salzsauer diazotierte Lösung von 43,5 Teilen 1-Amino-4-β-(β'-sulfatoäthylsulfonyl)-äthylaminocarbonyl-benzol-2-sulfonsäure wird bei 0 bis 5° und pH 4 bis 5 zu einer Lösung von 23 Teilen 3-Aminoacetanilid-4-sulfonsäure gegeben und gekuppelt. Der gelbe Monoazofarbstoff wird isoliert, er entspricht der Formel

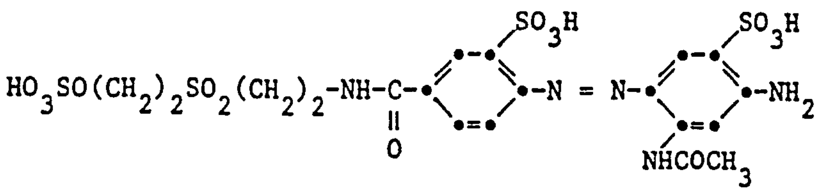

Beispiel 194

Die unter den Beispielen 192 und 193 erwähnten Farbstoffe werden bei Raumtemperatur bei pH 10 während 30 Minuten vinyliert. Der pH-Wert wird mit Salzsäure auf 6 zurückgestellt. Der Monoazofarbstoff wird isoliert. Er entspricht der Formel

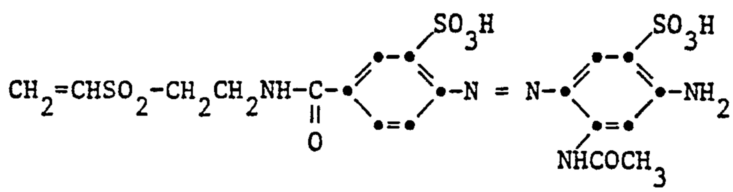

Beispiel 195

Die salzsauer diazotierte Lösung von 37 Teilen 1-Amino-4-β-(β'-chloräthylsulfonyl)-äthylaminocarbonyl-benzol-2-sulfonsäure wird bei 0 bis 5° und pH 5 bis 6 zu einer Lösung von 28,4 Teilen 1-(4'-Sulfophenyl)-3-carboxy-5-pyrazolon gegeben und gekuppelt. Der gelbe Monoazofarbstoff wird isoliert; er entspricht der Formel

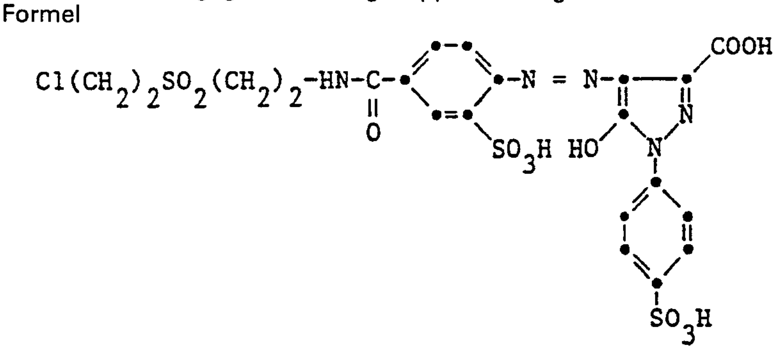

Beispiel 196

Die salzsauer diazotierte Lösung von 43,5 Teilen 1-Amino-4-β-(β'-sulfatoäthylsulfonyl)-äthylaminocarbonyl-benzol-2-sulfonsäure wird bei 0 bis 5° und pH 5 bis 7 zu einer Lösung von 29 Teilen 1-Aethyl-3-aminocarbonyl-4-methyl-5-sulfomethyl-6-hydroxypyridon-2 gegeben und gekuppelt. Der gelbe Monoazofarbstoff wird isoliert, er entspricht der Formel

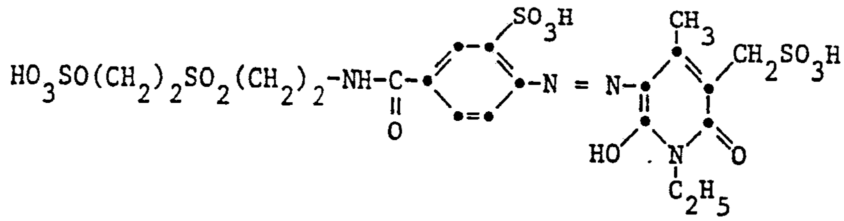

Beispiel 197

Zu einer salzsauer diazotierten Lösung von 87 Teilen 1-Amino-4-β-(β'-sulfatoäthylsulfonyl)-äthyl-aminocarbonyl-benzol-2-sulfonsäure werden 1200 Teile einer neutralen Lösung von 56,2 Teilen 2-Acetylamino-5-naphthol-7-sulfonsäure in 400 Teilen Eis/Wasser-Mischung getropft und bei pH 6 bis 7 gekuppelt. Anschliessend wird der Farbstoff mit Kochsalz abgeschieden. Das Pressgut wird durch Zerstäubungstrocknung getrocknet. Man erhält ein Pulver, das Baumwolle in reinen orangen Tönen färbt, und folgende Struktur aufweist:

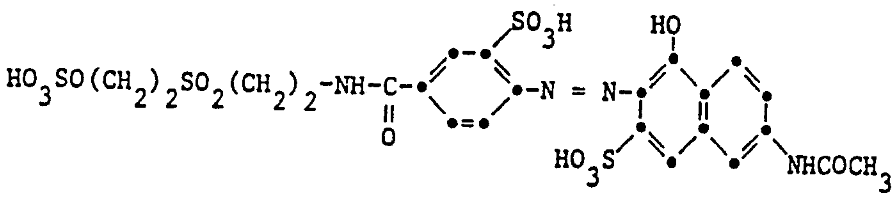

Weitere Farbstoffe, die nach der in den Beispielen 192 bis 197 gegebenen Vorschrift hergestellt werden können, sind die Reaktivfarbstoffe der folgenden Formeln:

198 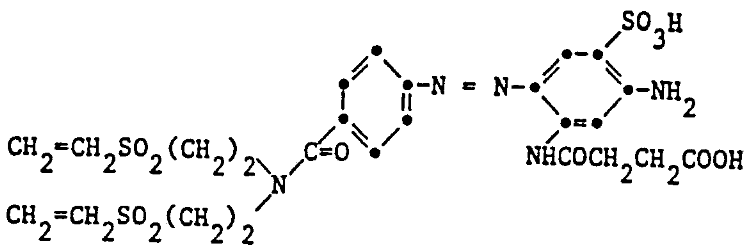 goldgelb

199 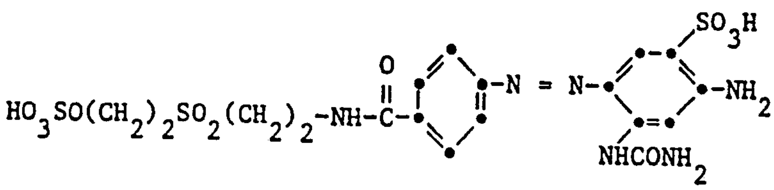 goldgelb

200 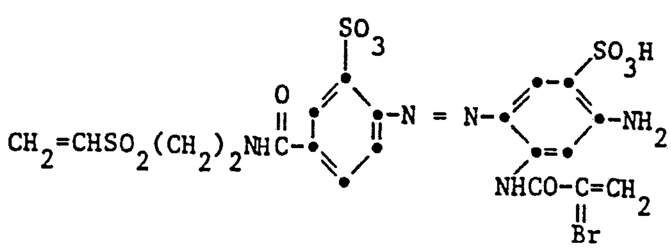 goldgelb

201 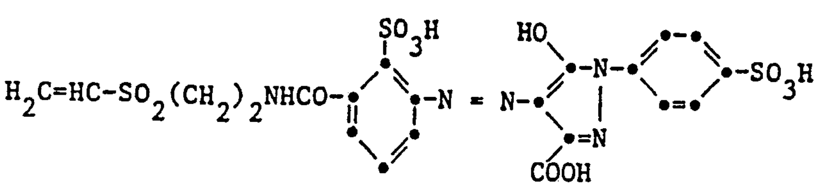 gelb

202 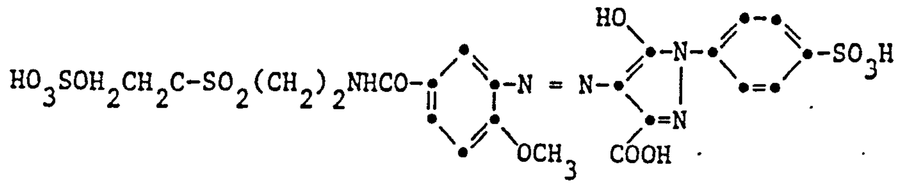 goldgelb

203 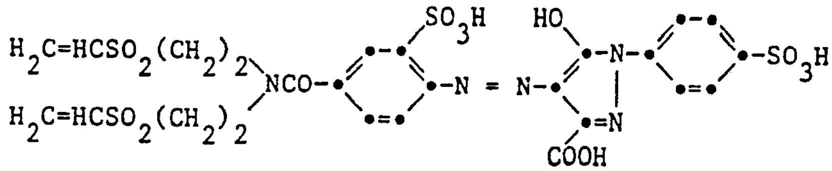 gelb

204 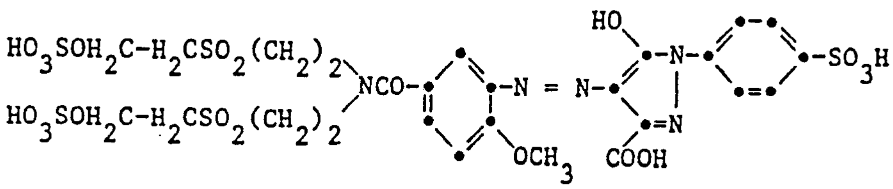 goldgelb

205 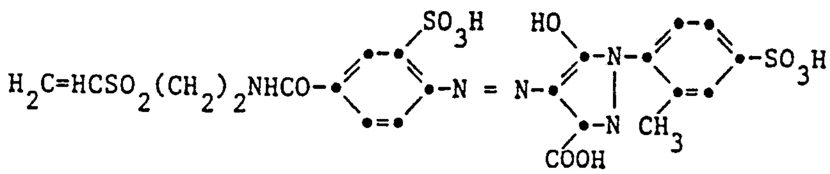 gelb

206 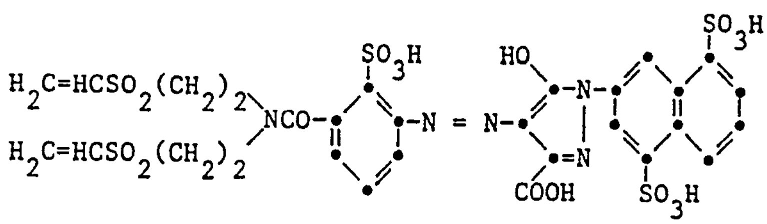 gelb

207 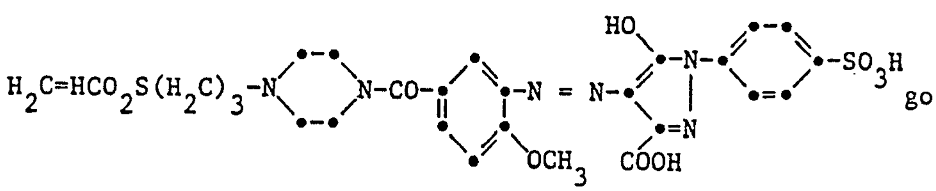 goldgelb

208 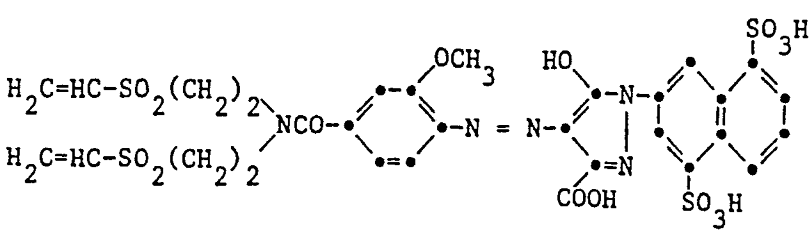 goldgelb

209 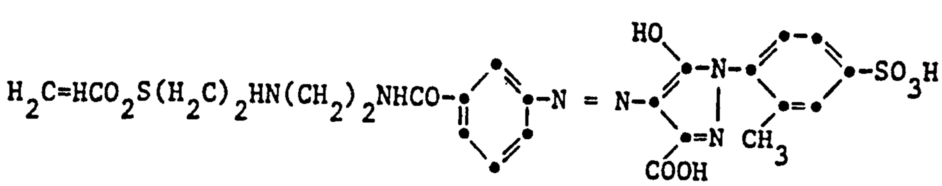 gelb

210 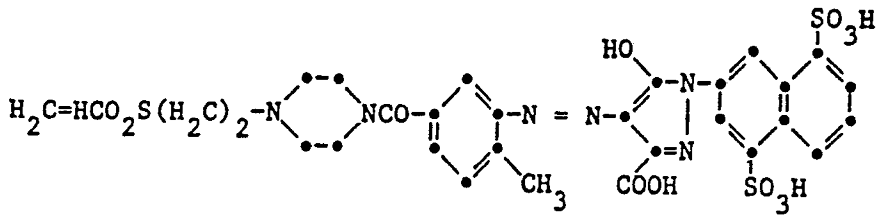 gelb

211 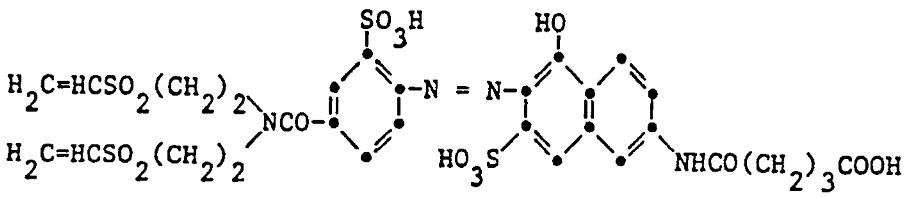 orange

212 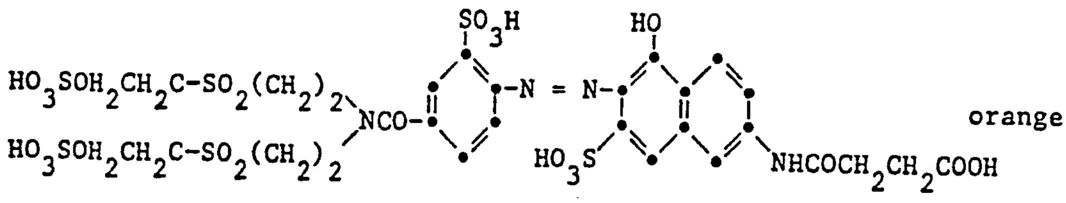 orange

213 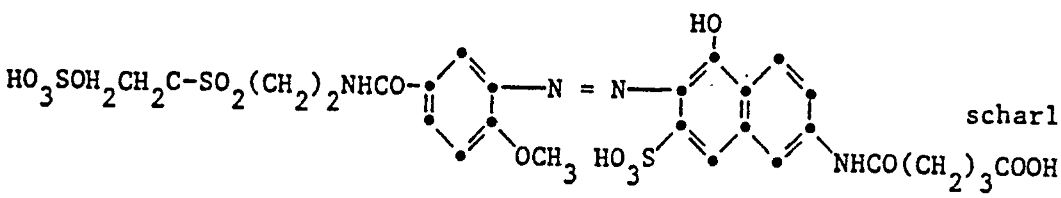 scharlach

214 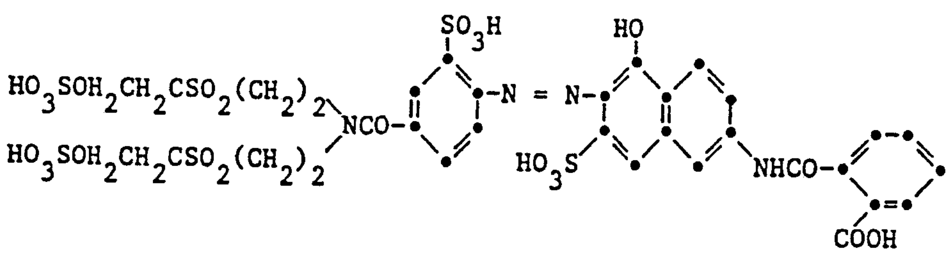 orange

215 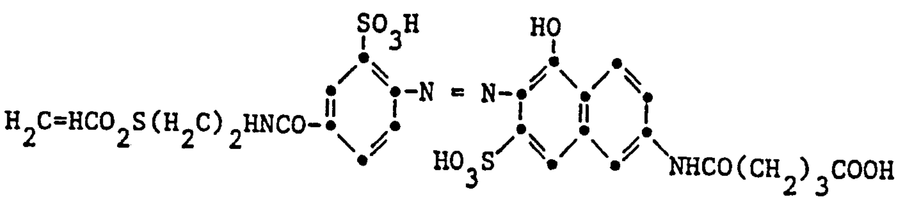 orange

216 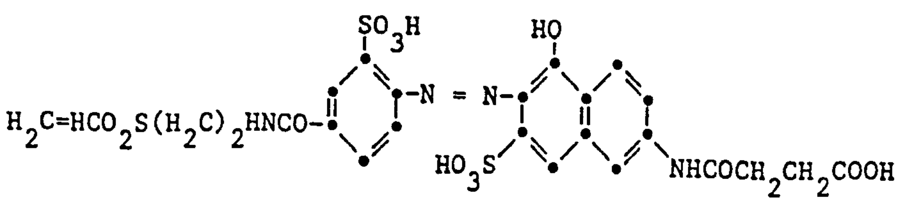 orange

217 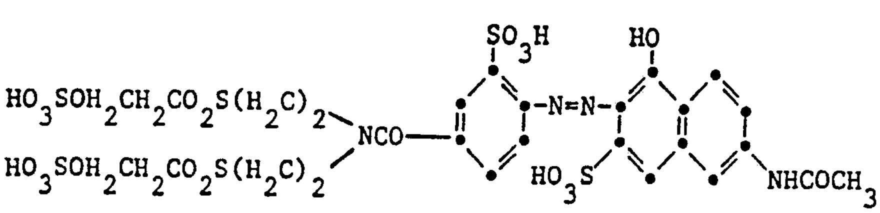 orange

218 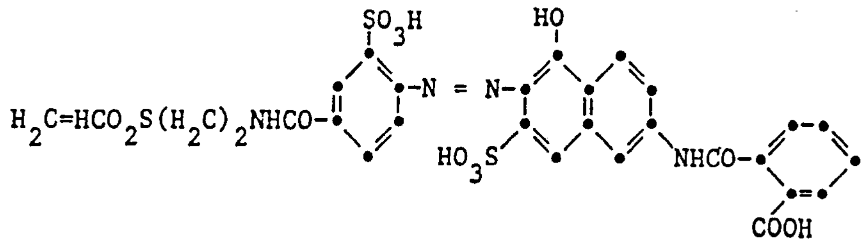 orange

219 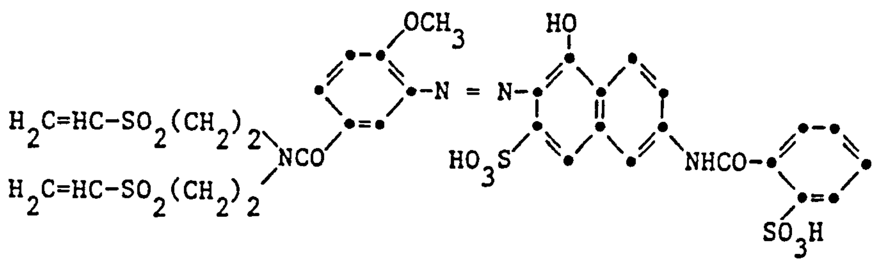 scharlach

220 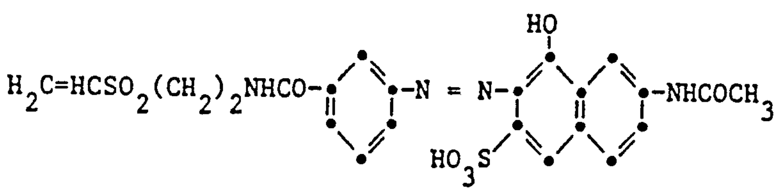 scharlach

221 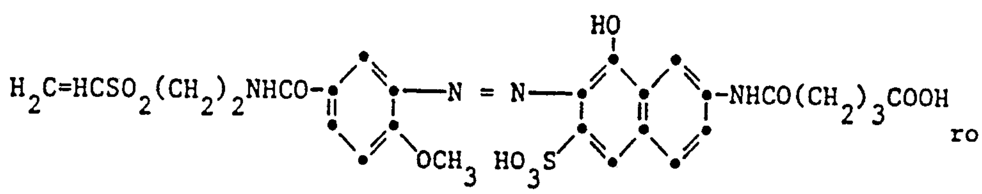 rot

222 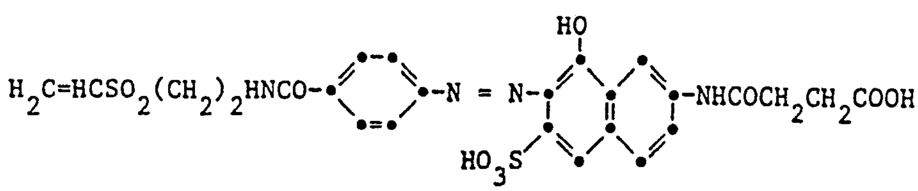 scharlach

223 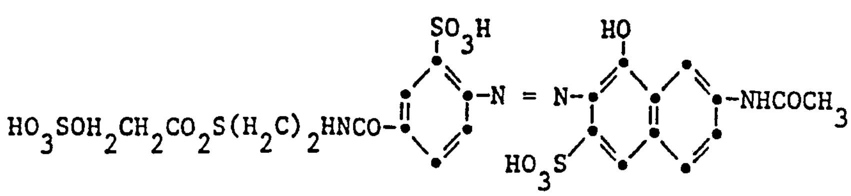 scharlach

224 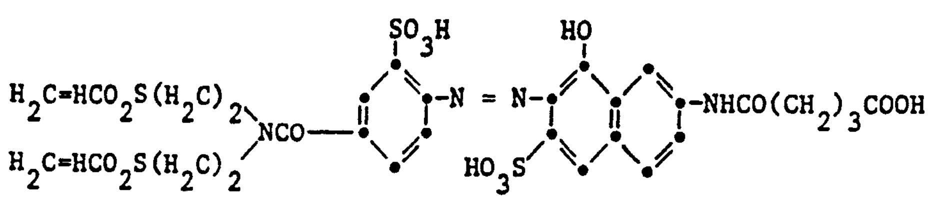 scharlach

225 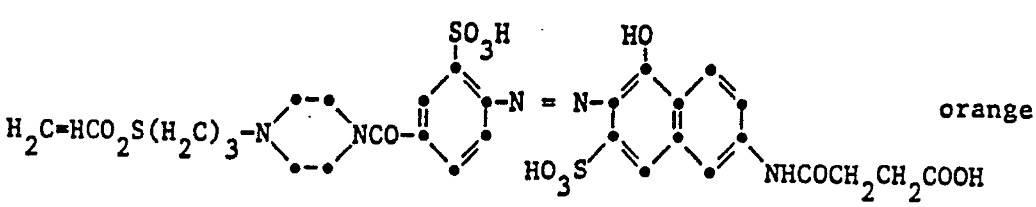 orange

226 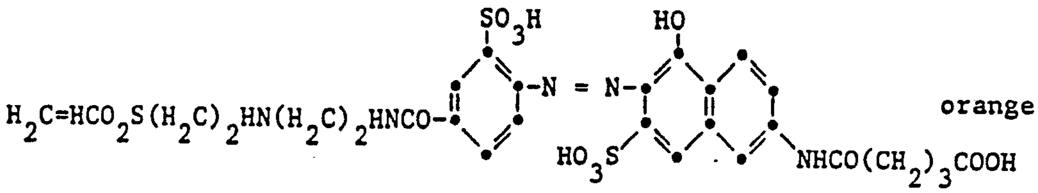 orange

227 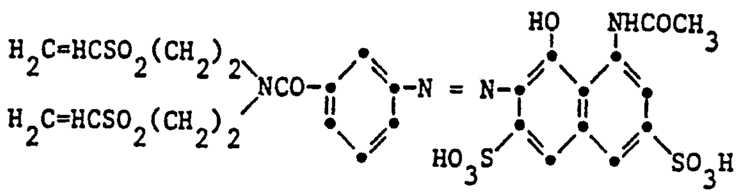 gelb-stichig rot

228 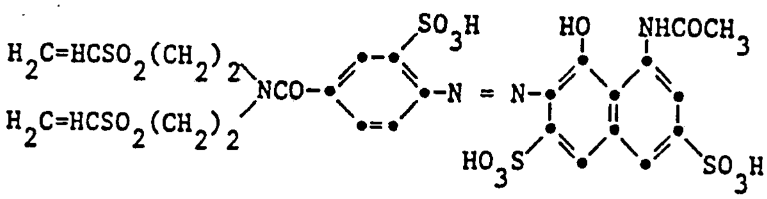 gelb-stichig rot

229 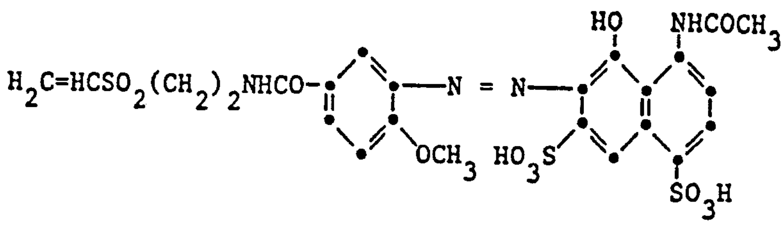 rot

230 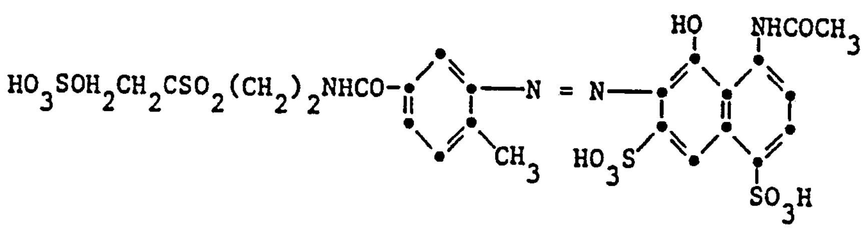 rot

231 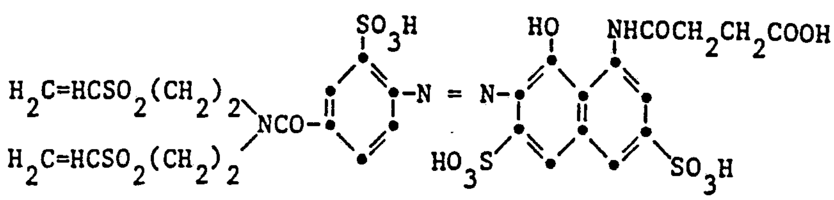 gelb-stichig rot

232 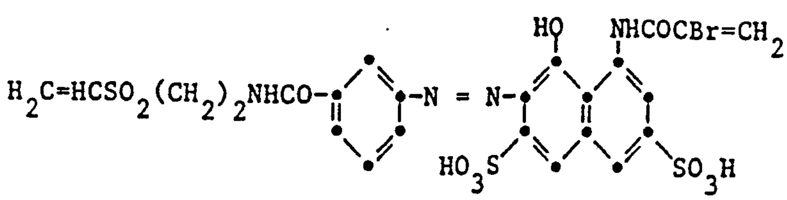 gelb-stichig rot

233 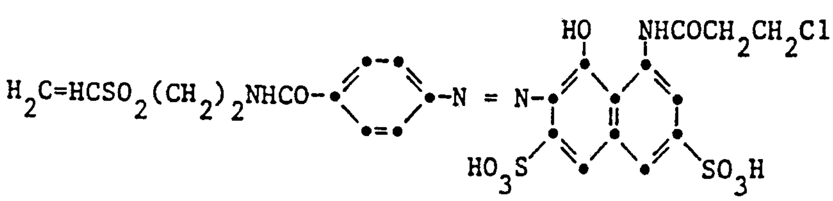 gelb-stichig rot

| | | |
|---|---|---|
| 234 | 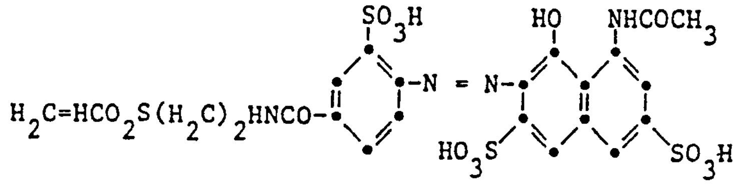 | gelb-stichig rot |
| 235 | 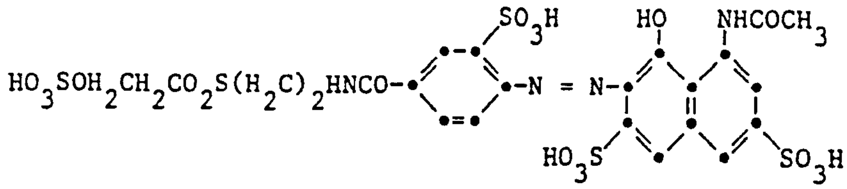 | gelb-stichig rot |
| 236 | 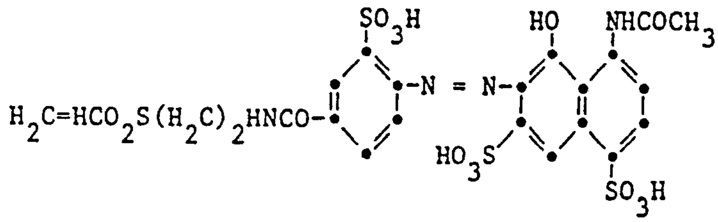 | schar-lach |
| 237 | 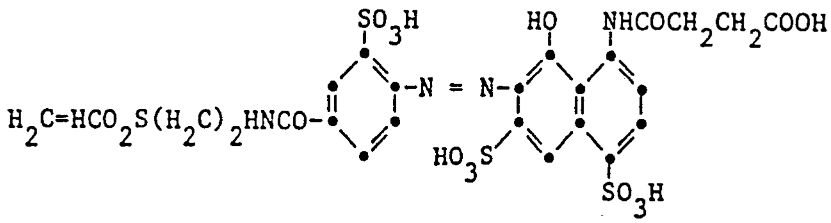 | schar-lach |
| 238 | 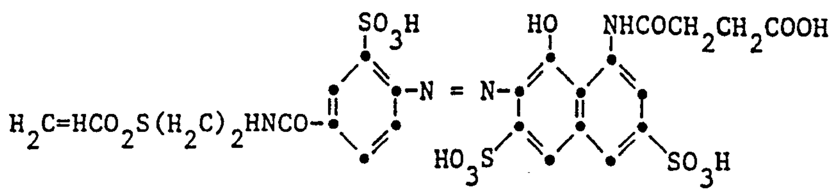 | gelb-stichig rot |
| 239 | 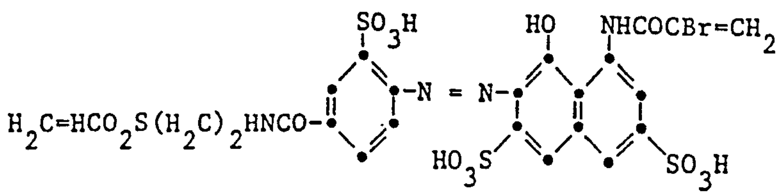 | gelb-stichig rot |
| 240 | 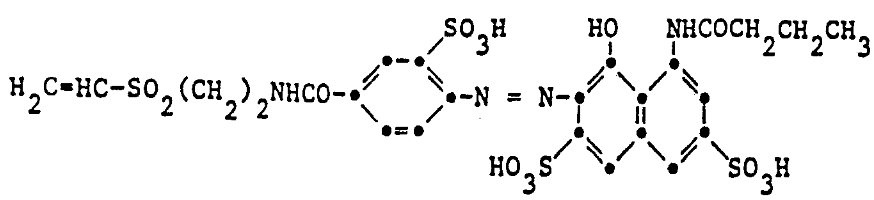 | gelb-stichig rot |
| 241 | 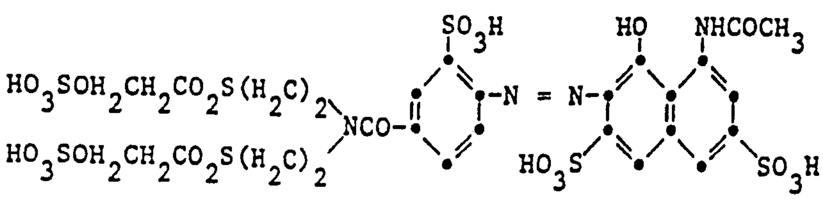 | gelb-stichig rot |

242 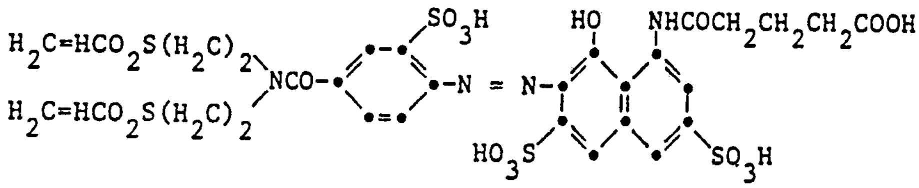 gelb-stichig rot

243 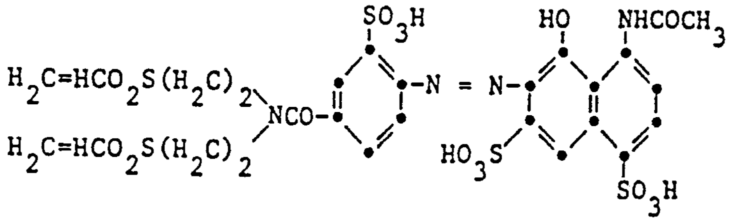 schar-lach

244 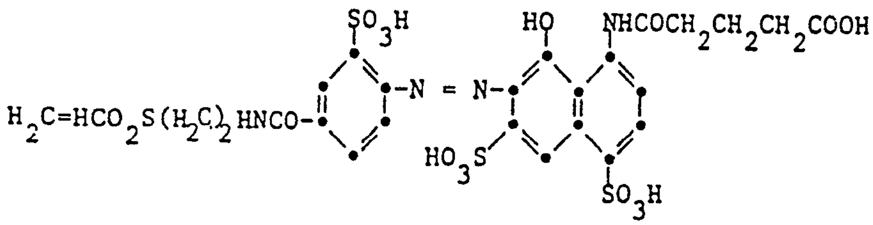 schar-lach

245 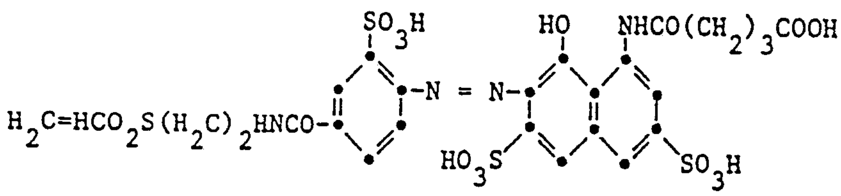 gelb-stichig rot

246 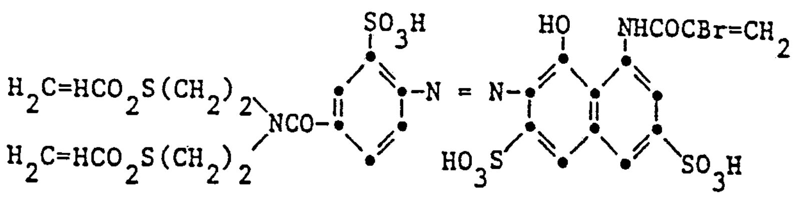 gelb-stichig rot

247 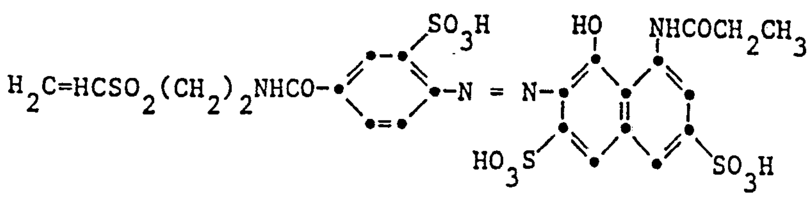 gelb-stichig rot

248 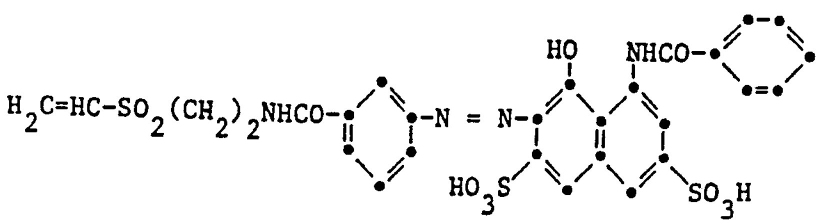 rot

249 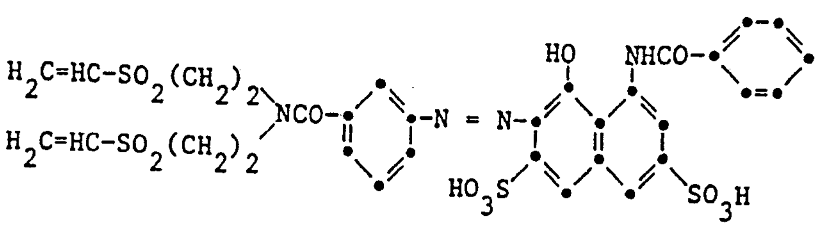 rot

250 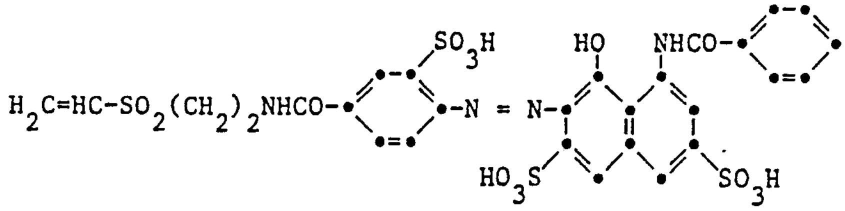 rot

251 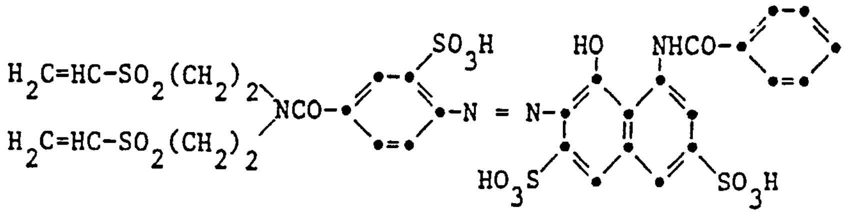 rot

252 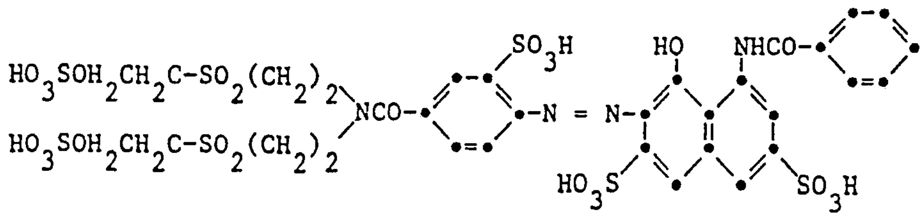 rot

253 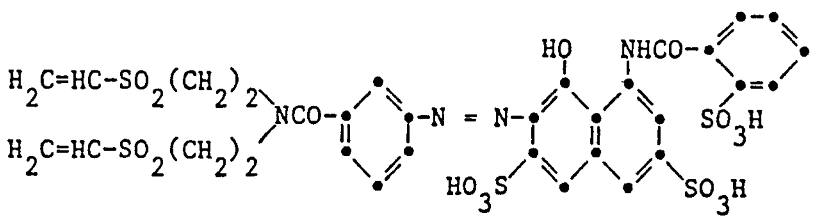 rot

254 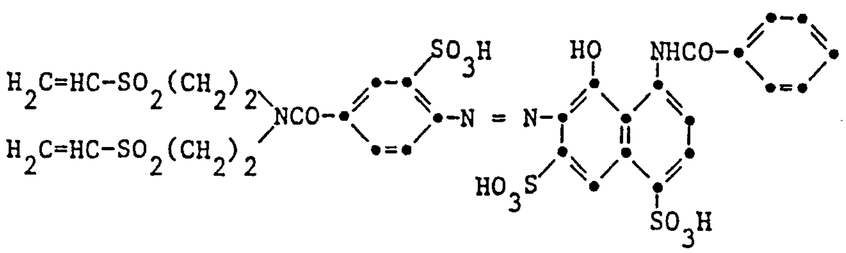 rot

255 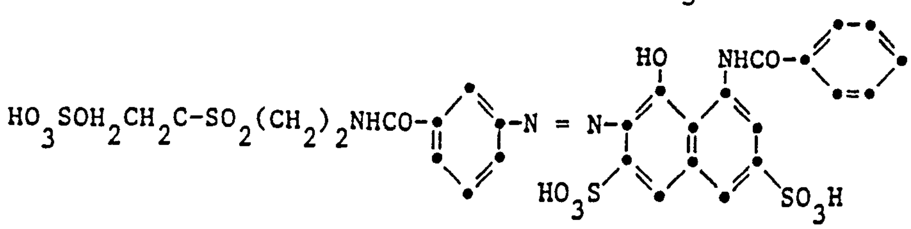 rot

256 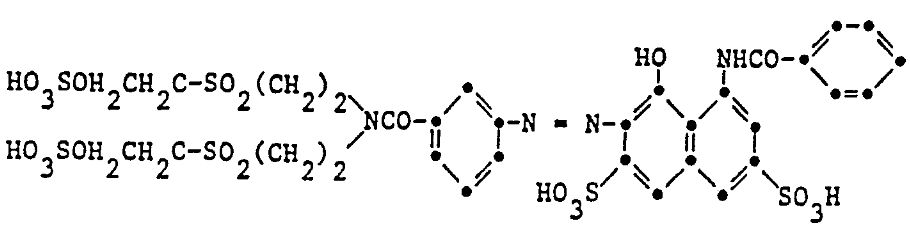 rot

257 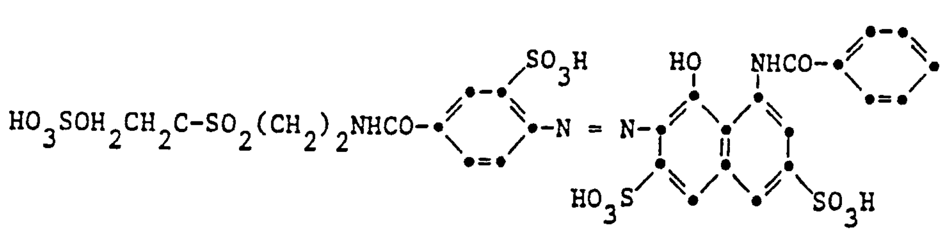 rot

258 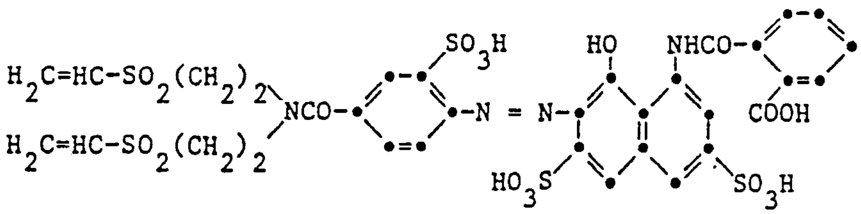 rot

259 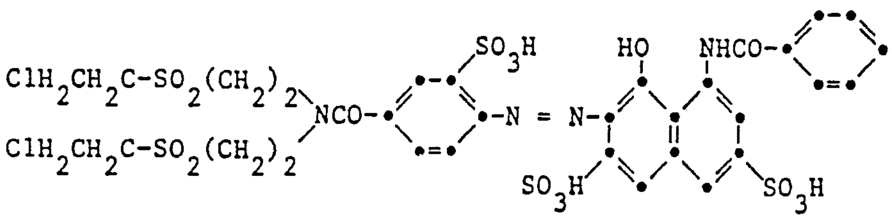 rot

260 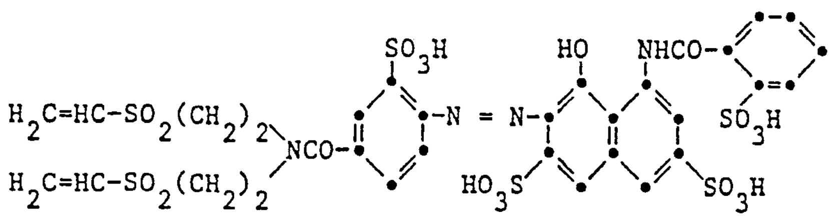 rot

261 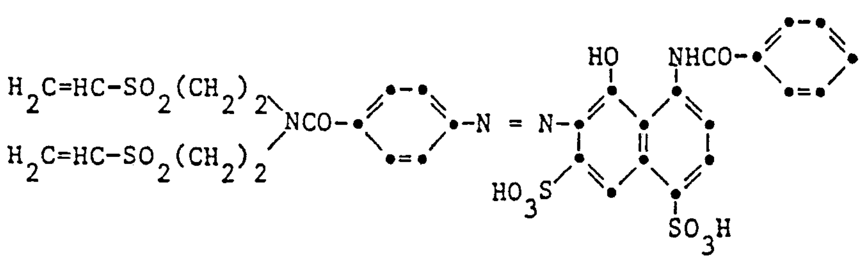 rot

262 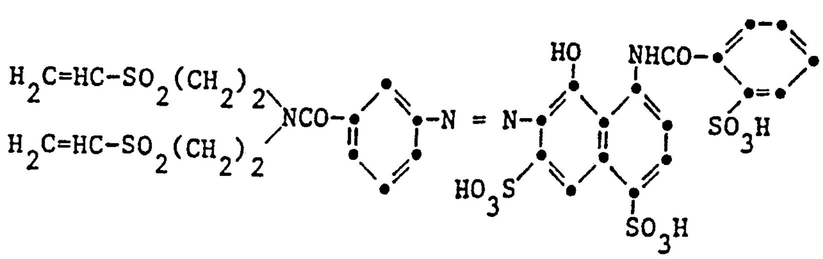 rot

263 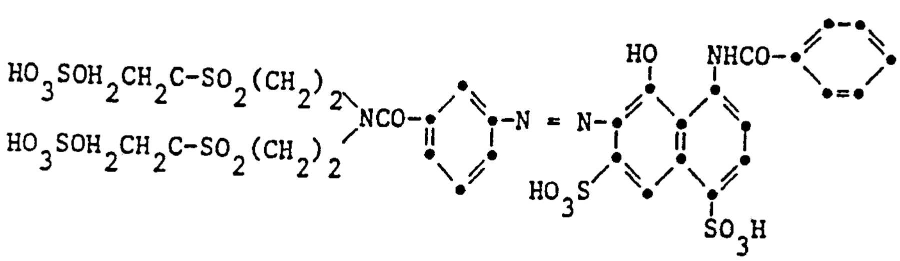 rot

264 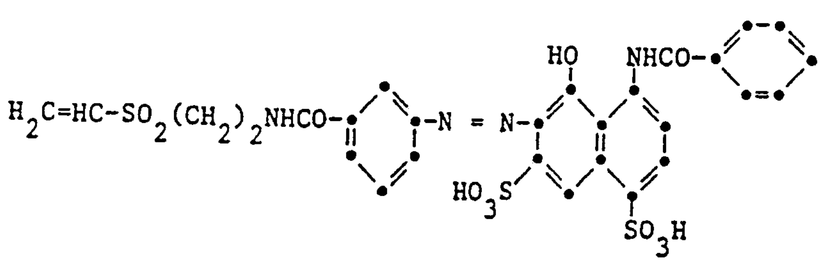 rot

265 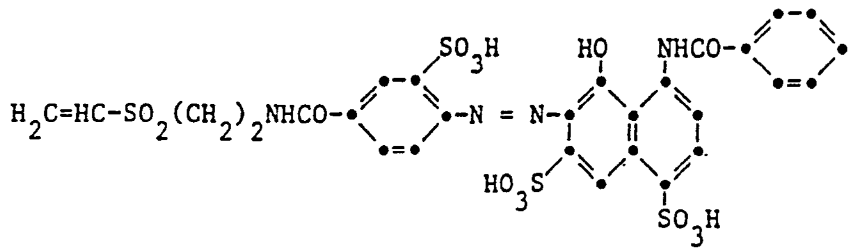 rot

266 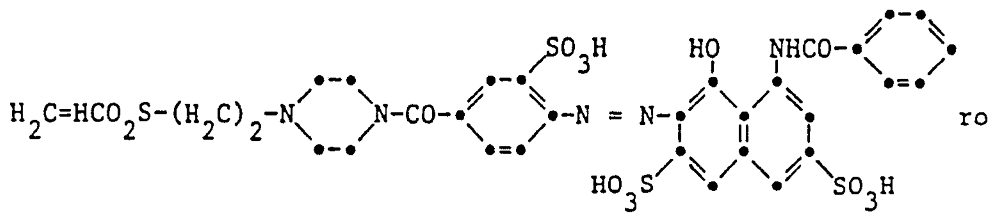 rot

267 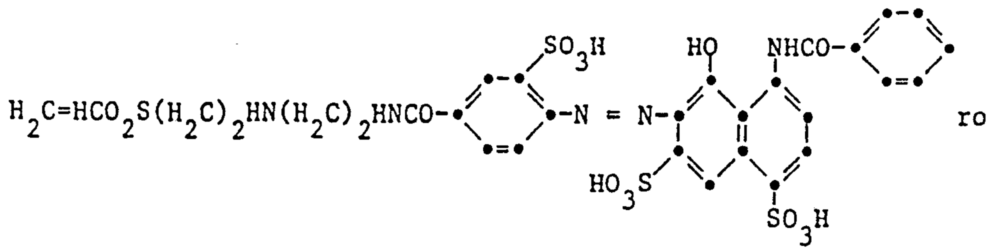 rot

268 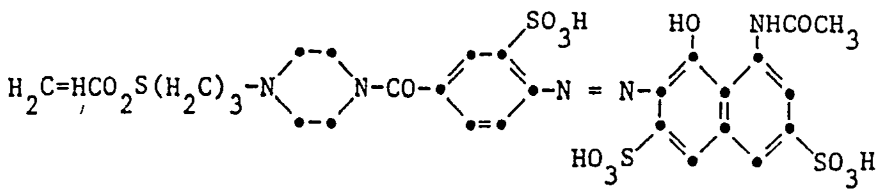 rot

269 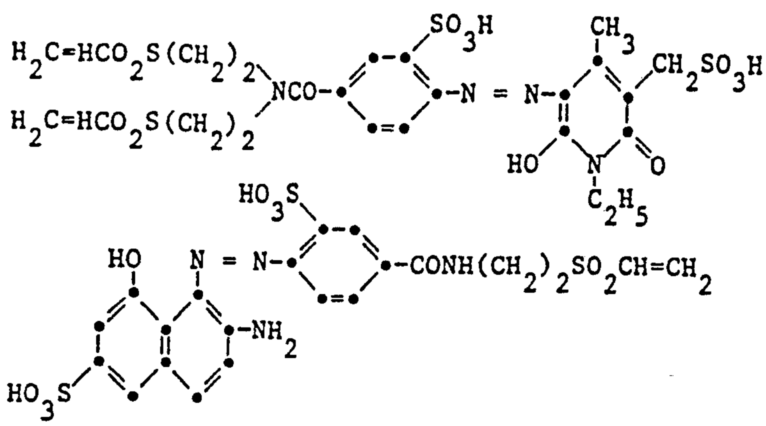 gelb

270 blaustichig rot

271 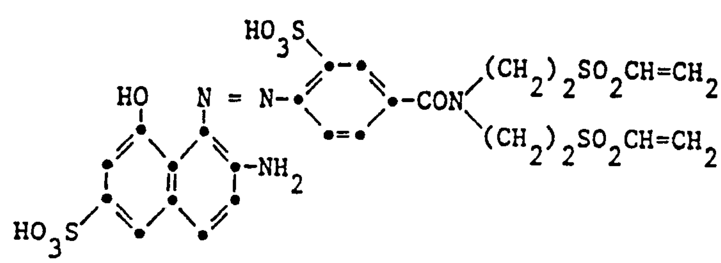 blaustichig rot

272 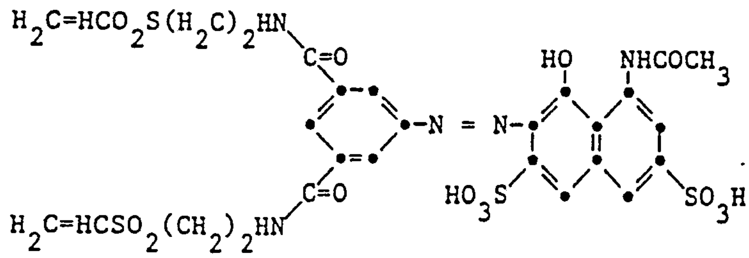 gelb-stichig rot

273 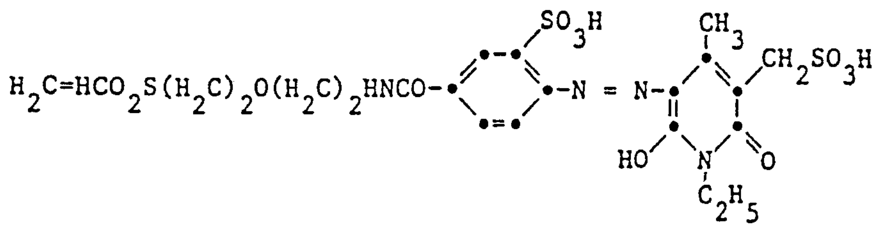 grün-stichig gelb

274 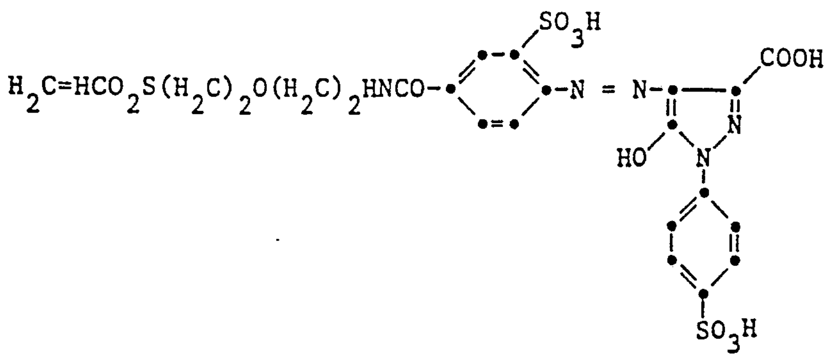 grün-stichig gelb

275 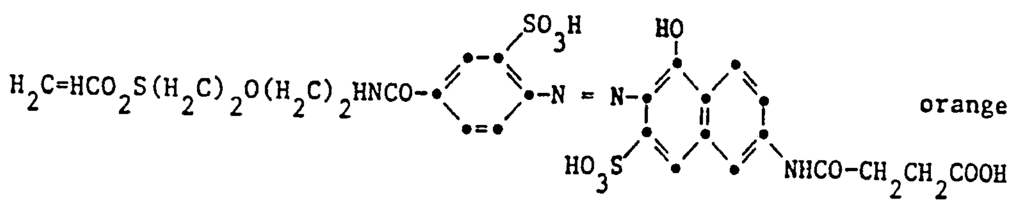 orange

276 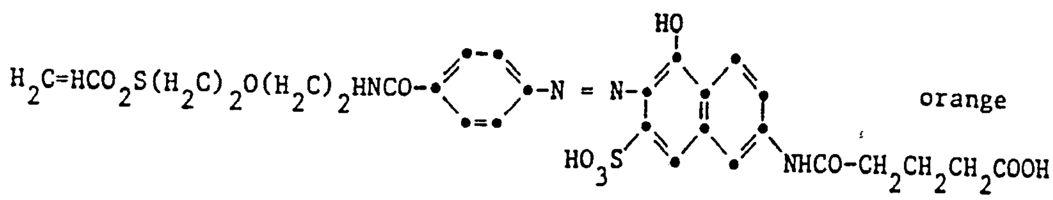 orange

277 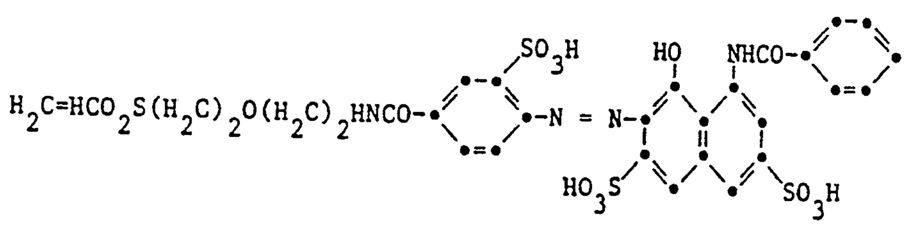 rot

278 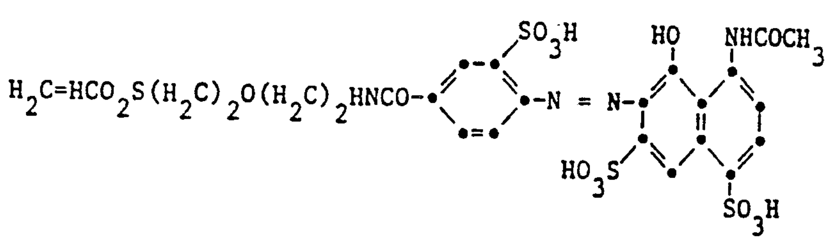 schar-lach

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittelkochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei

102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

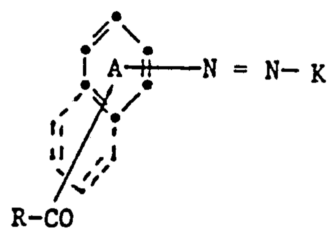

(1) ,

worin R ein Rest der Formel

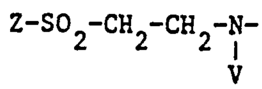

(1a) ,

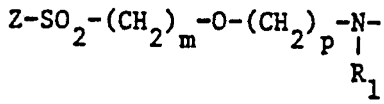

(1b) ,

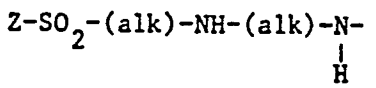

(1c)

oder

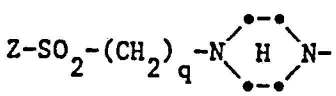

(1d);

Z β-Sulfatoäthyl, β-Thiosulfatoäthyl, β-Phosphatoäthyl, β-Acetoxyäthyl, β-Halogenäthyl oder Vinyl; V Wasserstoff oder ein Rest

$$Z—SO_2CH_2—CH_2—$$

worin Z die angegebene Bedeutung hat; $R_1$ Wasserstoff oder $C_{1-6}$-Alkyl; alk unabhängig voneinander Polymethylenreste mit 2 bis 6 C-Atomen oder deren verzweigte Isomere; K der Rest einer Kupplungskomponente der Benzol- oder Naphthalinreihe oder der heterocyclischen Reihe; m = 1 bis 6, p = 1 bis 6 und q = 1 bis 6 ist; und der Benzol- bzw. Naphthalinrest A weitere Substituenten enthalten kann.

2. Reaktivfarbstoffe gemäss Anspruch 1, der Formel

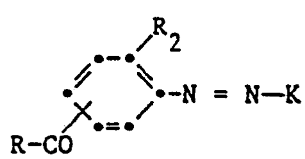

(2) ,

worin $R_2$ Wasserstoff, $C_{1-4}$-Alkyl, $C_{1-4}$-Alkoxy, Halogen, Hydroxy, Carboxy oder Sulfo ist; und R und K die in Anspruch 1 angegebenen Bedeutungen haben.

3. Reaktivfarbstoffe gemäss Anspruch 2, worin $R_2$ Sulfo ist.

4. Reaktivfarbstoffe gemäss Anspruch 2, der Formel

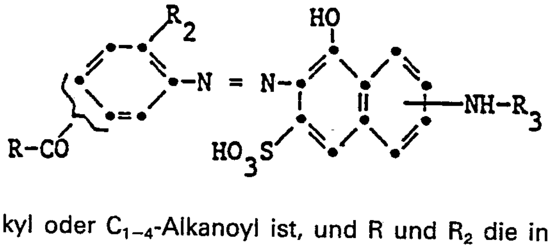

(3) ,

worin $R_3$ Wasserstoff, $C_{1-4}$-Alkyl oder $C_{1-4}$-Alkanoyl ist, und R und $R_2$ die in Anspruch 2 angegebenen Bedeutungen haben.

5. Reaktivfarbstoffe gemäss Anspruch 4, worin $R_3$ Acetyl ist.

6. Reaktivfarbstoffe gemäss Anspruch 2, der Formel

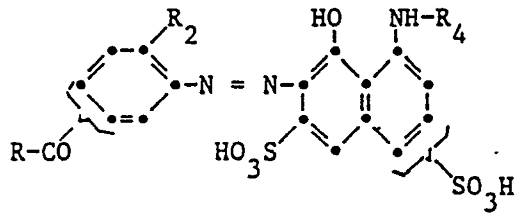

(4) ,

worin $R_4$ Wasserstoff, $C_{1-4}$-Alkanoyl oder Benzoyl ist, und R und $R_2$ die in Anspruch 2 angegebenen Bedeutungen haben.

7. Reaktivfarbstoffe gemäss Anspruch 6, worin $R_4$ Benzoyl ist.

8. Reaktivfarbstoffe gemäss Anspruch 2, der Formel

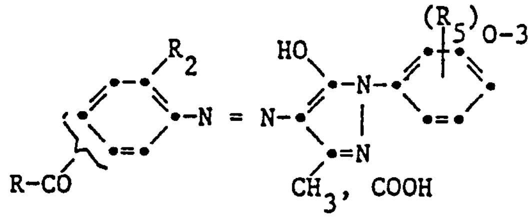

(7) ,

worin $R_5$ fur 0 bis 3 Substituenten aus der Gruppe Chlor, Methyl, Methoxy, Carboxy oder Sulfo unabhängig voneinander, steht, und R und $R_2$ die in Anspruch 2 angegebenen Bedeutungen haben.

9. Reaktivfarbstoffe gemäss Anspruch 2, der Formel

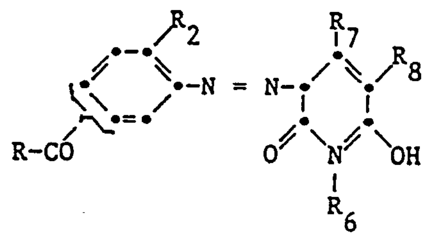

(8) ,

worin $R_6$ und $R_7$ unabhängig voneinander Wasserstoff, $C_{1-4}$-Alkyl oder Phenyl, und $R_8$ Wasserstoff, Cyano, Carbamoyl oder Sulfomethyl ist, und R und $R_2$ die in Anspruch 2 angegebenen Bedeutungen haben.

10. Schwermetallkomplexe von Reaktivfarbstoffen gemäss einem der Ansprüche 1 bis 9.

11. Reaktivfarbstoffe gemäss einem der Ansprüche 1 bis 10, worin Z die β-Sulfatoäthyl-, β-Chloräthyl- oder Vinylgruppe ist.

12. Verfahren zur Herstellung von Reaktivfarbstoffen gemäss Anspruch 1, dadurch gekennzeichnet, dass man Diazokomponenten der Formel

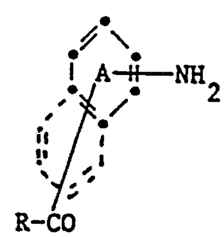

(9)

oder ihre Vorprodukte, und Kupplungskomponenten der Formel

H—K (10)

durch Diazotierung und Kupplung zu Reaktivfarbstoffen der Formel (1) umsetzt.

13. Verwendung der Reaktivfarbstoffe gemäss Anspruch 1, zum Färben oder Bedrucken von cellulosehaltigen Fasermaterialien.

14. Verwendung gemäss Anspruch 13, zum Färben oder Bedrucken von Baumwolle.

15. Verwendung von Verbindungen der Formel

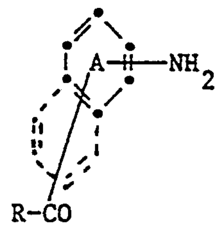

(9)

worin R und A die in Anspruch 1 angegebenen Bedeutungen haben, als Diazokomponente für die Herstellung von faserreaktiven Azofarbstoffen.

**Revendications**

1. Colorants réactifs répondant à la formule

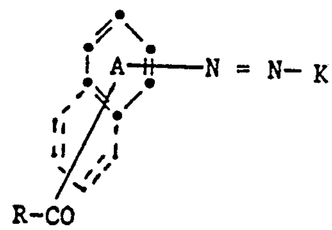

(1) ,

dans laquelle R est un radical répondant à la formule

$$Z-SO_2-CH_2-CH_2-\underset{\underset{V}{|}}{N}- \qquad (1a),$$

$$Z-SO_2-(CH_2)_m-O-(CH_2)_p-\underset{\underset{R_1}{|}}{N}- \qquad (1b),$$

$$Z-SO_2-(alk)-NH-(alk)-\underset{\underset{H}{|}}{N}- \qquad (1c)$$

ou

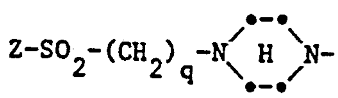

(1d);

Z est un radical β-sulfatoéthyle, β-thiosulfatoéthyle, β-phosphatoéthyle, β-acétoxyéthyle, β-halogénoéthyle ou vinyle; V désigne l'hydrogène ou un radical

$$Z—SO_2—CH_2—CH_2—$$

dans lequel Z a la signification indiquée; $R_1$ est un atome d'hydrogène ou un groupe alkyle en $C_1—C_6$; alk désigne, indépendamment l'un de l'autre, des radicaux polyméthylène en $C_2—C_6$ ou leurs isomères ramifiés; K est le radical d'un copulant de la série du benzène ou du naphtalène ou de la série hétérocyclique; m = 1 à 6, p = 1 à 6 et q = 1 à 6; et le radical benzène ou naphtalène A peut contenir d'autres substituants.

2. Colorants réactifs selon la revendication 1, répondant à la formule

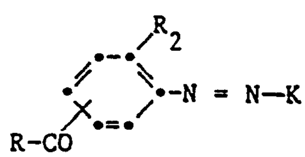

(2) ,

dans laquelle $R_2$ est un atome d'hydrogène ou d'halogène ou un groupe alkyle $C_1—C_4$, alcoxy en $C_1—C_4$, hydroxy, carboxy ou sulfo; et R et K ont les significations indiquées dans la revendication 1.

3. Colorants réactifs selon la revendication 2, dans lesquels $R_2$ est un groupe sulfo.

4. Colorants réactifs selon la revendication 2, répondant à la formule

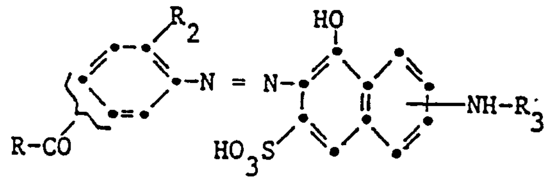
(3) ,

dans laquelle $R_3$ désigne un atome d'hydrogène ou un groupe alkyle en $C_1$—$C_4$ ou alcanoyle en $C_1$—$C_4$ et R et $R_2$ ont les significations indiquées dans la revendication 2.

5. Colorants réactifs selon la revendication 4, dans lesquels $R_3$ est un groupe acétyle.

6. Colorants réactifs selon la revendication 2, répondant à la formule

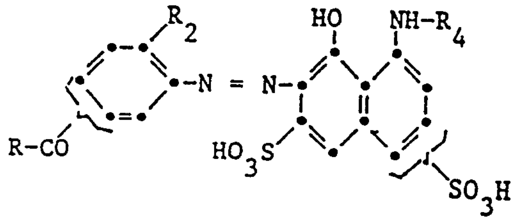
(4) ,

dans laquelle $R_4$ est un atome d'hydrogène ou un groupe alcanoyle en $C_1$—$C_4$ ou benzoyle, et R et $R_2$ ont les significations indiquées dans la revendication 2.

7. Colorants réactifs selon la revendication 6, dans lesquels $R_4$ est un groupe benzoyle.

8. Colorants réactifs selon la revendication 2, répondant à la formule

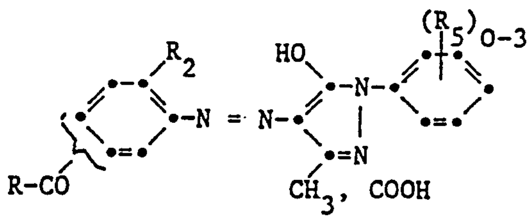
(7) ,

dans laquelle $R_5$ représente 0 à 3 substituants choisis indépendamment les uns des autres dans le groupe formé par l'atome de chlore et les groupes méthyle, méthoxy, carboxy ou sulfo, et R et $R_2$ ont les significations indiquées dans la revendication 2.

9. Colorants réactifs selon la revendication 2, répondant à la formule

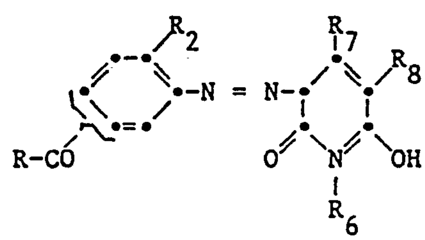
(8) ,

dans laquelle $R_6$ et $R_7$ sont indépendamment l'un de l'autre un groupe alkyle en $C_1$—$C_4$ ou phényle, et $R_8$ est un atome d'hydrogène ou un groupe cyano, carbamoyle, ou sulfométhyle, et R et $R_2$ ont les significations indiquées dans la revendication 2.

10. Complexes de métaux lourds de colorants réactifs selon l'une des revendications 1 à 9.

11. Colorants réactifs selon l'une des revendications 1 à 10, dans lesquels Z est un groupe β-sulfatoéthyle, β-chloroéthyle ou vinyle.

12. Procédé de préparation de colorants réactifs selon la revendication 1, caractérisé en ce qu'on transforme des constituants diazo répondant à la formule

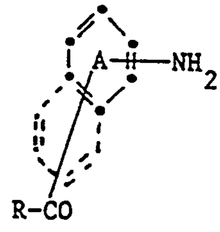
(9)

ou leurs produits intermédiaires, et des copulants répondant à la formule

$$H—K \qquad (10)$$

par diazotation et copulation, en colorants réactifs répondant à la formule (1).

13. Utilisation des colorants réactifs selon la revendication 1, pour la teinture et l'impression de matières fibreuses contenant de la cellulose.

14. Utilisation selon la revendication 13, pour la tienture ou l'impression du coton.

15. Utilisation de composés répondant à la formule

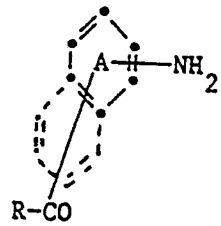

(9)

dans laquelle R et A ont les significations indiquées dans la revendication 1, comme constituants diazo pour la préparation de colorants azoïques réactifs vis à vis des fibres.

**Claims**

1. A reactive dye of the formula

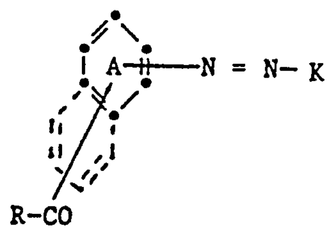

(1) ,

in which R is a radical of the formula

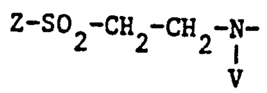

(1a) ,

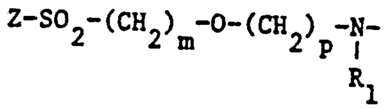

(1b) ,

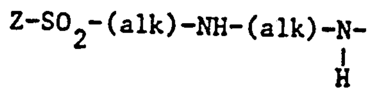

(1c)

or

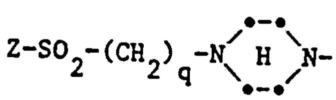

(1d);

Z is β-sufatoethyl, β-thiosulfatoethyl, β-phosphatoethyl, β-acetoxyethyl, β-halogenoethyl or vinyl; V is hydrogen or a radical

$$Z—SO_2—CH_2—CH_2—$$

in which Z is as defined above; $R_1$ is hydrogen or $C_{1-6}$alkyl; alk independently of each other, are polymethylene radicals having 2 to 6 C atoms or their branched isomers; K is the radical of a coupling component of the benzene or naphthalene series or of the heterocyclic series; m is 1 to 6, p is 1 to 6 and q is 1 to 6; and the benzene or naphthalene radical A can contain further substituents.

2. A reactive dye according to claim 1, of the formula

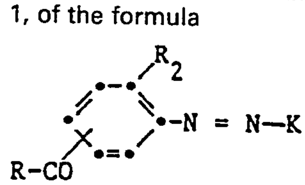

(2) ,

in which $R_2$ is hydrogen, $C_{1-4}$alkyl, $C_{1-4}$alkoxy, halogen, hydroxyl, carboxyl or sulfo; and R and K are as defined in claim 1.

3. A reactive dye according to claim 2, in which $R_2$ is sulfo.

4. A reactive dye according to claim 2, of the formula

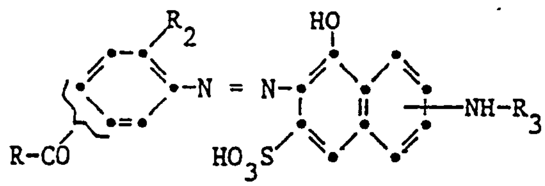

(3) ,

in which $R_3$ is hydrogen $C_{1-4}$alkyl or $C_{1-4}$alkanoyl, and R and $R_2$ are as defined in claim 2.

5. A reactive dye according to claim 4, in which $R_3$ is acetyl.

6. A reactive dye according to claim 2, of the formula

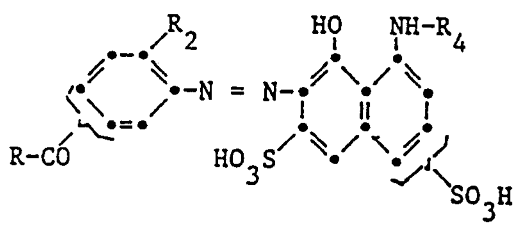

(4) ,

in which $R_4$ is hydrogen, $C_{1-4}$alkanoyl or benozyl, and R and $R_2$ are as defined in claim 2.

7. A reactive dye according to claim 6, in which $R_4$ is benzoyl.

8. A reactive dye according to claim 2, of the formula

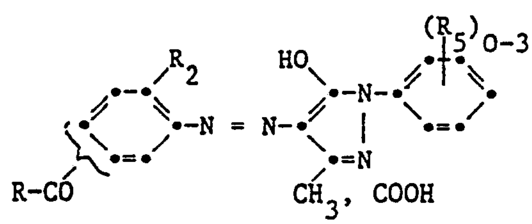

(7) ,

in which $R_5$ is 0 to 3 mutually independent substituents of the group chlorine, methyl, methoxy, carboxyl or sulfo, and R and $R_2$ are as defined in claim 2.

9. A reactive dye according to claim 2, of the formula

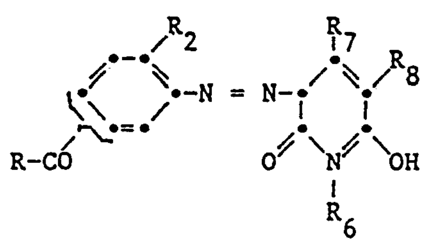

(8) ,

in which $R_6$ and $R_7$ are independently of each other hydrogen, $C_{1-4}$alkyl or phenyl, $R_8$ is hydrogen, cyano, carbamoyl or sulfomethyl, and R and $R_2$ are as defined in claim 2.

10. A heavy metal complex of a reactive dye according to any one of claims 1 to 9.

11. A reactive dye according to any one of claims 1 to 10, in which Z is a β-sulfatoethyl, β-chloroethyl or vinyl group.

12. A process for preparing a reactive dye according to claim 1, which comprises reacting a diazo component of the formula

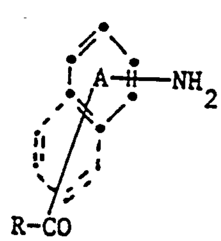

(9)

or a precursor thereof and a coupling component of the formula

H—K (10)

by diazotization and coupling to give a reactive dye of the formula (1).

13. Use of the reactive dye according to claim 1, for dyeing or printing cellulose-containing fiber materials.

14. Use according to claim 13, for dyeing or printing cotton.

15. Use of a compound of the formula

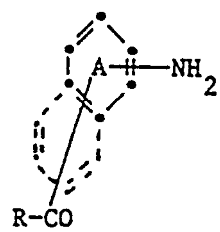

(9)

in which R and A are as defined in claim 1, as diazo components for preparing fiber-reactive azo dyes.